# EUROPEAN PATENT APPLICATION

(11) **EP 4 234 212 A1**
(43) Date of publication of application: **30.08.2023**
(21) Application number: 23170113.7
(22) Date of filing: 13.09.2019
(51) Int. Cl.: B29C 64/118, B29C 64/209, B29C 64/232, B29C 64/236, B29C 64/245, B33Y 10/00, B33Y 30/00

(54) **REMOVABLE BUILD PLATE FOR THREE-DIMENSIONAL PRINTERS**

(30) Priority: 14.09.2018 US 201862731551 P; 10.12.2018 US 201862777587 P
(62) Divisional of application: 19780051.9
(71) Applicant: Makerbot Industries, LLC, Brooklyn, NY 11201 (US)
(72) Inventor: MACNEIL, Eric Justin, Brooklyn, 11201 (US); HOLLAND, Samuel, Brooklyn, 11231 (US); ANANTHA, Vishnu, Brooklyn, 11201 (US)
(74) Representative: Black, Diego

(57) **Abstract**

A build plate for a three-dimensional printer, the build plate comprising: a sheet of an elastically flexible material including a ferromagnetic metal; a frame around at least a portion of a perimeter of the sheet, the frame formed of an elastomeric material that elastically flexes with the sheet, the elastomeric material having a low thermal conductivity relative to the sheet, and the elastomeric material positioned to insulate an exposed surface of the frame from a temperature of the sheet; and one or more tabs of the elastomeric material extending from the frame to provide gripping surfaces for removal of the build plate from the three-dimensional printer.

## Description

### CROSS-REFERENCE TO RELATED APPLICATIONS

This application claims priority to U.S. Provisional Application No. 62/731,551 filed on September 14, 2018 and U.S. Provisional Application No. 62/777,587 filed on December 10, 2018, where the entire contents of each of the foregoing applications are hereby incorporated by reference.

### FIELD

The present disclosure relates generally to three-dimensional printing.

### BACKGROUND

A variety of three-dimensional fabrication techniques have been devised to support rapid prototyping from computer models. These techniques have been refined over the years to increase accuracy, working volume, and the variety of build materials available in a rapid prototyping environment. While these increasingly sophisticated and expensive machines appear regularly in commercial design and engineering settings, a more recent trend has emerged toward low-cost three-dimensional prototyping devices suitable for hobbyists and home users. As these resources become more readily and widely available, a need has emerged for improvements in three-dimensional printing, e.g., improvements specifically tailored for hobbyists and home users.

Multi-extruder assemblies typically employ some type of height control mechanism so that an inactive extruder can be raised (or an active extruder lowered, or both) to avoid disturbing a layer of material deposited by its active extruder counterpart. However, switching between different extruders in this context can be cumbersome, and may require additional hardware, control complexities, and so forth. Moreover, the physical height adjustment can generate significant noise and vibrations that may damage printer components or create unwanted background noise during a print. There remains a need for a multi-extruder printer with improved height control.

An extruder for a three-dimensional printer may define a chamber in thermal communication with a heater that heats a build material to a target temperature above a liquefaction temperature of the build material, and the melted build material may move through a nozzle of the extruder to form an object during a three-dimensional print. As the heater heats the build material to the target temperature, the heater may undesirably heat other portions of the extruder where such heat can cause damage. For example, excess heat experienced near an inlet and/or an outlet of the extruder can damage components located on or adjacent to these orifices. There remains a need for improved thermal management of an extruder for a three-dimensional printer.

Build plates for three-dimensional printers generally provide a stable, level surface for fabricating objects. However, build plates that are designed for this purpose often omit user-friend features that promote comfort, ease of handling, easy removal of printed parts, and so forth. There remains a need for improved build plates for three-dimensional printers.

An extruder for a three-dimensional printer requires routine maintenance, as well as periodic resolution of technical issues, during which a user handles the extruder *in situ* or removes the extruder from the printer for service. In this context, the hot end of the extruder-the tip through which a heated build material is extruded-can present safety issues. The hot end is also susceptible to splatters, smearing, and other undesired accumulations of build material during use. There remains a need for an extruder cap addressing these issues.

### SUMMARY

The present teachings include improvements in three-dimensional printing, such as improvements related to build platforms, extruders, and extrusion techniques.

A multi-extruder includes a passive height control mechanism that adjusts the relative height of its extruders without the use of additional, active components. Further, the height control mechanism may employ ramped control surfaces that mitigate noise and vibration by gradually transferring vertical loads while transferring from one active extruder to another.

In one aspect, an extruder assembly disclosed herein includes a first extruder including a first follower, the first extruder defining a first extrusion path, and at least one portion of the first extrusion path defining a z-axis. The extruder assembly also includes a cam having a working surface movable relative to the first extruder and shaped to translate a first movement of the cam along an x-axis or a y-axis into a second movement of the first follower along the z-axis, the first follower movable along the working surface of the cam as the working surface moves relative to the first extruder to raise the first follower along the z-axis. The extruder assembly also includes a support engageable with the cam to reverse the first movement of the cam and lower the working surface adjacent to the first follower along the z-axis, and a damper coupled to the support, the damper engageable with the first extruder to receive a z-axis load from the first extruder and decouple the first follower from the working surface of the cam as the support lowers the working surface of the cam adjacent to the first follower.

Implementations may include one or more of the following features. The working surface of the cam may be movable relative to the first extruder in response to a force associated with engagement of the support with the cam. The first extruder may include a second follower movable along the damper, and the z-axis load from the first extruder may be receivable by the damper via the second follower. The damper may include a contact surface for the second follower, the contact surface shaped to smoothly lower the first extruder into a working position along the z-axis as the first extruder moves away from the support along the x-axis or y-axis. The first follower may be movable along the working surface of the cam in rolling contact with the working surface of the cam, and the second follower may be movable along the damper in rolling contact with the support. The first follower and the second follower may be spaced apart from one another at least along the z-axis. The extruder assembly may further include a gantry and a carriage, where the gantry has a guide surface defining an axis perpendicular to the z-axis, the first extruder is supported on the carriage, and the carriage is movable along the guide surface of the gantry in at least one direction along the axis perpendicular to the z-axis. At least one of the damper or the support may be in a fixed location along the axis perpendicular to the z-axis. The extruder assembly may further include a second extruder supported on the carriage, where the second extruder defines a second extrusion path, and movement of the first follower along the working surface of the cam changes a z-axis position of the first extruder. The working surface of the cam may be movable relative to the first extruder along the axis perpendicular to the z-axis. The damper may include an arm cantilevered from the support along the axis perpendicular to the z-axis. The cam may be a linear cam, and the working surface of the cam may have a first two-dimensional profile in a plane defined by the z-axis and the axis perpendicular to the z-axis. The arm may have a second two-dimensional profile in the plane defined by the z-axis and the axis perpendicular to the z-axis, the first extruder may include a second follower, and the arm may be engageable with the second follower to move the second follower along the second two-dimensional profile of the arm as the z-axis load of the first extruder is supported on the arm. The first two-dimensional profile of the working surface of the cam may be different from the second two-dimensional profile of the arm.

In one aspect, a three-dimensional printer disclosed herein includes a build plate having a substantially planar surface, and a plurality of extruders, each of the plurality of extruders defining a respective extrusion orifice directed toward the build plate, and each extrusion orifice supported above the build plate at a respective height along a z-axis perpendicular to the substantially planar surface. The three-dimensional printer also includes a cam having a working surface engageable with a first extruder of the plurality of extruders, the working surface of the cam moveable relative to the first extruder to change a z-axis position of the first extruder relative to at least one other one of the plurality of extruders. The three-dimensional printer also includes a support engageable with the cam to move the cam in a manner that lowers the working surface supporting the first extruder, and a damper coupled to the support, the damper engageable with the first extruder to receive a z-axis load from the extruder thereby decoupling the first extruder from the cam as the contact with the support lowers the working surface.

Implementations may include one or more of the following features. The plurality of extruders and the cam may be movable together in a first direction parallel to the substantially planar surface of the build plate, the support may be selectively engageable with the cam to move the cam relative to the plurality of extruders in a second direction, opposite the first direction, and a movement of the cam relative to the first extruder in the second direction may decouple the first extruder from the cam. The damper may include an arm cantilevered from the support in a direction parallel to the substantially planar surface of the build plate. The arm may include an inclined surface extending obliquely to the substantially planar surface, the inclined surface positioned to make an initial contact with the first extruder as the damper engages the first extruder, where the z-axis load of the first extruder is received by the arm as the first extruder moves toward the support and away from the build plate along the inclined surface. The inclined surface may include a first surface angled to receive a load from the first extruder as the plurality of extruders move toward the support and a second surface angled to smoothly and continuously lower the first extruder into a working position as the plurality of extruders move away from the support.

In one aspect, a method disclosed herein includes moving a plurality of extruders within a plane parallel to a substantially planar surface of a build plate, each of the plurality of extruders defining a respective extrusion orifice supported above the build plate at a respective height above the substantially planar surface; moving a working surface of a cam relative to a first extruder of the plurality of extruders, movement of the working surface changing a z-axis position of the first extruder relative to the build plate; and engaging a damper with the first extruder to receive a z-axis load from the first extruder. The plurality of extruders and the cam may move together in a first direction, where the method further includes engaging a support with the cam to move the cam in a second direction, opposite the first direction, to provide movement of the working surface.

In one aspect, an extruder assembly disclosed herein includes a first extruder defining a first extrusion path, at least one portion of the first extrusion path defining a z-axis, the first extruder including a working surface shaped to translate a horizontal movement along the working surface into a vertical movement of the first extruder. The extruder assembly also includes a cam having a first follower horizontally movable relative to the first extruder and positioned to travel along the working surface, the first follower movable along the working surface of the first extruder as the first follower moves in a first direction relative to the first extruder to lower the working surface along the z-axis. The extruder assembly also includes a support engageable with the cam to move the cam in a second direction opposing the first direction to raise the working surface along the z-axis, and a damper engageable with the first extruder to receive a z-axis load from the first extruder and to decouple the first follower from the working surface as the support lowers the working surface beneath first follower in response to a movement in the first direction.

In another aspect, an extruder assembly disclosed herein includes a first extruder, a second extruder movably coupled to the first extruder to permit vertical movement of the second extruder relative to the first extruder, and a coupler structurally configured to mechanically control a z-axis position of the second extruder relative to the first extruder, the coupler including a horizontal slider structurally configured to cause upward movement of the second extruder in response to a first horizontal movement in a first direction and to permit downward movement of the second extruder in response to a second horizontal movement in a second direction opposing the first direction.

Implementations may include one or more of the following features. The coupler may extend horizontally from the extruder assembly to expose a first end and a second end that provide control surfaces to move the coupler horizontally in the first direction and the second direction respectively. The extruder assembly may further include a support in a predetermined position within a three-dimensional printer, the support including a first surface and a second surface, the first surface shaped to receive and vertically support the second extruder as the extruder assembly horizontally contacts the support, and the second surface shaped to concurrently move the coupler in the second direction as the extruder assembly horizontally contacts the support. The coupler or the second extruder may include a working surface with a ramp shaped to gradually raise and lower the second extruder between an active position with an exit orifice below a lowest point of the first extruder and an inactive position with the exit orifice above the lowest point of the first extruder. The working surface may include a plateau above the ramp to support the second extruder in the inactive position and a ridge, the ridge having a height greater than the plateau and the ridge positioned between the plateau and the ramp to bi-stably retain the second extruder in the inactive position when the extruder assembly is not engaged with the damper.

A variety of techniques are used to manage temperature in and around an extruder for a three-dimensional printer.

In one aspect, an extruder disclosed herein for a three-dimensional printer includes a nozzle assembly defining a first orifice, a second orifice, and a chamber fluidically coupling the first orifice to the second orifice. The extruder also includes a heating element positioned to heat the chamber, a first fluid source directed toward the first orifice to form a thermal break mitigating an upward heat flow from the chamber toward the first orifice, and a manifold structurally configured to direct a flow of fluid about the second orifice, the manifold defining a plurality of exit holes for the flow of fluid, the plurality of exit holes positioned and oriented to direct the flow of fluid in an omnidirectional fluid flow away from a perimeter of the second orifice to cool a region around the perimeter of the second orifice.

Implementations may include one or more of the following features. The flow of fluid may be provided by the first fluid source. The flow of fluid may be provided by a second fluid source independent from the first fluid source. Exit holes of the plurality of exit holes may be spaced equidistant from one another about a perimeter of the nozzle assembly. The heating element may be configured to heat the chamber to maintain a build material in the chamber at a target temperature above a liquefaction temperature of the build material, where the first fluid source moves fluid toward the first orifice at a first temperature below the target temperature of the build material in the chamber, and where the flow of fluid about the second orifice is provided at a second temperature below the target temperature of the build material.

In one aspect, an extruder disclosed herein for a three-dimensional printer includes a nozzle assembly defining a first orifice, a second orifice, and a chamber extending from the first orifice to the second orifice, the chamber defining a longitudinal axis extending through the first orifice and the second orifice. The extruder also includes a conduit coupled to the nozzle assembly, the conduit defining a third orifice directed toward the first orifice to form a thermal break mitigating heat flow from the chamber toward the first orifice. The extruder also includes a manifold coupled to the nozzle assembly, the manifold defining a plurality of exit holes, each exit hole of the plurality of exit holes disposed at a position along the longitudinal axis between the first orifice and the second orifice, and each exit hole of the plurality of exit holes oriented to direct a fluid in a direction away from the second orifice to cool a region around a perimeter of the second orifice.

Implementations may include one or more of the following features. The manifold may be fluidically isolated from the chamber defined by the nozzle assembly. The manifold may be in fluid communication with the conduit such that a fluid is deliverable through the plurality of exit holes of the manifold and the third orifice of the conduit via a single fluid source. The manifold may include an annulus coaxial with the longitudinal axis defined by the chamber to produce an omnidirectional fluid flow about the perimeter of the second orifice. The exit holes corresponding to the plurality of exit holes may be spaced equidistant from one another about a perimeter of a surface of the nozzle assembly. The longitudinal axis defined by the chamber of the nozzle assembly may intersect a transverse axis defined by the conduit at the first orifice. In a direction along the longitudinal axis, a surface of the nozzle assembly may be tapered between the position of the plurality of exit holes and the second orifice. The extruder may further include a heating element coupled to the nozzle assembly, the heating element in thermal communication with the chamber via thermal conduction through the nozzle assembly. A first thermal conductivity between the heating element and the chamber may be less than a second thermal conductivity between the heating element and the plurality of exit holes defined by the manifold.

In one aspect, a method disclosed herein includes heating a chamber defined by a nozzle assembly of the extruder, the chamber extending from a first orifice to a second orifice; moving a first fluid across the first orifice; and moving a second fluid to produce an omnidirectional fluid flow away from the second orifice to cool a region around a perimeter of the second orifice.

Implementations may include one or more of the following features. Heating the chamber may include maintaining a build material in the chamber at a target temperature above a liquefaction temperature of the build material, where the first fluid moves across the first orifice at a first temperature below the target temperature of the build material in the chamber, and where the second fluid moves about the perimeter of the second orifice at a second temperature below the target temperature of the build material. Moving the first fluid across the first orifice may include adjusting a volumetric flow rate of the first fluid across the first orifice based on a temperature of the nozzle assembly. Moving the second fluid may include adjusting a volumetric flow rate of the second fluid based on movement of the extruder. Moving the second fluid may include directing multiple streams of the second fluid about the perimeter of the second orifice. Movement of the first fluid across the first orifice may be independently controllable relative to movement of the second fluid about the perimeter of the second orifice.

A removable and replaceable build plate for a three-dimensional printer supports magnetic coupling to a printer and advantageous adhesion for an initial layer of build material.

In one aspect, a build plate disclosed herein for a three-dimensional printer includes a sheet of an elastically flexible material including a ferromagnetic metal, and a frame around at least a portion of a perimeter of the sheet, the frame formed of an elastomeric material that elastically flexes with the sheet, the elastomeric material having a low thermal conductivity relative to the sheet and the elastomeric material positioned to insulate an exposed surface of the frame from a temperature of the sheet. The build plate also includes one or more tabs of the elastomeric material extending from the frame to provide gripping surfaces for removal of the build plate from the three-dimensional printer.

Implementations may include one or more of the following features. The frame may define a recess graspable by fingertips of a user. The frame may be disposed over the entire perimeter of the sheet. Each of the one or more tabs may have a first surface roughness, and the frame may have a second surface roughness less than the first surface roughness. The build plate may further include a polycarbonate layer disposed over at least one surface of a build section of the sheet. The ferromagnetic metal may include spring steel. The elastically flexible material of the sheet may have a first thermal conductivity and the elastomeric material of the frame may have a second thermal conductivity, where the first thermal conductivity is greater than the second conductivity at room temperature.

In one aspect, a build plate disclosed herein for a three-dimensional printer includes a sheet having a build section that is substantially planar in the absence of an external force, the sheet formed of a first material along the build section, the first material including a ferromagnetic component, and the first material having a first thermal conductivity. The build plate also includes a frame along at least a portion of a perimeter region of the sheet, the frame at least as flexible as the sheet, and the frame including a second material having a second thermal conductivity less than the first thermal conductivity of the first material. The build plate also includes one or more tabs coupled to the frame, each tab thermally insulated from the first material of the sheet by at least the second material of the frame, and each tab graspable by a user to move the build plate.

Implementations may include one or more of the following features. In response to torque about any axis extending through the sheet and the frame at room temperature, the sheet may have a first torsional stiffness, and the frame may have a second torsional stiffness less than or equal to the first torsional stiffness of the sheet. The second material of the frame may include an elastomeric material. The second material may include a thermoplastic elastomer.

In one aspect, a build plate system of a three-dimensional printer disclosed herein includes a build plate including a sheet having a build section, the sheet formed of a material including a ferromagnetic component along the build section. The build plate system also includes a backbone structure including a body and a plurality of magnets supported by the body, the build plate coupled to the backbone structure via a magnetic force of the plurality of magnets exerted in a first direction on the ferromagnetic component along the build section of the sheet, and the sheet of the build plate slidable relative to the body in a second direction perpendicular to the first direction of the magnetic force.

Implementations may include one or more of the following features. The sheet of the build plate may be slidable relative to the body in the second direction under force of thermal expansion of the sheet of the build plate. The body of the backbone structure may include a substantially planar surface, and the sheet of the build plate may be slidable relative to the body, in the second direction, along the substantially planar surface. The build plate system may further include a ramp on the substantially planar surface and extending in a direction away from the substantially planar surface, the ramp oriented to separate a region of the build plate from the backbone structure as the build plate is moved in the direction away from the substantially planar surface. The build section of the sheet of the build plate coupled to the backbone structure via the magnetic force may have a flatness of greater than about 0.2 mm and less than about 0.4 mm from planar at a temperature of about 80° Celsius.

In one aspect, a method disclosed herein includes coupling a build plate to a backbone structure via a magnetic force between the build plate and the backbone structure, the magnetic force exerted in a first direction on a build section of the build plate; delivering a build material along the build section of the build plate coupled to the backbone structure; with the build material along the build section of the build plate, decoupling the build plate from the backbone structure through movement including sliding the build plate relative to the backbone structure in a second direction perpendicular to the first direction of the magnetic force; and removing the build material from the build section of the build plate decoupled from the backbone structure.

Implementations may include one or more of the following features. Delivering the build material along the build section of the build plate may include thermally expanding the build plate, and a force of thermal expansion of the build plate moving the build section relative to the backbone structure in the second direction perpendicular to the first direction of the magnetic force with the build plate coupled to the backbone structure. Under the force of thermal expansion of the build plate moving the build section relative to the backbone structure, the build section of the build plate may retain a flatness of greater than about 0.2 mm and less than about 0.4 mm at a temperature of about 80° Celsius. Decoupling the build plate from the backbone structure may include moving the build plate along a ramp defined by the backbone structure, the ramp having a first dimensional component in the first direction and a second dimensional component in the second direction.

A cap for an extruder of a three-dimensional printer is removeable and replaceable on the hot end of the extruder, e.g., for cleaning or other maintenance of the cap or extruder. The cap may be formed of an polymer having a lower thermal conductivity than the hot end of the extruder such that the cap forms a thermal barrier between the hot end of the extruder and an external environment. Further, the cap may protect the hot end of the extruder from damaging contact with deposited build material (e.g., spatters) as well as other undesirable contact during a three-dimensional printing process.

In one aspect, an extruder disclosed herein for a three-dimensional printer includes a nozzle assembly defining a first orifice, a second orifice, and a chamber extending therebetween, where at least a portion of the nozzle assembly is formed of a first material along the chamber. The extruder also includes a cap having an inner surface and an outer surface opposite the inner surface, the cap defining an opening extending from the inner surface to the outer surface along a narrowest radial dimension of the cap, the chamber of the nozzle assembly extending through the opening such that the second orifice extends beyond the opening in an axial direction away from a perimeter of the nozzle assembly in contact with the inner surface of the cap, and the cap formed of a second material including a polymer having a second thermal conductivity less than a first thermal conductivity of the first material.

Implementations may include one or more of the following features. The first material of the nozzle assembly may have a first linear coefficient of thermal expansion, and the second material may have a second linear coefficient of thermal expansion greater than the first linear coefficient of thermal expansion. The inner surface of the cap may define a cavity in fluid communication with the opening, the cavity defining a first axis parallel to and axially offset from a second axis defined by the chamber of the nozzle assembly and extending through the second orifice. The extruder may further include an elongate heater supported on the nozzle assembly and in thermal communication with the chamber of the nozzle assembly, where the first axis defined by the cavity is between the second axis defined by the chamber and a third axis defined by the elongate heater. The contact between the inner surface and the perimeter of the nozzle assembly may circumscribe the perimeter of the nozzle assembly. The inner surface of the cap may include a tapered portion in contact with the perimeter of the nozzle assembly. The second orifice may be defined by a planar surface of the nozzle assembly, and at least a portion of the outer surface of the cap may define a plane oblique to the planar surface of the nozzle assembly. The contact between the inner surface of the cap and the perimeter of the nozzle assembly may be an interference fit. The cap may be removable from the perimeter of the nozzle assembly via deformation of at least a portion of the cap. The cap may include a flange, the nozzle assembly may define a ridge, and the flange may be releasably engageable with the ridge to restrict movement of the cap in at least the axial direction. The polymer may be an elastomer. The elastomer may be a fluoropolymer. The polymer may have a melting point of greater than about 200 degrees Celsius and less than about 350 degrees Celsius. The extruder may further include a feed system mechanically coupled to the nozzle assembly and spaced apart from the cap, the feed system including a gear train and a controller, the controller configured to actuate the gear train to move a build material into the chamber via the first orifice.

In one aspect, a three-dimensional printer disclosed herein includes a build plate, and an extruder including a nozzle assembly and a cap, the nozzle assembly defining a first orifice, a second orifice, and a chamber extending therebetween, at least a portion of the nozzle assembly formed of a first material along the chamber, the cap disposed between the nozzle assembly and the build plate in a direction extending from the nozzle assembly to the build plate, the cap defining an opening through which the chamber of the nozzle assembly extends and beyond which the second orifice of the nozzle assembly extends, the cap formed of a second material including an polymer. The three-dimensional printer also includes a build material in the chamber of the nozzle assembly and movable from the second orifice toward the build plate, the build material having a first melt temperature less than a second melt temperature of the second material of the cap.

Implementations may include one or more of the following features. The three-dimensional printer may further include a heater in thermal communication with the chamber, the heater controllable to a temperature between the first melt temperature of the build material and the second melt temperature of the second material of the cap. At least the first material of the nozzle assembly and a portion of the second material of the cap may be between the heater and an outer surface of the cap. The heater may be in thermal communication with the outer surface of the cap with a thermal resistance such that, with the heater at the temperature between the first melt temperature of the build material and the second melt temperature of the second material of the cap, the outer surface of the cap has a temperature of greater than about 35 degrees Celsius and less than about 70 degrees Celsius. The first material along the chamber of the nozzle assembly may have a first thermal conductivity and the second material of the cap has a second thermal conductivity less than the first thermal conductivity. The polymer may be structurally configured to resist adhesion to the build material moving from the second orifice toward the build plate during a three-dimensional printing process. The cap may be releasably secured to the nozzle assembly via a toolless fit between the cap and the nozzle assembly.

### BRIEF DESCRIPTION OF THE DRAWINGS

The foregoing and other objects, features and advantages of the devices, systems, and methods described herein will be apparent from the following description of particular embodiments thereof, as illustrated in the accompanying drawings. The drawings are not necessarily to scale, emphasis instead being placed upon illustrating the principles of the devices, systems, and methods described herein. In the drawings, like reference numerals generally identify corresponding elements.
Fig. 1 is a block diagram of a three-dimensional printer.
Fig. 2 shows an extruder assembly with a first extruder in a 'down' position.
Fig. 3 shows an extruder assembly with a first extruder in an 'up' position.
Fig. 4 shows a cam engaged with followers in multiple positions to demonstrate moving an extruder of an extruder assembly from a 'down' position to an 'up' position.
Fig. 5 shows a cam engaged with followers in multiple positions to demonstrate moving an extruder of an extruder assembly from an 'up' position to a 'down' position.
Fig. 6 shows an extruder assembly including a support.
Fig. 7 shows a support engaged with a follower.
Fig. 8 shows a detail of a support engaged with a follower.
Fig. 9 shows a side view of an extruder in an 'up' position.
Fig. 10 shows a side view of an extruder in a 'down' position.
Fig. 11 is a flowchart of a method for changing a z-axis position of an extruder in an extruder assembly featuring a plurality of extruders.
Fig. 12 shows an extruder assembly with a first extruder in a 'down' position.
Fig. 13 shows an extruder assembly with a first extruder in an 'up' position.
Fig. 14 is a schematic representation of an extruder for a three-dimensional printer.
Fig. 15 is a schematic representation of an extruder for a three-dimensional printer.
Fig. 16 is a flow chart of a method of thermal management for an extruder of a three-dimensional printer.
Fig. 17 shows a build plate for a three-dimensional printer.
Fig. 18 shows an exploded view of a build plate for a three-dimensional printer.
Fig. 19 shows a build plate with a printed object disposed thereon.
Fig. 20 shows the build plate of Fig. 19 with the printed object removed therefrom.
Fig. 21 shows a build plate system of a three-dimensional printer.
Fig. 22 is a cross-sectional view of a representation of a build plate system.
Fig. 23 shows a cross-sectional view of a build plate system.
Fig. 24 shows mechanical features for coupling a build plate and a backbone structure in a build plate system.
Fig. 25 is a cross-sectional view of mechanical features for coupling a build plate and a backbone structure in a build plate system.
Fig. 26 is a flow chart of a method for using a build plate system of a three-dimensional printer.
Fig. 27 shows a perspective view of an extruder with an extruder cap.
Fig. 28 shows a front view of an extruder with an extruder cap.
Fig. 29 shows a close-up view of the hot end of an extruder with an extruder cap.
Fig. 30 is a perspective view of a cap for an extruder.
Fig. 31 is a front view of a cap for an extruder.
Fig. 32 is a left side view of a cap for an extruder.
Fig. 33 is a right side view of a cap for an extruder.
Fig. 34 is a bottom view of a cap for an extruder.

### DESCRIPTION

Embodiments will now be described with reference to the accompanying figures. The foregoing may, however, be embodied in many different forms and should not be construed as limited to the illustrated embodiments set forth herein.

All documents mentioned herein are hereby incorporated by reference in their entirety. References to items in the singular should be understood to include items in the plural, and vice versa, unless explicitly stated otherwise or clear from the text. Grammatical conjunctions are intended to express any and all disjunctive and conjunctive combinations of conjoined clauses, sentences, words, and the like, unless otherwise stated or clear from the context. Thus, the term "or" should generally be understood to mean "and/or" and so forth.

Recitation of ranges of values herein are not intended to be limiting, referring instead individually to any and all values falling within the range, unless otherwise indicated herein, and each separate value within such a range is incorporated into the specification as if it were individually recited herein. The words "about," "approximately" or the like, when accompanying a numerical value, are to be construed as indicating a deviation as would be appreciated by one of ordinary skill in the art to operate satisfactorily for an intended purpose. Similarly, words of approximation such as "approximately" or "substantially" when used in reference to physical characteristics, should be understood to contemplate a range of deviations that would be appreciated by one of ordinary skill in the art to operate satisfactorily for a corresponding use, function, purpose, or the like. Ranges of values and/or numeric values are provided herein as examples only, and do not constitute a limitation on the scope of the described embodiments. Where ranges of values are provided, they are also intended to include each value within the range as if set forth individually, unless expressly stated to the contrary. The use of any and all examples, or exemplary language ("e.g.," "such as," or the like) provided herein, is intended merely to better describe the embodiments and does not pose a limitation on the scope of the embodiments. No language in the specification should be construed as indicating any unclaimed element as essential to the practice of the embodiments.

In the following description, it is understood that terms such as "first," "second," "top," "bottom," "up," "down," and the like, are words of convenience and are not to be construed as limiting terms unless specifically stated to the contrary.

Described herein are devices, systems, and methods for improvements in three-dimensional printing, such as improvements related to extruders and extrusion techniques, thermal management for an extruder of a three-dimensional printer, build plates for a three-dimensional printer, and caps for extruders of three-dimensional printers.

The following description emphasizes three-dimensional printers using fused deposition modeling or similar techniques where a bead of material is extruded in a layered series of two dimensional patterns as "roads" or "paths" to form a three-dimensional object from a digital model. It will be understood, however, that numerous additive fabrication techniques are known in the art including, without limitation, multijet printing, stereolithography, Digital Light Processor ("DLP") three-dimensional printing, selective laser sintering, and so forth. Such techniques may benefit from the systems and methods described below, and all such printing technologies are intended to fall within the scope of this disclosure, and within the scope of terms such as "printer," "three-dimensional printer," "fabrication system," and so forth, unless a more specific meaning is explicitly provided or otherwise clear from the context.

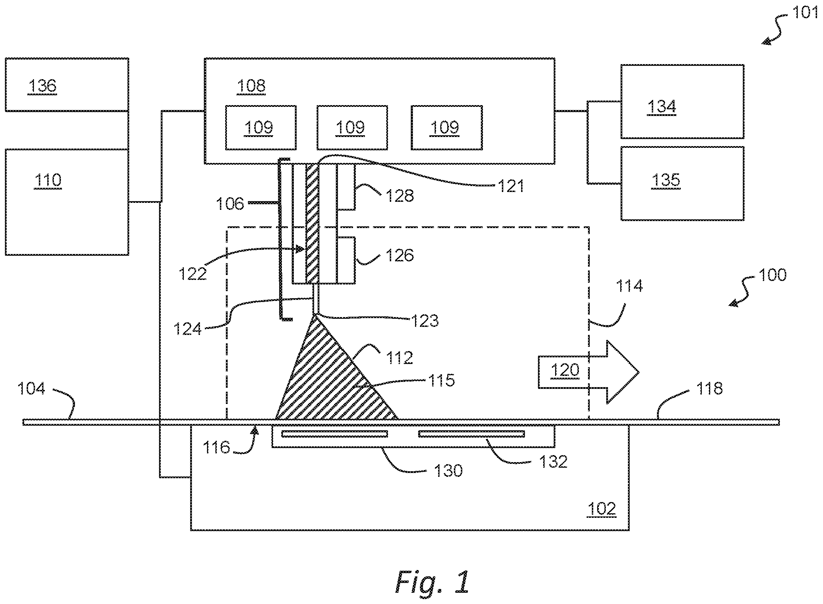

Fig. 1 is a block diagram of a three-dimensional printer. In general, a printer 100 may include a build platform 102 (which may otherwise be referred to herein as a "build plate"), a conveyor 104, an extruder 106, an x-y-z positioning assembly 108, and a controller 110 that cooperate with one another within a working volume 114 of the printer 100 to fabricate an object 112 from a build material 115.

The build platform 102 may include a surface 116 that is rigid and substantially planar. The surface 116 may support the conveyer 104 to provide a fixed, dimensionally and positionally stable platform on which to build the object 112.

The build platform 102 may include a thermal element 130 that controls the temperature of the build platform 102 through one or more active devices 132 such as thermoelectric heating and/or cooling devices (e.g., resistive elements that convert electrical current into heat, Peltier effect devices that can create a heating or cooling affect, and combinations thereof). Accordingly, the thermal element 130 may be a heater that provides active heating to the build platform 102, a cooling element that provides active cooling to the build platform 102, or a combination of these. The heater 130 may be coupled in a communicating relationship with the controller 110 such that the controller 110 may control heat imparted to or removed from the surface 116 of the build platform 102 by the heater 130. Thus, for example, the thermal element 130 may include an active cooling element positioned within or adjacent to the build platform 102 to controllably cool the build platform 102.

It will be understood that a variety of other techniques may additionally, or alternatively, be employed to control a temperature of the build platform 102. For example, the build platform 102 may use a gas cooling or gas heating device such as a vacuum chamber in an interior thereof, which may be quickly pressurized to heat the build platform 102 or vacated to cool the build platform 102 as desired. As another non-exclusive example, a stream of heated or cooled gas may be applied directly to the build platform 102 before, during, and/or after a build process.

The conveyer 104 may include a sheet 118 that moves in a path 120 through the working volume 114. Within the working volume 114, the path 120 may pass along the surface 116 of the build platform 102-that is, resting directly on or otherwise supported by the surface 116-such that the build platform 102 may provide a rigid, positionally stable working surface for a build. It will be understood that, while the path 120 is depicted as a unidirectional arrow, the path 120 may be multidirectional. For example, the conveyer 104 can move in either of two opposing directions through the working volume 114. It will also be understood that the path 120 may curve in any of a variety of ways, such as by looping underneath and around the build platform 102, over and/or under rollers, or around delivery and take up spools for the sheet 118. Thus, while the path 120 may be generally (but not necessarily) uniform through the working volume 114, the conveyer 104 may move in any direction suitable for moving completed items from the working volume 114. The conveyor 104 may, additionally or alternatively, include a motor or other similar drive mechanism (not shown) coupled to the controller 110 to control movement of the sheet 118 along the path 120. Various drive mechanisms are described in further detail below.

In general, the sheet 118 may be formed of a flexible material such as a mesh material, a polyamide, a polyethylene terephthalate (commercially available in bi-axial form as MYLAR^{®}, available from DuPont Teijin Films USA of Chester, VA), a polyimide film (commercially available as KAPTON° available from DuPont of Wilmington, DE), or any other suitably strong polymer or other material. The sheet 118 may have a thickness of greater than about three thousandths of an inch (about 0.0762 mm) and less than about seven thousandths of an inch (about 0.1778 mm), or any other thickness that permits the sheet 118 to follow the path 120 of the conveyer 104. For example, with sufficiently strong material, the sheet 118 may have a thickness of greater than about one thousandth of an inch and less than about three thousandths of an inch. The sheet 118 may further, or instead, include sections of rigid material joined by flexible links.

A working surface of the sheet 118 (e.g., an area on the top surface of the sheet 118 within the working volume 114) may be treated to assist with adhesion of the build material 115 to the sheet 118 and/or to facilitate removal of completed objects from the sheet 118. For example, the working surface may be abraded or otherwise textured (e.g., with grooves, protrusions, and the like) to improve adhesion between the working surface and the build material 115.

A variety of chemical treatments may be used on the working surface of the sheet 118 as part of build processes described herein. For example, the chemical treatment may include deposition of material that can be chemically removed from the conveyer 104 by use of water, solvents, or the like. This may facilitate separation of a completed instance of the object 112 from the conveyer by dissolving the layer of chemical treatment between the completed instance of the object 112 and the conveyor 104. The chemical treatments may include deposition of a material that easily separates from the conveyer 104 such as a wax, mild adhesive, or the like. The chemical treatment may include a detachable surface such as an adhesive that is sprayed onto the conveyer 104 prior to fabrication of the object 112.

In one aspect, the conveyer 104 may include a sheet of disposable, one-use material fed from a dispenser and consumed with each successive build.

In one aspect, the conveyer 104 may include a number of different working areas with different surface treatments adapted for different compositions of the build material 115 or processes. For example, different areas may have different textures (e.g., smooth, abraded, grooved, etc.). Additionally, or alternatively, different areas may be formed of different materials. Further, or instead, different areas may have or receive different chemical treatments. Thus, it should be appreciated that a single instance of the conveyer 104 may be used in a variety of different build processes by selecting the various working areas as needed or desired.

The extruder 106 may define a first orifice 121, a second orifice 123, and a chamber 122 coupling the first orifice 121 to the second orifice 123. The build material 115 may, for example, include one or more of acrylonitrile butadiene styrene ("ABS"), high-density polyethylene ("HDPL"), polylactic acid, or any other suitable plastic, thermoplastic, or other material that can usefully be extruded to form a three-dimensional object. The extruder 106 may include an extrusion tip 124 defining an exit port with a circular, oval, slotted or other cross-sectional profile that extrudes build material in a desired cross-sectional shape.

The extruder 106 may include a heater 126 to melt build materials 115 (e.g., thermoplastic material) within the chamber 122 for extrusion through the second orifice 123 of the extrusion tip 124 in melted form. While represented in block form in Fig. 1 for the sake of clarity, it will be understood that the heater 126 may include, for example, coils of resistive wire wrapped about the chamber 122, one or more heating blocks with resistive elements to heat the chamber 122 with applied current, an inductive heater, or any other arrangement of heaters suitable for creating heat within the chamber 122 to melt the build material 115 for extrusion. The extruder 106 may also, or instead, include a motor 128 to push the build material 115 through the chamber 122, in a direction from the first orifice 121 toward the second orifice 123.

In general operation (and by way of example rather than limitation), the build material 115 may initially be in a form, such as ABS plastic in filament form, that may be fed into the chamber 122, via the first orifice 121, by the motor 128, melted in the chamber 122 by the heater 126, and extruded from the chamber 122 via the second orifice 123. By controlling process parameters (e.g., one or more of a rate of the motor 128 or the temperature of the heater 126) the build material 115 may be extruded from the second orifice 123 at a controlled volumetric rate. It will be understood that a variety of techniques may be employed to deliver the build material 115 at a controlled volumetric rate, which may depend upon the composition of the material 115, the volumetric rate desired, and any other factors. All such techniques that might be suitably adapted to delivery of the build material 115 for fabrication of three-dimensional object 112 are intended to fall within the scope of this disclosure. Other techniques may be employed for three-dimensional printing, including extrusion-based techniques using compositions of the build material 115 that are curable and/or compositions of the build material 115 of sufficient viscosity to retain shape after extrusion.

The x-y-z positioning assembly 108 may generally be movable to position the second orifice 123 of the extruder 106 three-dimensionally within the working volume 114. Thus, for example, by controlling the volumetric rate of delivery for the build material 115 and the x, y, z position of the second orifice 123, the object 112 may be fabricated in three dimensions by depositing successive layers of the build material 115 in two-dimensional patterns (e.g., two-dimensional patterns derived from cross-sections of a computer model or other computerized representation of the object 112). The x-y-z positioning assembly 108 may, for example, include a number of stepper motors 109 (e.g., independently operable) to control a position of the extruder 106 and, thus, the second orifice 123 within the working volume 114 along each of an x-axis, a y-axis, and a z-axis. More generally, the x-y-z positioning assembly 108 may include, without limitation, various combinations of stepper motors, encoded DC motors, gears, belts, pulleys, worm gears, threads, and the like. Any such arrangement suitable for controllably positioning the second orifice 123 of the extruder 106 within the working volume 114 may be adapted to use with the printer 100 described herein.

By way of example and not limitation, the conveyor 104 may be x-y positionable within a plane defined by the sheet 118 of the conveyor 104, while the extruder 106 may be independently moved relative to the conveyor 104 along a z-axis. Additionally, or alternatively, the conveyor 104 may be x, y, and z positionable, and the extruder 106 may be stationary. Further, or instead, the extruder 106 may be x, y, and z positionable while the conveyer 104 remains fixed relative to the working volume 114. In yet another example, the conveyer 104 may, by movement of the sheet 118, control movement in one axis (e.g., the y-axis), while the extruder 106 moves in the z-axis as well as one axis in the plane defined by the sheet 118. Thus, in certain instances, the conveyor 104 may be attached to and move with at least one of an x-axis stage (that controls movement along the x-axis), a y-axis stage (that controls movement along a y-axis), and a z-axis stage (that controls movement along a z-axis) of the x-y-z positioning assembly 108. More generally, the x-y-z positioning assembly 108 may include any arrangement of motors and other hardware controllable by the controller 110 to position the extruder 106 described herein. Still more generally, while an x, y, z coordinate system may be convenient for positioning within three dimensions, any other coordinate system or combination of coordinate systems may also or instead be employed, such as a positional controller and assembly that operates according to one or more of cylindrical coordinates or spherical coordinates.

The controller 110 may be electrically coupled in a communicating relationship with the build platform 102, the conveyer 104, the x-y-z positioning assembly 108, and the other various components of the printer 100. In general, the controller 110 is operable to control the components of the printer 100, such as the build platform 102, the conveyer 104, the x-y-z positioning assembly 108, and any other components of the printer 100 described herein to fabricate the object 112 from the build material 115. The controller 110 may include any combination of software and/or processing circuitry suitable for controlling the various components of the printer 100 described herein including, without limitation, microprocessors, microcontrollers, application-specific integrated circuits, programmable gate arrays, and any other digital and/or analog components, as well as combinations of the foregoing, along with inputs and outputs for transceiving control signals, drive signals, power signals, sensor signals, and the like. In one aspect, the controller 110 may include a microprocessor or other processing circuitry with sufficient computational power to provide related functions such as executing an operating system, providing a graphical user interface (e.g., to a display coupled to the controller 110 or printer 100), convert three-dimensional models into tool instructions, and operate a web server or otherwise host remote users and/or activity through a network interface 136 described below.

A variety of additional sensors may be usefully incorporated into the printer 100 described above. These are generically depicted as sensor 134 in Fig. 1, for which the positioning and mechanical/electrical interconnections with other elements of the printer 100 will depend upon the type and purpose of the sensor 134 and will be readily understood and appreciated by one of ordinary skill in the art. The sensor 134 may include a temperature sensor positioned to sense a temperature of the surface of the build platform 102. This may, for example, include a thermistor embedded within or attached below the surface of the build platform 102. This may also or instead include an infrared detector directed at the surface 116 of the build platform 102 or the sheet 118 of material of the conveyer 104. Other sensors that may be usefully incorporated into the printer 100 as the sensor 134 include, without limitation, a heat sensor, a volume flow rate sensor, a weight sensor, a sound sensor, and a light sensor. Certain more specific examples are provided below by way of example and not of limitation.

The sensor 134 may detect a presence (or absence) of the object 112 at a predetermined location on the conveyer 104. This may include an optical detector in a beam-breaking configuration to sense the presence of the object 112 at a location such as an end of the conveyer 104. This may also or instead include an imaging device and image processing circuitry to capture an image of the working volume 114 and analyze the image to evaluate a position of the object 112. This sensor 134 may be used, for example, to ensure that the object 112 is removed from the conveyor 104 prior to beginning a new build at that location on the working surface (e.g., the surface 116 of the build platform 102). Thus, the sensor 134 may be used to determine whether an object is present that should not be, or to detect when an object is absent, or a combination thereof. The feedback from this sensor 134 may be used by the controller 110 to issue processing interrupts or otherwise control operation of the printer 100.

The sensor 134 may detect a position of the conveyer 104 along the path. This information may be obtained, for example, from an encoder in a motor that drives the conveyer 104, or using any other suitable technique such as a visual sensor and corresponding fiducials (e.g., visible patterns, holes, or areas with opaque, specular, transparent, or otherwise detectable marking) on the sheet 118.

The sensor 134 may include a heater (e.g., a radiant heater or forced hot air) to heat the working volume 114 to maintain the object 112 at a fixed, elevated temperature throughout a build. The sensor 134 may also, or instead, include a cooling element to maintain the object 112 at a predetermined sub-ambient temperature throughout a build. It should be appreciated that a heater included in the sensor 134 may be instead of, or in addition to, the thermal element 130.

The sensor 134 may also or instead include at least one video camera. The video camera may generally capture images of the working volume 114, the object 112, or any other hardware associated with the printer 100. The video camera may provide a remote video feed through the network interface 136. In such instances, the feed may be available to remote users through a user interface maintained, for example, by remote hardware, or, further or instead, the feed may be available within a web page provided by a web server hosted by the three-dimensional printer 100. Thus, in certain implementations, there is a user interface adapted to present a video feed from at least one video camera of a three-dimensional printer to a remote user through a user interface.

The sensor 134 may also or instead include more complex sensing and processing systems or subsystems, such as a three-dimensional scanner using optical techniques (e.g., stereoscopic imaging, or shape from motion imaging), structured light techniques, or any other suitable sensing and processing hardware that might extract three-dimensional information from the working volume 114. In some instances, the sensor 134 may include a machine vision system that captures images and analyzes image content to obtain information about the status of a job, working volume 114, or an object 112 therein. The machine vision system may support a variety of imaging-based automatic inspection, process control, and/or robotic guidance functions for the three-dimensional printer 100 including, without limitation, pass/fail decisions, error detection (and corresponding audible or visual alerts), shape detection, position detection, orientation detection, collision avoidance, and combinations thereof.

The printer 100 may include other hardware 135, which may be, for example, input devices including any one or more of the following: a keyboard, a touchpad, a mouse, switches, dials, buttons, and motion sensors. Additionally, or alternatively, the other hardware 135 may be, for example, output devices including any one or more of the following: a display, a speaker or other audio transducer, and light emitting diodes. Other hardware 135 may also or instead include a variety of cable connections and/or hardware adapters for connecting, for example, to external computers, external hardware, external instrumentation data acquisition systems, and combinations thereof.

The printer 100 may include, or be connected in a communicating relationship with, the network interface 136. The network interface 136 may include any combination of hardware and software suitable for coupling the controller 110 and other components of the printer 100 to a remote computer in a communicating relationship through a data network. By way of example and not limitation, this may include electronics for a wired or wireless Ethernet connection operating according to the IEEE 802.11 standard (or any variation thereof), or any other short or long-range wireless networking components. This may include hardware for short range data communications such as Bluetooth or an infrared transceiver, which may be used to couple into a local area network that is, in turn, coupled to a data network such as the Internet. This may also, or instead, include hardware/software for a WiMAX connection or a cellular network connection (using, e.g., CDMA, GSM, LTE, or any other suitable protocol or combination of protocols). The controller 110 may be configured to control participation by the printer 100 in any network to which the network interface 136 is connected, such as by autonomously connecting to the network to retrieve printable content, or responding to a remote request for status or availability.

### Extruder Height Toggling

Specific improvements to three-dimensional printing, e.g., using a three-dimensional printer as described above with reference to Fig. 1, will now be discussed. One such improvement may include a system for changing the z-axis position of one or more extruders in a multi-extruder assembly, and another such improvement may include mechanical damping that mitigates noise and vibration by gradually transferring a vertical load while a movable extruder is being lowered into a position for printing. In this manner, the present teachings may generally include a cam that acts as a "toggle" for an extruder assembly featuring multiple extruders. Specifically, an extruder assembly may include a two-sided toggle (e.g., for two extruders) as well as damping for noise and vibration that can be created by such a two-sided toggle.

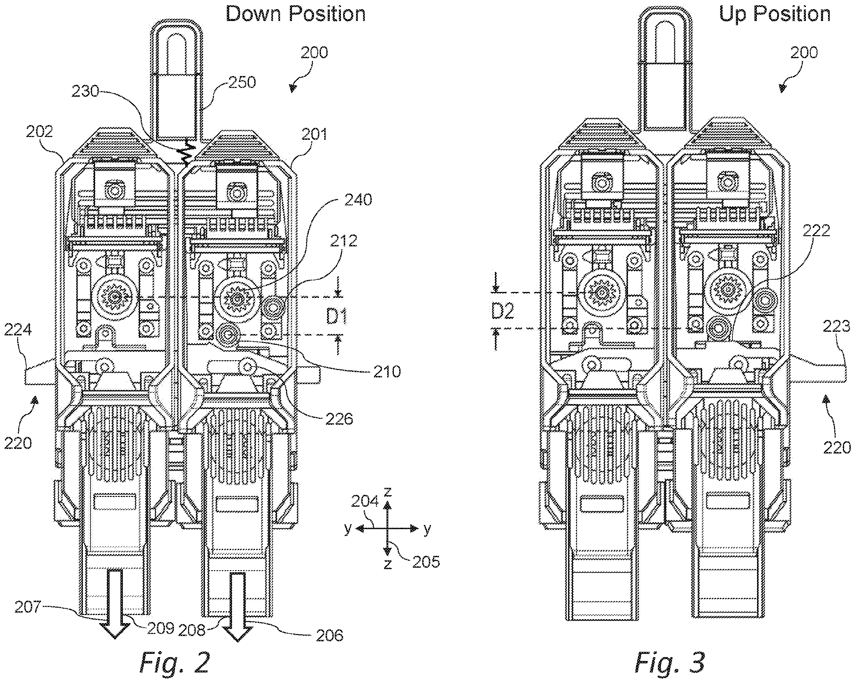

Fig. 2 shows an extruder assembly with a first extruder in a 'down' position, and Fig. 3 shows the extruder assembly with the first extruder in an 'up' position. The extruder assembly 200 may include a plurality of extruders-e.g., a first extruder 201 and a second extruder 202-where any of these individual extruders may include any of the features of the extruder 106 of Fig. 1 described above. In other words, unless otherwise specified or made clear from the context, the extruder assembly 200 should be understood to be interchangeable with the extruder 106 discussed above with respect to Fig. 1.

In general, a three-dimensional printer having a build volume with an x-axis (which would be traversing into and out of the page in Figs. 1 and 2), a y-axis 204, and a z-axis 205 may feature an extruder assembly 200 including a plurality of extruders. It will be understood that, unless explicitly stated to the contrary or otherwise clear from the context, when referring to movement of the extruder assembly 200 or its components along the y-axis 204, this could also or instead include movement along the x-axis. That is, in general, the present teachings may include an extruder assembly 200 that moves along one or more of the x-axis and y-axis 204 to move one of the extruders along a z-axis 205.

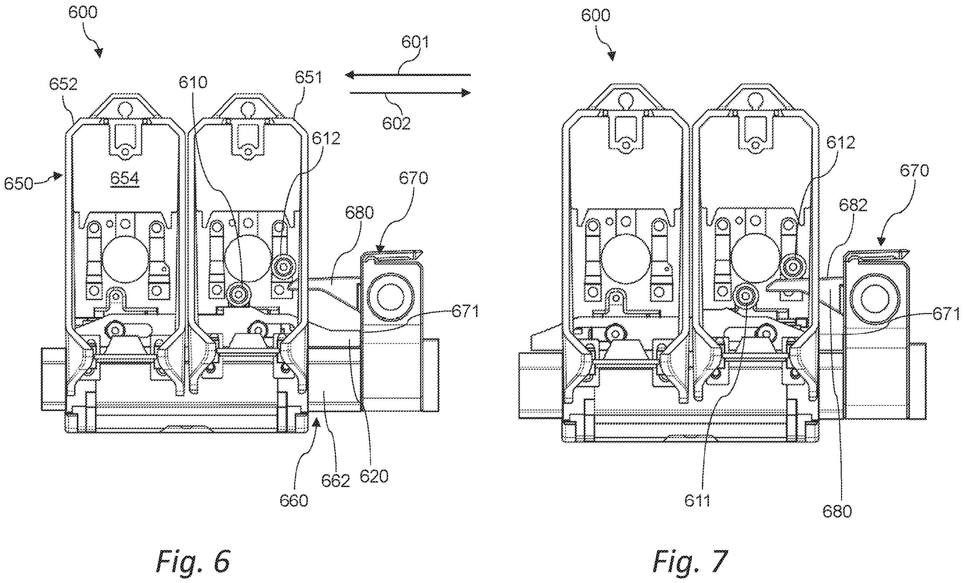

The extruder assembly 200 (or, more generally, a three-dimensional printer) may include a multi-extruder including a first extruder 201 and a second extruder 202, a plurality of followers (e.g., a first follower 210 and a second follower 212), a cam 220, a support, and a damper coupled to the support (although not shown in Figs. 2 and 3, the support 670 and the damper 680 are shown in, e.g., Figs. 6 and 7).

Turning back to Figs. 2 and 3, one or more of the first extruder 201 and the second extruder 202 may be movable along the z-axis 205 relative to a gantry or a carriage 250 that holds the extruder assembly 200 (e.g., where the carriage 250 is movable via an x-y-z positioning assembly such as that described above). For example, each of the first extruder 201 and the second extruder 202 may be movable, or one of these extruders may be fixed while the other is movable. By way of example, in an implementation, the first extruder 201 is movably coupled to the three-dimensional printer to permit a change of position of the first extruder 201 in a direction of the z-axis 205 independent from the second extruder 202, while the second extruder 202 remains in a fixed z-axis position. In this manner, one or more of the extruders may be independently movable along the z-axis 205 relative to the other(s), or the extruders may cooperate with one another when moving along the z-axis 205.

The first extruder 201 may define a first extrusion path 206 through a first extrusion orifice 208 of the first extruder 201, where at least one portion of the first extrusion path 206 is disposed along the z-axis 205. Similarly, the second extruder 202 may define a second extrusion path 207 through a second extrusion orifice 209 of the second extruder 202, where at least one portion of the second extrusion path 207 is disposed along the z-axis 205.

The first extruder 201 may include, or otherwise be coupled to, one or more followers-e.g., a first follower 210 and a second follower 212. The followers may include a bearing, a wheel, or the like, where the followers can freely rotate about an axis (e.g., an axis aligned along the x-axis), but where the axis of the followers is fixed relative to the first extruder 201. In general, the followers may include a load bearing surface oriented to permit relatively low-friction movement along the x-axis or the y-axis 604. That is, the followers may be structurally configured to rotate and follow along a surface, such as a working surface 222 of the cam 220.

The position of each of the first follower 210 and the second follower 212 relative to the first extruder 201 may be fixed. That is, because the followers may include a bearing or a wheel, the followers may be capable of rotating, while other movement relative to the extruders is mechanically discouraged or prevented. In this manner, if one or more of the first follower 210 and the second follower 212 are moved (e.g., along the z-axis 205), then the first extruder 201 (or a portion of the carriage 250 holding the first extruder 201) may similarly be moved. More succinctly, in certain implementations, if the followers experience at least a predetermined force along the z-axis 205, both the followers and the first extruder 201 will move along the z-axis 205.

Thus, the first follower 210 may be structurally configured to adjust the z-axis position of the first extruder 201. That is, when the first follower 210 is raised (e.g., by the working surface 222 of the cam 220), the first extruder 201 may be similarly raised, and vice-versa.

In general, the second follower 212 may be structurally configured to dampen a lowering of the first extruder 201 from a non-printing height to a printing height along the z-axis 205. That is, because of the materials used (e.g., metals) and the weight of the extruders, lowering the first extruder 201 from a non-printing height to a printing height along the z-axis 205 may result in unwanted noise or vibration. To mitigate this, the second follower 212 may be positioned and structurally configured to move along another surface (e.g., the surface of a damper), which may be ramped or otherwise shaped to bear at least a portion of the z-axis load of the first extruder 201 and to gradually transfer this load to a different z-axis position when transitioning from the non-printing height to the printing height along the z-axis 205 or when otherwise decoupling the first follower 210 from the working surface 222 of the cam 220.

The cam 220 may include an elongate member that extends through one or more of the first extruder 201 and the second extruder 202 (e.g., the cam 220 may extend through each of the extruders in an extruder assembly 200). Also, or instead, the cam 220 may extend through and be coupled with the carriage 250 that holds one or more of the first extruder 201 and the second extruder 202. The cam 220 may be movable (e.g., slidable) relative to one or more of the first extruder 201 and the second extruder 202. That is, the cam 220 may have a working surface 222 movable relative to the first extruder 201, for example, where the working surface 222 is the top surface of an elongate body that forms the cam 220. The working surface 222 may be shaped to translate a first movement of the cam 220 along one or more of the x-axis or the y-axis 205 into a second movement of the first follower 210 along the z-axis 205. In this manner, the first follower 210 may be movable along the working surface 222 of the cam 220 as the working surface 222 moves relative to the first extruder 201 to raise the first follower 210 along the z-axis 205. And because the axis of the first follower 210 may be fixed relative to the first extruder 201, movement of the first follower 210 along the z-axis 205 may similarly move the first extruder 201 along the z-axis 205.

The cam 220 may therefore act as a toggle for the extruder assembly 200, with the ability to adjust a z-axis height of one or more extruders of the extruder assembly-e.g., between a printing height for depositing build material in a three-dimensional print and a non-printing height when an extruder is not depositing build material in a three-dimensional print. The working surface 222 of the cam 220 may be shaped to lift the first extruder 201 (or the second extruder 202) along the z-axis 205 via the first follower 210 when the cam 220 moves in a first direction along the y-axis 204 (or another axis intersecting the z-axis 205).

As stated above, the cam 220 may extend through each of the first extruder 201 and the second extruder 202 such that each of a first end 223 and a second end 224 of the cam 220 is exposed external to the multi-extruder extruder assembly 200. In this manner, either of the first end 223 and the second end 224 of the cam 220 may be contacted from outside the multi-extruder assembly 200 to move the cam 220 vertically in either direction relative to the multi-extruder assembly 200. In certain implementations, the cam 220 is in communication with a slider 226 or the like (e.g., one or more bearings) that facilitates sliding movement of the cam 220 relative to the extruders of the extruder assembly 200.

In certain implementations, a biasing member 230 such as a spring may be coupled to one or more of the first extruder 201 and the second extruder 202, or a component engaged thereto. The biasing member 230 may be structurally configured to bias one or more of the first extruder 201 and the second extruder 202 toward either a printing height or a non-printing height along the z-axis 205, e.g., in the absence of other forces such as the force of the working surface 222 of the cam 220 against the first follower 210. This may, for example, mitigate rattling of individual extruders as the multi-extruder assembly 200 is moved about within a build volume during use.

The extruder assembly 200 may further include one or more drive wheels 240. In certain implementations, a single drive wheel 240 may be shared by each of the first extruder 201 and the second extruder 202 for driving a build material (e.g., a filament) therethrough. To this end, a displacement of the drive wheel 240 (e.g., along the z-axis 205) may alternately disengage or engage with one of the first extruder 201 and the second extruder 202. In another aspect, the drive wheel 240 may be clutched or otherwise mechanically configured to that a clockwise rotation of the drive wheel 240 advances one extruder while a counterclockwise rotation of the drive wheel 240 advances the other. In other implementations, such as that shown in Figs. 2 and 3, each extruder may include its own drive wheel 240.

As discussed above, the cam 220 may work in conjunction with the first follower 210 for moving a z-axis position of the first extruder 201. For example, and as discussed above, Fig. 2 shows an extruder assembly 200 with the first extruder 201 in a down position, and Fig. 3 shows the extruder assembly 200 with the first extruder 201 in an up position, where the down position is a printing position and the up position is a non-printing position. That is, when the first extruder 201 is in the down position, it may be positioned for depositing build material in a three-dimensional printing operation while the second extruder 202 is in the up position (relative to the first extruder 20-as noted, the second extruder 202 may remain stationary along the z-axis 205 while the first extruder 201 moves up and down) while inactive, e.g., while not depositing build material in the three-dimensional printing operation; and when the first extruder 201 is in the up or inactive position, the second extruder 202 may be in an active position relative to the first extruder 201 for depositing build material in the three-dimensional printing operation. In certain implementations, only one of the extruders is capable of moving between the up position and the down position, while another extruder remains fixed at a predetermined z-axis height relative to the carriage 250. In other implementations, each of the extruders in the extruder assembly 200 is capable of moving between the up position and the down position. For example, when one extruder moves (e.g., from the up position to the down position), the other extruder may automatically move in the opposite direction along the z-axis 205 (e.g., from the down position to the up position), e.g. by coupling the two extruders through a pivot that enforces alternate z-axis movement, or otherwise controlling or interconnecting the two extruders for opposing vertical motion.

It will be understood that the difference between the down position and the up position may be relatively small. For example, in certain implementations, the difference in the z-axis height between the up position and the down position for the end of the extruder that deposits build material is between about 1-2 mm (e.g., about 1.4 mm), or enough vertical displacement to avoid interference between a lowest point of the inactive extruder and a highest point of build material deposited by the active extruder. Figs. 2 and 3 demonstrate this z-axis height difference by showing the difference in z-axis height between the axles of the first follower 210 in the first extruder 201 and the drive wheel 240 of the second extruder 202. That is, the distance D1 in Fig. 2 shows the difference in z-axis height between the axles of the first follower 210 in the first extruder 201 when the first extruder 201 is in the down position; and distance D2 in Fig. 3 shows the difference in z-axis height between the axles of the first follower 210 in the first extruder 201 when the first extruder 201 is in the up position. Specifically, D1 may be larger than D2, demonstrating that the z-axis position of the first extruder 201 is located further away from the drive wheel 240 of the second extruder 202 (which may have a fixed z-axis position relative to the carriage 250) in the down position. In certain implementations, D1 is about 12.600 mm and D2 is about 11.194 mm. However, other distances are also or instead possible for D1 and D2.

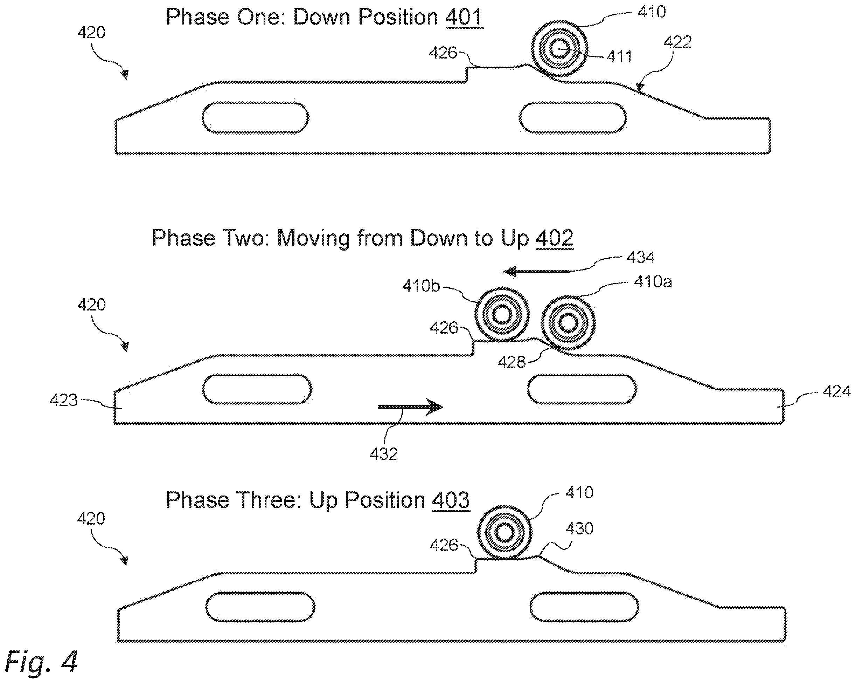

Fig. 4 shows a cam engaged with followers in multiple positions to demonstrate moving an extruder of an extruder assembly from a 'down' position (or active position or printing height) to an 'up' position (or inactive position or non-printing height). The cam 420 and the follower 410 shown in this figure may be the same as, or similar to, the cam 220 and first follower 210 discussed above with reference to Figs. 2 and 3.

Turning back to Fig. 4, as shown in phase one 401, in the down position of an extruder that includes, or is engaged with, the follower 410 that is structurally configured to traverse along the working surface 422 of the cam 420, the follower 410 may be disposed in a position adjacent to (and not on) a plateau 426 of the working surface 422 (e.g., disposed at a peak of the working surface 422). The position of the follower 410 may be fixed relative to the extruder, but the follower 410 may be structurally configured to rotate about an axis 411-thus, the position of the axis 411 may be fixed relative to the extruder, where movement of the follower 410 (other than the rotation of the follower 410) may cause a corresponding movement of the extruder.

As shown in phase two 402, when the cam 420 is moved in a first direction 432, the follower 410 may move in a second direction 434 along the working surface 422 of the cam 420 from a first position 410a to a second position 410b. That is, the follower 410 may move along the working surface 422 toward the first end 423 of the cam 420 and away from the second end 424 of the cam 420. This movement of the follower 410 in the second direction 434 may cause the follower 410 to traverse up a ramped portion 428 of the working surface 422 in the second direction 434 toward the plateau 426 of the working surface 422. This movement may cause a change in the z-axis position of the follower 410 (and thus the extruder to which it is fixedly engaged), where the change in the z-axis position of the follower 410 corresponds to the z-axis height difference between a region of the working surface 422 disposed below the plateau 426 (e.g., a region on or below the ramped portion 428) and the plateau 426 of the working surface 422. This z-axis height change is demonstrated by the first position 410a and the second position 410b of the follower 410 shown in phase two 402.

Phase three 403 shows the follower 410 in an up position. Specifically, in phase three 403, the z-axis height position of the follower 410 may be located above its z-axis height position in phase one 401, demonstrating that the z-axis height of the follower 410 (and thus the extruder to which it is fixedly engaged) may change between the down position shown in phase one 401 and the up position shown in phase three 403. Further, in phase three 403, in the up position of the extruder that is engaged to the follower 410, the follower 410 may be disposed in a position on the plateau 426 of the working surface 422. In this position, movement of the cam 420 in the second direction 434 may cause the follower 410 to revert back to its position shown in phase one 401.

It will also be noted that the cam 420 may include a ridge 430 or other similar feature to provide a bi-stable position for the follower 410 on the plateau 426. This may help to prevent the cam 420 from drifting in an opposite direction and releasing the follower 410 during use before a force is applied to the second end 424 of the cam 420 to purposefully lower the follower 410 and the associated extruder into an active position. That is, the working surface 422 may include the plateau 426 disposed above the ramped portion 428 to support an extruder in an inactive, non-printing position. The working surface 422 may further include the ridge 430 having a height greater than the plateau 426. Specifically, the ridge 430 may be positioned between the plateau 426 and the ramped portion 428 to bi-stably retain an extruder in the inactive position (e.g., when the extruder is not engaged with the damper as described herein). However, inclusion of the ridge 430, although useful for maintaining a position of the follower on the plateau 426 as shown in phase three 403, may cause the follower 410 to "hop" over the ridge 430 when traversing to the down position. Such hopping may cause unwanted noise and vibration that can eventually damage components of an extruder assembly or three-dimensional printer. Thus, one or more of a support and a damper as described elsewhere herein may be advantageously included for use with such an extruder assembly to, inter alia, mitigate such unwanted noise and vibration.

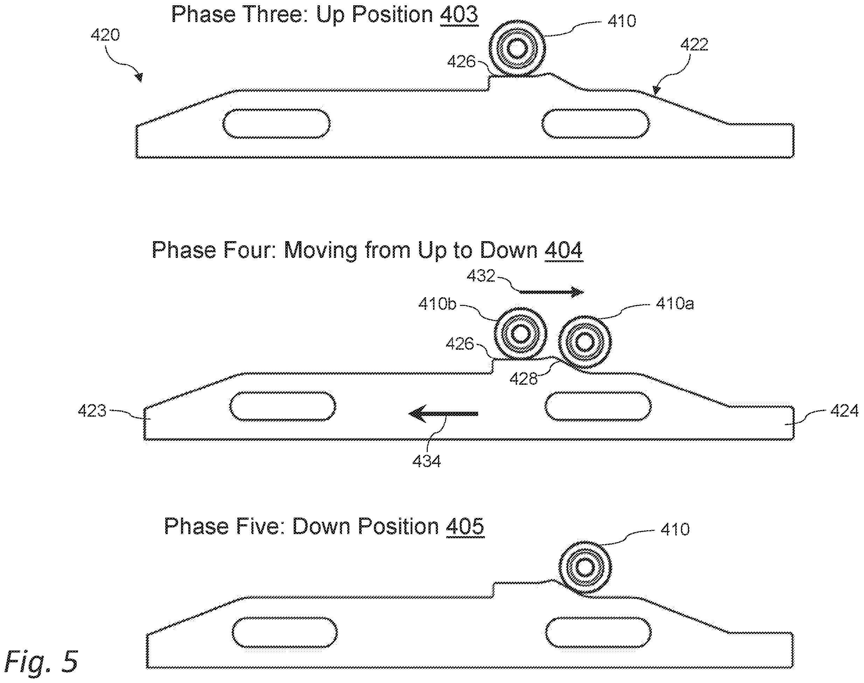

Fig. 5 shows a cam engaged with followers in multiple positions to demonstrate moving an extruder of an extruder assembly from an 'up' position to a 'down' position. The cam 420 in Fig. 5 may be the same as that described above with reference to Fig. 4, and thus the same reference numerals are generally used for these figures. More specifically, while Fig. 4 demonstrates movement of the follower 410 from a lower z-axis height position to a higher z-axis height position, Fig. 5 shows the converse-i.e., movement of the follower 410 from a higher z-axis height position to a lower z-axis height position.

Phase three 403 of Fig. 5 is the same as phase three 403 shown in Fig. 4, where the follower 410 is disposed in an up position, e.g., on the peak 426 of the working surface 422 of the cam 420. As stated above, and as demonstrated by phase four 404 and phase five 405 described below, movement of the cam 420 in the second direction 434 may cause the follower 410 to revert back to a down position.

As shown in phase four 404, when the cam 420 is moved in the second direction 434, the follower 410 may move in the first direction 432 along the working surface 422 of the cam 420 from the second position 410b to the first position 410a. That is, the follower 410 may move along the working surface 422 toward the second end 424 of the cam 420 and away from the first end 423 of the cam 420. This movement of the follower 410 in the first direction 432 may cause the follower 410 to traverse down the ramped portion 428 of the working surface 422 in the first direction 432, i.e., off of and away from the plateau 426 of the working surface 422.

Phase five 405 represents the down position for the follower 410 (and thus the extruder to which it may be fixedly engaged), where phase five 405 may be the same as phase one 401 of Fig. 4.

It will be understood that such a downward movement in Fig. 5 of the follower 410 and the extruder (or carriage) to which it is engaged can be noisy and/or may cause undesired vibrations. Thus, the present teachings may include features to mitigate such noise and vibration. One such feature may include the size and shape of the working surface 422 itself. That is, by including a ramped portion 428 (or another similar feature) that has a relatively shallow slope/incline, an extruder can be gradually lowered into an active position, and the accompanying mechanical noise and vibration can be mitigated. Additional or alternative features to mitigate such noise and vibration are described below.

Fig. 6 shows an extruder assembly including a support, and Fig. 7 shows the support engaged with a follower. Specifically, these figures show a carriage 650 of an extruder assembly 600 (which may be the same or similar to any of the extruder assemblies described herein), a gantry 660, and a support 670. Fig. 6 may represent an up position for a first extruder in the carriage 650, while Fig. 7 may represent moments before the first extruder is disposed in a down position. In general, the support 670 and a corresponding damper 680 may be used to mitigate noise and/or vibration when moving an extruder of the extruder assembly 600 along one or more axes. Also, or instead, the support 670 may be used in conjunction with the cam 620 to raise and lower an extruder of the extruder assembly 600.

The carriage 650 may be structurally configured to hold or otherwise couple with one or more extruders of the extruder assembly 600-e.g., the carriage 650 of the exemplary embodiment in Figs. 6 and 7 may be structurally configured to couple with two extruders. Specifically, the carriage 650 may include one or more sub-carriages each structurally configured for housing or otherwise coupling to an extruder. For example, the carriage 650 of Figs. 6 and 7 includes a first sub-carriage 651 and a second sub-carriage 652, which may be structurally configured to engage with the first extruder and the second extruder, respectively, such as the first extruder and the second extruder described above. Thus, the carriage 650 may be structurally configured to receive one or more modular extruders therein, e.g., within one or more cavities 654 defined by a structure of the carriage 650. In this manner, a first extruder may be supported on the carriage 650, where the first extruder defines a first extrusion path, and where movement of the first follower 610 along the working surface of the cam 620 changes a z-axis position of the first extruder. For example, the working surface of the cam 620 may be movable relative to the first extruder along the x-axis or the y-axis. In addition to the first extruder, a second extruder may be supported on the carriage 650, where the second extruder defines a second extrusion path different than the first extrusion path of the first extruder.

In certain implementations, such as the embodiment of Figs. 6 and 7, the carriage 650 may include or otherwise be coupled to a cam 620, a first follower 610, and a second follower 612. Alternatively, one or more of these components may be included on one or more modular extruders that are configured for coupling to or within the carriage 650. Regardless, one or both of a sub-carriage and an extruder may be structurally configured to move with one or more of the first follower 610 and the second follower 612. Thus, one or more of the first follower 610 and the second follower 612 may be positionally (but not rotationally) fixed relative to the carriage 650 and/or an extruder coupled thereto.

The carriage 650 (or a portion thereof, such as one or more of the first sub-carriage 651 and the second sub-carriage 652) may be pivotally connected to, or pivotally-disposed relative to, the gantry 660. Thus, when the carriage 650, an extruder, or a sub-carriage is lifted (e.g., via the first follower 610 through movement thereof along the working surface of the cam 620), that component may pivot or otherwise move up relative to the gantry 660.

The gantry 660 may generally include a structure upon which the extruder assembly 600 resides within a three-dimensional printer. For example, the gantry 660 may be connected to, or be in communication with, an x-y-z positioning assembly for positioning the extruder assembly 600 within a build volume of a three-dimensional printer. In general, the gantry 660 may include a guide surface 662 upon which the extruder assembly 600 can move along one or more of the x-axis and the y-axis. For example, the extruder assembly 600 may include a gantry 660 and a carriage 650 as described herein, where the gantry 660 has a guide surface 662 defining an axis perpendicular to the z-axis, a first extruder is supported on the carriage 650 (e.g., in the first sub-carriage 651), and the carriage 650 is movable along the guide surface 662 of the gantry 660 in at least one direction along the axis that is perpendicular to the z-axis (e.g., an x-axis or a y-axis). In this manner, and as shown in Figs. 6 and 7, at least one of the damper 680 or the support 670 may be disposed in a fixed location along the axis that is perpendicular to the z-axis.

The gantry 660 may further include, or otherwise be engaged with, the support 670. Thus, the support 670 may reside on the gantry 660-for example, the support 670 may be fixed on the gantry 660 and engageable with the extruder assembly 600 via movement of the extruder assembly along an axis that intersects the z-axis (e.g., an x-axis or a y-axis). The support 670 may also or instead be coupled to a side of a three-dimensional printer or another component of the three-dimensional printer. Regardless, the support 670 may be engageable with an end of the cam 620 to move the cam 620 (e.g., translate, toggle, or slide the cam 620) relative to the carriage 650.

As described above, the cam 620 may have a working surface movable relative to at least one of the extruders of the extruder assembly 600 and shaped to translate a first movement of the cam 620 along an x-axis or a y-axis into a second movement of the first follower 610 along the z-axis. In this manner, the first follower 610 may be movable along the working surface of the cam 620 as the working surface moves relative to one or more of the first extruder and the first sub-carriage 651 to raise the first follower 610 along the z-axis. The support 670 may be engageable with the cam 620 to reverse the first movement of the cam 620 and lower the working surface adjacent to the first follower 610 along the z-axis. Thus, the working surface of the cam 620 may be movable relative to one or more of the first extruder and the first sub-carriage 651 in response to a force associated with engagement of the support 670 with the cam 620.

The damper 680 may be coupled to the support 670. The damper 680 may be engageable with one or more of the first extruder and the first sub-carriage 651 to receive a z-axis load therefrom and to decouple the first follower 610 from the working surface of the cam 620 as the support 670 lowers the working surface of the cam 620 adjacent to the first follower 610. More specifically, the damper 680 may engage with the second follower 612.

In certain implementations, the damper 680 may include an arm that is cantilevered from the support 670 along one or more of the x-axis or y-axis. In this manner, the support 670, the damper 680, and the cam 620 may work together to adjust a z-axis position of an extruder in the carriage 650 on the gantry 660. For example, the cam 620 may be a linear cam, where the working surface of the cam 620 has a first two-dimensional profile in a plane defined by the z-axis and an intersecting (e.g., perpendicular) axis such as the y-axis. The arm of the damper 680 may have a second two-dimensional profile in the plane defined by the z-axis and the y-axis, where the arm of the damper 680 is engageable with the second follower 612 to move the second follower 612 along the second two-dimensional profile of the arm as the z-axis load of an extruder is supported on the arm. As demonstrated in Figs. 6 and 7, the first two-dimensional profile of the working surface of the cam 620 may be different from the second two-dimensional profile of the arm of the damper 680. However, although different, these dimensional profiles may be sized and shape to work in conjunction with one another to mitigate noise or vibration when adjusting the z-axis position of an extruder in the extruder assembly 600. For example, the contact surface 682 of the damper 680 may include an incline to gradually lower the second follower 612 as the carriage moves away from the support 670.

As described herein, the second follower 612 may be disposed on or within one or more of the first extruder and the first sub-carriage 651. As best shown in Fig. 7, the second follower 612 may be movable along the damper 680, where the z-axis load from one or more of the first extruder and the first sub-carriage 651 is receivable by the damper 680 via the second follower 612. To this end, the damper 680 may include a contact surface 682 for the second follower 612, where the contact surface 682 is shaped to smoothly lower one or more of the first extruder and the first sub-carriage 651 into a working position along the z-axis as the extruder assembly 600 moves away from the support 670 along either the x-axis or the y-axis, depending upon the configuration of the gantry 660.

As discussed above, the first follower 610 and the second follower 612 may be disposed on the carriage 650 and/or an extruder of the extruder assembly 600, where z-axis movement of one or more of the first follower 610 and the second follower 612 may similarly provide z-axis movement to the carriage 650 (or a portion thereof such as a sub-carriage) and/or an extruder of the extruder assembly 600. In general, the first follower 610 may be movable along the working surface of the cam 620 (e.g., in rolling contact with the working surface of the cam 620), and the second follower 612 may be movable along the damper 680 (e.g., in rolling contact with the damper 680 or support 670). To this end, the first follower 610 and the second follower 612 may be spaced apart from one another at least along the z-axis. The first follower 610 and the second follower 612 may also or instead be spaced apart from one another along one or more of the x-axis and the y-axis.

Thus, generally as shown in Figs. 6 and 7, the support 670 may have a first surface 671 (e.g., a side surface) that contacts the cam 620 to move the cam 620 in a first direction 601 along the y-axis (or the x-axis) as the carriage 650 approaches the support 670 along a second direction 602. The support 670 may further include, or otherwise work in conjunction with, a damper 680 having a contact surface 682 that receives a z-axis load of an extruder (or the sub-carriage configured for engagement with the extruder) as the carriage 650 approaches the support 670 by traveling in the second direction 602.

As further shown in Fig. 7, engagement of the first surface 671 of the support 670 with the cam 620 to cause movement of the working surface of the cam 620 in the first direction 601 may eventually fully disengage the first follower 610 from the working surface of the cam 620. In this manner, without the presence of the damper 680 in such an embodiment, the first extruder would drop down relatively abruptly, which could cause unwanted noise or vibration. However, the damper 680 may receive a z-axis load from the first extruder through engagement with the second follower 612. In this manner, as the carriage 650 continues to move away from the support 670 in the first direction 601, the first extruder can be gradually lowered, particularly where the contact surface 682 of the damper 680 includes a sloped or inclined surface to provide a gradual z-axis position change for the second follower 612 (and thus an extruder or sub-carriage engaged thereto).

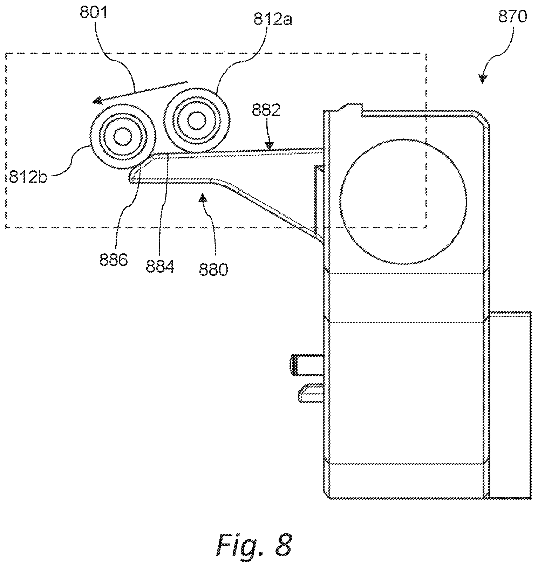

Fig. 8 shows a detail of a support engaged with a follower. Specifically, this figure shows a detail of a support 870 (which may be the same as or similar to the supports 670 shown and described above with reference to Figs. 6 and 7) engaged with a second follower moving downward in the direction of the arrow 801 from a first position 812a to a second position 812b. More particularly, the support 670 may include a damper 880 having a contact surface 882 that is sized and shaped (e.g., includes a two-dimensional profile in a plane that intersects a z-axis, such as a plane defined by an x-axis and a y-axis) to gradually change the z-axis position of the second follower from the first position 812a to the second position 812b, and to then fully release the second follower as the second follower moves beyond the vertical support limit of the damper 880. To this end, the two-dimensional profile of the contact surface 882 may include one or more sloped portions. In particular, an inclined surface of the contact surface 882 may include a first surface 884 angled or sloped to receive a load from an extruder as a plurality of extruders move toward the support 870 and a second surface 886 angled or sloped to smoothly and continuously lower the extruder into a working position as the plurality of extruders move away from the support 870. In this manner, the second follower can be released from contact with the contact surface 882 of the damper 880 in a relatively gradual manner, which can aid in mitigating noise or vibration of the associated change in z-axis position for an extruder or a sub-carriage that is coupled to the second follower.

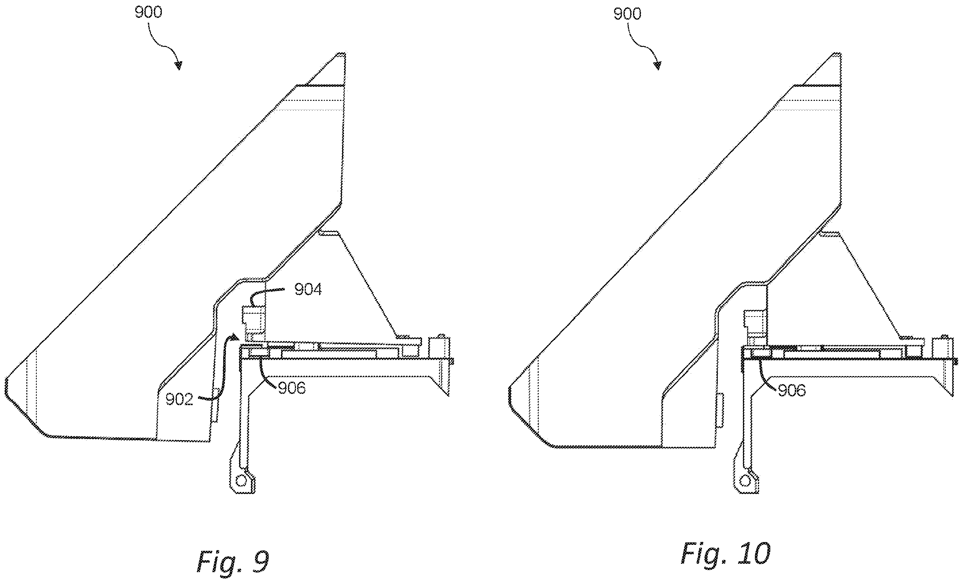

Fig. 9 shows a side view of an extruder in an 'up' position, and Fig. 10 shows a side view of an extruder in a 'down' position. These figures demonstrate how the extruder 900 (or a carriage or sub-carriage to which the extruder is coupled) may be pivotable to change a z-axis position thereof. As shown in Fig. 9, a gap 902 may be present between an extruder portion 904 and a structure 906, e.g., when the extruder 900 (and therefore the extruder portion 904) is lifted into an inactive position using the techniques described herein. Also, as shown in Fig. 10, the extruder 900 in the active or down position may contact the other structure 906, which may be a carriage, a sub-carriage, frame, or another component. This contact, if initiated in a relatively abrupt and sudden manner, may cause undesired noise and/or vibration in a three-dimensional printer. This may be further amplified if the components that come in contact from a downward movement of an extruder are each made from a metal or a similar material. Thus, damping techniques as described herein may be advantageous to mitigate such undesired noise or vibration.

Therefore, as described herein, a three-dimensional printer may include a build plate having a substantially planar surface and a plurality of extruders, where each of the plurality of extruders defines a respective extrusion orifice directed toward the build plate, and where each extrusion orifice is supported above the build plate at a respective height along a z-axis perpendicular to the substantially planar surface of the build plate. The three-dimensional printer may further include a cam having a working surface engageable with a first extruder of the plurality of extruders, where the working surface of the cam is moveable relative to the first extruder to change a z-axis position of the first extruder relative to at least one other one of the plurality of extruders. The three-dimensional printer may also or instead include a support engageable with the cam to move the cam in a manner that lowers the working surface supporting the first extruder, and a damper coupled to the support. The damper may be engageable with the first extruder to receive a z-axis load from the extruder thereby decoupling the first extruder from the cam as the contact with the support lowers the working surface.

The plurality of extruders and the cam may be movable together in a first direction parallel to the substantially planar surface of the build plate (e.g., along one or more of the x-axis and the y-axis). Further, the support may be selectively engageable with the cam to move the cam relative to the plurality of extruders in a second direction that is opposite the first direction, where a movement of the cam relative to the first extruder in the second direction decouples the first extruder from the cam.

As discussed above, the damper may include an arm cantilevered from the support in a direction parallel to the substantially planar surface of the build plate. The arm may include an inclined surface extending obliquely to the substantially planar surface of the build plate. This inclined surface may be positioned to make an initial contact with the first extruder as the damper engages the first extruder, where the z-axis load of the first extruder is received by the arm as the first extruder moves toward the support and away from the build plate along the inclined surface. The inclined surface may include a first surface angled to receive a load from the first extruder as the plurality of extruders move toward the support and a second surface angled to smoothly and continuously lower the first extruder into a working position as the plurality of extruders move away from the support.

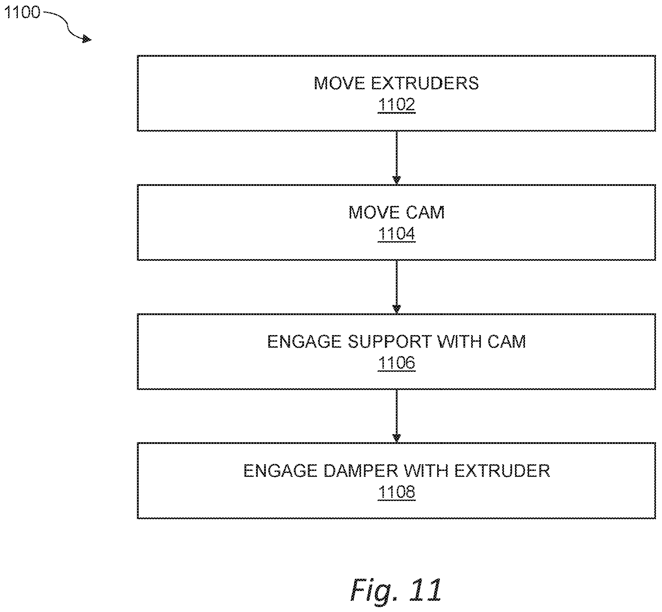

Fig. 11 is a flowchart of a method for changing a z-axis position of an extruder in an extruder assembly featuring a plurality of extruders. The method 1100 may utilize any of the extruder assemblies, three-dimensional printers, or other systems and components described herein. In general, the method 1100 may be used for extruder height toggling in a three-dimensional printer having a multi-extruder assembly.

As shown in step 1102, the method 1100 may include moving a plurality of extruders within a plane parallel to a substantially planar surface of a build plate, e.g., along an x-y plane. Each of the plurality of extruders may define a respective extrusion orifice supported above the build plate at a respective height above the substantially planar surface of the build plate. For example, the plurality of extruders may include a first extruder disposed at a printing height, a second extruder disposed at a non-printing height, with a cam coupled to (or otherwise in direct or indirect mechanical engagement with) the extruders for changing the z-axis height of one or more of the extruders.

To facilitate changing the z-axis height of an extruder, one or more of the plurality of extruders may be movable relative to a gantry along a z-axis. For example, one or more of the plurality of extruders (or a sub-carriage or the like that holds one or more of the plurality of extruders) may be pivotally engaged (e.g., through a hinged connection or the like) to the gantry or a component coupled to the gantry (e.g., a carriage or a portion thereof). In this manner, a z-axis position of an extrusion orifice of an extruder may be movable via a pivoting motion of the extruder. Thus, a force applied to an extruder (or a component engaged with the extruder, such as a follower) may provide such a pivoting motion to move the z-axis position of the extrusion orifice of the extruder. This may be used to toggle the extruder between a printing height and a non-printing height within a build volume of a three-dimensional printer.

As shown in step 1104, the method 1100 may include moving a working surface of a cam relative to a first extruder of the plurality of extruders. Movement of the working surface may change a z-axis position of the first extruder relative to the build plate. More particularly, the working surface of the cam may engage with a first follower that is movable along the working surface, following a contoured path corresponding to a two-dimensional profile of the working surface of the cam. This two dimensional profile of the working surface of the cam may include one or more of peaks, valleys, plateaus, ramped surfaces, and so on corresponding to different z-axis heights relative to the substantially planar surface of the build plate. Thus, moving the working surface of the cam may cause the follower to traverse along the contoured path corresponding to the two-dimensional profile, thus changing the z-axis height of the follower. The follower may be configured to freely rotate relative to the first extruder, but may otherwise be in a fixed position relative to the first extruder. Thus, when the follower changes z-axis height because of movement thereof along the working surface, the first extruder may similarly change its z-axis height. In this manner, toggling or other movement of the working surface may cause a change in z-axis height for the first extruder.

As shown in step 1106, the method 1100 may include engaging a support with the cam to provide movement of the working surface. That is, the plurality of extruders and the cam may move together in a first direction, and engaging the support with the cam may move the cam in a second direction, opposite the first direction, to provide movement of the working surface of the cam.

In this manner, the method 1100 may include moving the cam from a first position to a second position relative to the plurality of extruders for changing the z-axis height of one or more of the extruders. Moving the cam between these positions may be accomplished by moving the plurality of extruders such that the cam contacts a portion of the three-dimensional printer, e.g., a portion external to the plurality of extruders or the carriage, such as the support. Thus, the method 1100 may generally include moving, through movement of the cam, an extruder of a multi-extruder assembly. For example, this may include one or more of: (i) moving, through movement of the cam, a first extruder from the printing height to the non-printing height; and/or (ii) moving, through movement of the cam, a second extruder from the non-printing height to the printing height.

As shown in step 1108, the method 1100 may include engaging a damper with the first extruder to receive a z-axis load from the first extruder. More particularly, an extruder assembly may include a second follower that is movable along a contact surface (e.g., a top surface) of the damper. Similar to the first follower, the second follower may be configured to freely rotate relative to the first extruder, but may otherwise be in a fixed position relative to the first extruder. Thus, when the second follower changes z-axis height because of movement thereof along the working surface, the first extruder may similarly change its z-axis height. In this manner, if the contact surface includes features to gradually change the z-axis position of the second follower (e.g., from a greater z-axis height to a lower z-axis height relative to the build plate), the first extruder may similarly change its z-axis position in a relatively gradual manner. This may mitigate noise or vibration caused by lowering the z-axis height of an extruder.

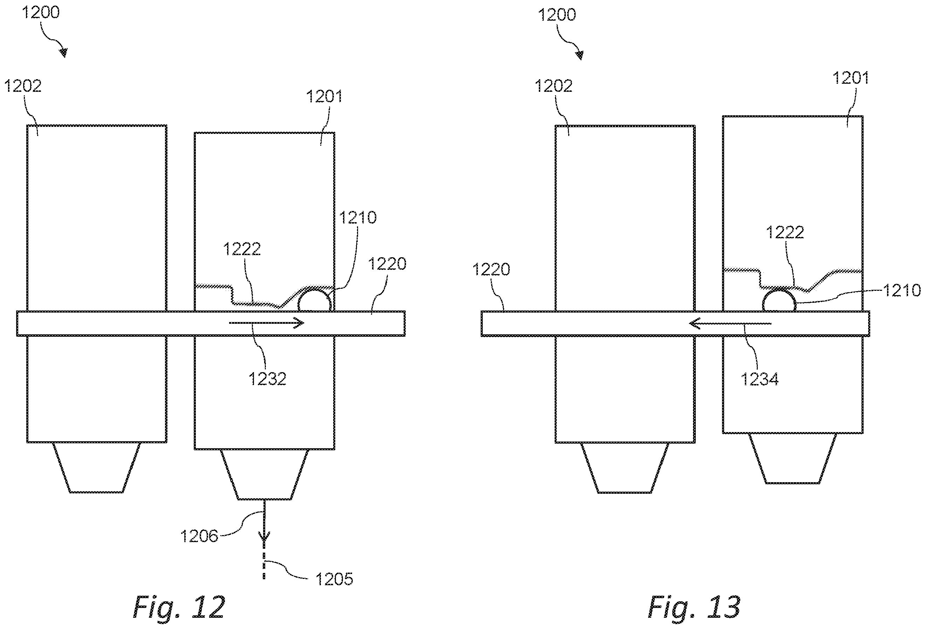

Thus, in general, the present teachings may include one or more followers and a cam that work together to move an extruder of a multi-extruder assembly along a z-axis. In some instances, a follower is in a fixed position relative to the extruder and the cam moves the follower thereby moving the extruder. However, it will be understood that, also or instead, the working surface may be in a fixed position relative to the extruder and a follower (e.g., on a cam) may move the working surface thereby moving the extruder, for example as explained in more detail with reference to Figs. 12 and 13 described below.

Fig. 12 shows an extruder assembly with a first extruder in a 'down' position, and Fig. 13 shows an extruder assembly with a first extruder in an 'up' position. The extruder assembly 1200 may be similar to those described elsewhere herein, but in this exemplary embodiment of an extruder assembly 1200, the working surface 1222 may be fixed on one or more extruders, where the cam 1220 includes a follower that moves along the fixed working surface 1222 of the extruder to change a z-axis position of the extruder. The extruder assembly 1200 may thus generally include a first extruder 1201, a second extruder 1202, and a cam 1220 structurally configured to mechanically control a z-axis position of one or more of the first extruder 1201 and the second extruder 1202.

The first extruder 1201 may define a first extrusion path 1206, where at least one portion of the first extrusion path defines a z-axis 1205. As discussed above, the first extruder 1201 may include a working surface 1222 shaped to translate a horizontal movement (e.g., in one or more of the first direction 1232 and the second direction 1234) along the working surface 122 into a vertical movement of the first extruder 1201 along the z-axis 1205.

The cam 1220 may have a first follower 1210 that is horizontally movable relative to the first extruder 1201 and positioned to travel along the working surface 1222. The first follower 1210 may be the same as or similar to any of the followers described herein, e.g., including a bearing, a rotating wheel, or the like. In general the first follower 1210 may be disposed in a fixed location on the cam 1220, i.e., such that horizontal movement of the cam 1220 causes a similar horizontal movement for the first follower 1210, e.g., along the working surface 1222. That is, the first follower 1210 may be movable along the working surface 1222 of the of the first extruder 1201 as the first follower 1210 moves in a first direction 1232 relative to the first extruder 1201 to lower the working surface 1222 along the z-axis 1205.

It will be understood that the exemplary embodiment of the extruder assembly 1200 shown in Figs. 12 and 13 may further include one or more of a support and a damper as shown and described elsewhere herein. That is, the extruder assembly 1200 may include a support (not shown in Figs. 12 and 13) engageable with the cam 1220 to move the cam 1220 in a second direction 1234 opposing the first direction 1232 to raise the working surface 1222 along the z-axis 1205. The support may also or instead be engageable with the cam 1220 to move the cam 1220 in the first direction 1232 to lower the working surface 1222 along the z-axis 1205. Further, the extruder assembly 1200 may include a damper (not shown in Figs. 12 and 13), which may or may not be coupled to the support. The damper may be engageable with the first extruder 1201 to receive a z-axis load from the first extruder 1201 and to decouple the first follower 1210 from the working surface 1222 as the support lowers the working surface 1222 beneath first follower 1210 in response to a movement in the first direction 1234.

In general, and as described above, the cam may be a "basher bar" or a "toggle bar" on the carriage that moves horizontally to toggle the vertical height of one of the extruders of a multi-extruder assembly, e.g., from an inactive position (with a nozzle position disposed above a printing plane along the z-axis) to an active position (with a nozzle position disposed at or below a printing plane along the z-axis). Furthermore, this toggle bar may extend vertically from both sides of the multi-extruder assembly so that the height adjustment can be initiated by contacting a side of the multi-extruder to any surrounding structure, e.g., the frame of a printer, or the support, damper, or other features described herein. It will be appreciated that this configuration facilitates passive, mechanical control of extruder height wherein the extruder is raised and lowered by contacting opposing sides of the multi-extruder assembly, e.g., by moving the multi-extruder assembly in the x-y plane of a build volume to contact a surrounding frame or other surrounding structures and move the toggle bar back and forth. In this manner, extruder height can advantageously be adjusted without the need for additional active components such as motors, electronic actuators, or the like.

Thus, in one aspect, an extruder assembly includes one or more extruders-e.g., a first extruder and a second extruder movably coupled to the first extruder to permit vertical movement of the second extruder relative to the first extruder, or vice-versa. The extruder assembly may further include a coupler structurally configured to mechanically control a z-axis position of one extruder relative to another extruder in the extruder assembly (e.g., the second extruder relative to the first extruder). The coupler may include one or more of the components described herein for moving the z-axis position of an extruder, such as a cam and one or more followers. For example, the coupler may include a horizontal slider structurally configured to cause upward movement of the second extruder in response to a first horizontal movement in a first direction and to permit downward movement of the second extruder in response to a second horizontal movement in a second direction opposing the first direction. The coupler may extend horizontally from the extruder assembly to expose a first end and a second end that provide control surfaces to move the coupler horizontally in the first direction and the second direction respectively.

The extruder assembly featuring such a coupler may further include a support in a predetermined position within a three-dimensional printer. The support may include a first surface and a second surface, where the first surface is shaped to receive and vertically support the second extruder as the extruder assembly horizontally contacts the support, and where the second surface is shaped to concurrently move the coupler in the second direction as the extruder assembly horizontally contacts the support. The coupler or the second extruder may include a working surface with a ramp shaped to gradually raise and lower the second extruder between an active position with an exit orifice below a lowest point of the first extruder and an inactive position with the exit orifice above the lowest point of the first extruder. Further, the working surface may include a plateau above the ramp to support the second extruder in the inactive position and a ridge. The ridge may have a height greater than the plateau and the ridge may be positioned between the plateau and the ramp to bi-stably retain the second extruder in the inactive position when the extruder assembly is not engaged with the damper.

Movement of an extruder in a multi-extruder assembly along the z-axis may be assisted by, or facilitated by, a biasing member, e.g., a flexible steel spring. For example, in certain implementations, an extruder in a multi-extruder assembly is biased toward an at-rest position, and movement of a cam as described herein may act against this biasing force to move the extruder from the at-rest position to another position (e.g., a printing position).

The extruder or the carriage may include a hinged connection, where z-axis motion is facilitated by the hinge, e.g., such that one or more of the extruders (e.g., both of the extruders) pivots about an axis through the hinge. This pivoting motion may also or instead serve to engage and disengage an extruder from a single, common filament drive wheel, so that an inactive extruder is disengaged from contact with the drive wheel when in a raised, pivot position.

Further, a dual carriage assembly that includes mechanical toggling of one or multiple extruders or extruder components may lead to audible noise during operation. The present teachings, however, may be used to significantly reduce noise levels during operation without the need for additional electromechanical architecture.

The toggle for multiple extruders as described herein may include one or more of the following: (i) mechanical actuation to perform an upward toggle, where a follower rides along a working surface of a cam to push one side of a carriage from a down position to an up position; (ii) mechanical actuation used to perform a downward toggle, where a follower rides along the working surface of the cam and slides from the up position to the down position (e.g., this may be the opposite of the upward toggle); (iii) mechanical damping for noise and vibration produced from toggling, e.g., from the follower sliding down the working surface of the cam.

Thus, in an aspect, a three-dimensional printer includes a first extruder and a second extruder movable independently from the first extruder in a z-direction within a build volume of the three-dimensional printer, the second extruder including a first bearing and a second bearing. The three-dimensional printer may also include a toggle bar slidably coupled to the second extruder, the toggle bar including an inclined surface positioned to raise the second extruder in the z-direction in response to a movement of the toggle bar in a first direction. The three-dimensional printer may further include a support arm having a second inclined surface to receive a load of the second extruder from the toggle bar as the second extruder approaches the support arm, the support arm further including a toggling surface to move the toggle bar in a second direction as the second extruder approaches the support arm, thereby displacing the toggle bar and permitting the second extruder to be lowered in the z-direction along the second inclined surface as the second extruder subsequently moves away from the support arm.

### Extruder Thermal Management

Specific aspects of three-dimensional printing using the three-dimensional printer 100 of Fig. 1, will now be discussed. More specifically, a variety of techniques that can be used to manage the temperature in and around an extruder for a three-dimensional printer will now be discussed. For example, a thermal management technique for an extruder may include one or more of (i) establishing a thermal break along an inlet portion of an extruder, or (ii) actively cooling an outlet portion of the extruder. As used herein, the term "thermal break" shall be understood to include a forced convection flow of fluid across an area of an extruder to interrupt a flow of thermal energy that would otherwise occur, in the absence of the thermal break, between the extruder and one or more components of the printer in the vicinity of the extruder. Thus, for example, the thermal break may interrupt natural convection between a portion of the extruder and a region in the vicinity of the extruder. Further, or instead, as used herein, the term "active cooling" shall be understood to refer more generally to force convection of an area.

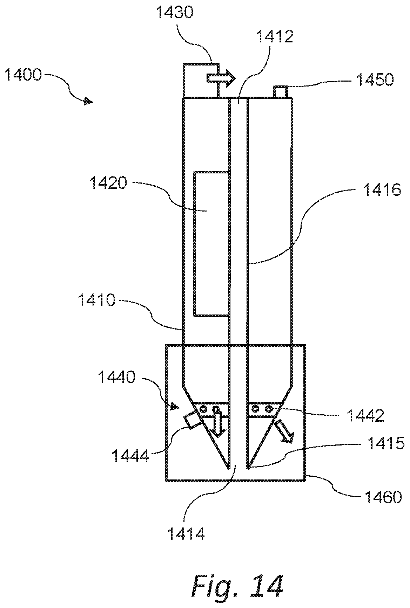

Fig. 14 is a schematic representation of an extruder for a three-dimensional printer. Thus, unless otherwise specified or made clear from the context, the extruder 1400 should be understood to be interchangeable with the extruder 106 discussed above with respect to Fig. 1. That is, the extruder 1400 may be the same as or similar to the extruder 106 described above with reference to Fig. 1, but with additional features and components for improved thermal management. In this manner, it will be understood that the extruder 1400 may be part of a three-dimensional printer or a three-dimensional printing system.

The extruder 1400 may include a nozzle assembly 1410 defining a first orifice 1412, a second orifice 1414, and a chamber 1416 fluidically coupling the first orifice 1412 to the second orifice 1414. The first orifice 1412 may be an inlet for the nozzle assembly 1410 and the second orifice 1414 may be an outlet for the nozzle assembly 1410. In this manner, during a three-dimensional printing operation, the first orifice 1412 may receive a build material (e.g., in filament form) from a source of build material (e.g., a filament spool), and the build material may be moved, via the first orifice 1412, into the chamber 1416 to be heated, melted, or otherwise substantially liquified for eventual extrusion out of the second orifice 1414 (e.g., onto a build platform or the like) for forming at least a portion of a three-dimensional object.

The extruder 1400 may include a heating element 1420 positioned to heat the chamber 1416 and thus the build material within the chamber 1416. For example, the heating element 1420 may be disposed adjacent to the chamber 1416. The heating element 1420 may heat the chamber 1416 to maintain a build material in the chamber 1416 at a target temperature, above a liquefaction temperature of the build material. Heat from the heating element 1420 may be transferred toward one or more of the first orifice 1412 or the second orifice 1414 of the nozzle assembly 1410, where such heating may be undesirable. That is, excess heating of the first orifice 1412 may damage components (e.g., wiring, electronics, an x-y-z positioning assembly, a motor, build material to be fed into the first orifice 1412, and so on) adjacent to the first orifice 1412. Similarly, excess heating of the second orifice 1414 can cause deposited build material within a certain vicinity of the second orifice 1414 to begin to melt, thereby damaging a printed part. Accordingly, the extruder 1400 may mitigate undesirable heating of the areas or regions disposed at or near one or more of the first orifice 1412 and the second orifice 1414 of the nozzle assembly 1410. For example, as described in greater detail below, the extruder 1400 may include one or more of (i) a first fluid source 1430 directed toward the first orifice 1412 to form a thermal break along the first orifice 1412 to reduce the likelihood of inadvertent heat flow beyond the first orifice 1412 in a direction away from the nozzle assembly 1410, and (ii) a manifold 1440 structurally configured to direct a flow of fluid about the second orifice 1414 to cool a region around the perimeter 1415 of the second orifice 1414.

The first fluid source 1430 may include one or more of a fan, a blower, and so on. For example, the first fluid source 1430 may include a variable fan with a speed controllable in response to a signal from one or more sensors 1450. As an example, the one or more sensors 1450 may include a temperature sensor, and a speed of the variable fan may be controlled based at least in part on feedback from the temperature sensor. That is, at higher temperatures, the speed of the fan may be increased to increase convective cooling along the first orifice 1412.

As discussed above, the heating element 1420 may be configured to heat the chamber 1416 to maintain a build material in the chamber 1416 at a target temperature above a liquefaction temperature of the build material. Thus, the first fluid source 1430 may move fluid toward the first orifice 1412 at a first temperature below the target temperature of the build material in the chamber 1416. For example, the first temperature may be greater than about 25 degrees Celsius and less than about 200 degrees Celsius.

The manifold 1440 may define a plurality of exit holes 1442 to facilitate directing a flow of fluid from the manifold 1440 to a region about the second orifice 1414. Specifically, one or more instances of the exit hole 1442 of the plurality of exit holes 1442 (e.g., each instance of the exit hole 1442 of the plurality of exit holes 1442) may be positioned and oriented to produce a flow of a fluid (e.g., air) to cool a region around the perimeter 1415 of the second orifice 1414. That is, in certain implementations, one or more instances of the exit hole 1442 of the plurality of exit holes 1442 may be generally shaped to direct the fluid to cool a region around the second orifice 1414 of the nozzle assembly 1410 while reducing the likelihood of cooling a build material moving through the second orifice 1414 of the nozzle assembly 1410 itself. For example, in certain implementations, the plurality of exit holes 1442 may be spaced from one another about a perimeter of the nozzle assembly 1410 (e.g., equidistantly spaced from one another) such that the fluid issues from the plurality of exit holes 1442 in an omnidirectional flow pattern. As used in this context, an omnidirectional flow pattern shall be understood to include any flow pattern produced by the plurality of exit holes 1442 about a perimeter 1415 of the nozzle assembly 1410 and having a radial flow component and an axial flow component. Thus, for example, an omnidirectional flow pattern may be a flow pattern that, at some distance away from the nozzle assembly 1410, extends substantially 360-degrees radially about an axis defined by the chamber 1416. As a more specific example, the omnidirectional flow pattern may cool recently deposited build material around a region of newly deposited build material during the course of a build.

In general, the fluid delivered from the plurality of exit holes 1442 may include any appropriate coolant suitable for achieving appropriate temperature control in the vicinity of the second orifice 1414. The fluid flow may include movement of a substance in a gaseous state, such as ambient air from within a build volume of a three-dimensional printer including the extruder 1400. The ambient air may also or instead be drawn from a source external to the build volume of a three-dimensional printer including the extruder 1400. Also, or instead, the fluid may be provided from a fluid source, such as, a tank of air or the like. Thus, in certain implementations, the fluid includes air having a chemical composition similar to atmospheric air at sea level. The fluid may also or instead include another gaseous substance, such as hydrogen, sulfur hexafluoride, an inert gas such as helium, and the like. The fluid may also or instead include a liquid, such as water (e.g., deionized water).

The source of the fluid for the flow of fluid about the second orifice 1414 may be the same as the source of the fluid for the flow of fluid about the first orifice 1412. Thus, the flow of fluid about the second orifice 1414 may be provided by the first fluid source 1430. In this manner, in certain implementations, the fluid used for the flow of fluid about the second orifice 1414 may be the same as the fluid used for the flow of fluid about the first orifice 1412. For example, the first fluid source 1430 (e.g., a fan, a blower, or the like) may be ducted or otherwise have a flow of fluid therefrom distributed toward different ends of the nozzle assembly 1410, e.g., in the vicinity of the first orifice 1412 and the second orifice 1414. Individual control of fluid directed toward different ends of the nozzle assembly 1410 in such an embodiment may be possible through the inclusion of one or more valves, louvers, diffusers, vents, combinations thereof and the like.

In certain implementations, the extruder 1400 may include a second fluid source 1444 independent from the first fluid source 1430. Thus, in certain implementations, the fluid used for the flow of fluid about the second orifice 1414 may be different from the fluid used for the flow of fluid about the first orifice 1412. The same type of fluid may also or instead be used, even where the first fluid source 1430 and the second fluid source 1444 are separate and distinct.

The second fluid source 1444 may include one or more of a fan (e.g., a variable speed fan), a blower, and so on. As discussed above, the heating element 1420 may be configured to heat the chamber 1416 to maintain a build material in the chamber 1416 at a target temperature above a liquefaction temperature of the build material. The second fluid source 1444 may move fluid at a second temperature below the target temperature of the build material in the chamber 1416. For example, the second temperature may be greater than about 25 degrees Celsius and less than about 200 degrees Celsius below the target temperature, where other temperatures are also or instead possible for the second temperature.

The manifold 1440 may be coupled to the second fluid source 1444 such that the plurality of exit holes 1442 are in fluid communication with the second fluid source 1444 for directing a flow of fluid (e.g., air) from the second fluid source 1444 about the second orifice 1414 in an omnidirectional flow pattern. The second fluid source 1444 may include a variable-speed fan, where such a variable-speed fan may be controlled according to at least one of a horizontal speed of the extruder 1400 during extrusion, a type of build material extruded from the extruder 1400, or a state of a three-dimensional printer (e.g., a state including but not limited to paused, heating, extruding, moving, and so on).

The flow of fluid from the first fluid source 1430 and the second fluid source 1444 may be controlled independently and, more generally, may be controlled according to any one or more of various different techniques. For example, one or more of the first fluid source 1430 or the second fluid source 1444 may itself be controllable-e.g., by turning the respective fluid source on/off for binary control, and/or by ramping up or down the respective fluid source to increase or decrease fluid flow. Further, or instead, the flow of fluid via one or more of the first fluid source 1430 or the second fluid source 1444 may be controlled through the use of one or more of a valve, a louver, a diffuser, a vent, and so on. For example, in certain implementations, the manifold 1440 may be controllable or adjustable to control fluid flow therethrough. For example, one or more of the exit holes 1442 may be adjustable (e.g., between a fully open position, a fully closed position, or one or more positions therebetween), and/or an orientation of one or more of the exit holes 1442 may be adjustable for controlling a direction of a fluid flow. The temperature of the fluid, the type of fluid, or another attribute of the fluid may also or instead be controllable or otherwise adjustable for one or more of the first fluid source 1430 or the second fluid source 1444.

A flow of fluid in the extruder 1400 may be controlled in response to information obtained by one or more instances of the sensor 1450. By way of example, a fluid source may be in communication with (directly or indirectly) one or more sensors 1450, such as a temperature sensor that measures or senses the temperature of the nozzle assembly 1410 (e.g., at or near one or more of the first orifice 1412 and the second orifice 1414). Such a temperature sensor may also or instead provide a target temperature for a build material that is received from a controller of a three-dimensional printer that includes the extruder 1400.

The extruder 1400 may further include a removable and replaceable insulating cap 1460 for an exterior surface of the nozzle assembly 1410 around the second orifice 1414. The insulating cap 1460 may be formed of an insulating elastomer that provides a thermal barrier between the exterior surface of the nozzle assembly 1410 and an ambient environment. In certain aspects, an outside surface of the insulating cap 1460 resists adhesion to a build material used in a three-dimensional print.

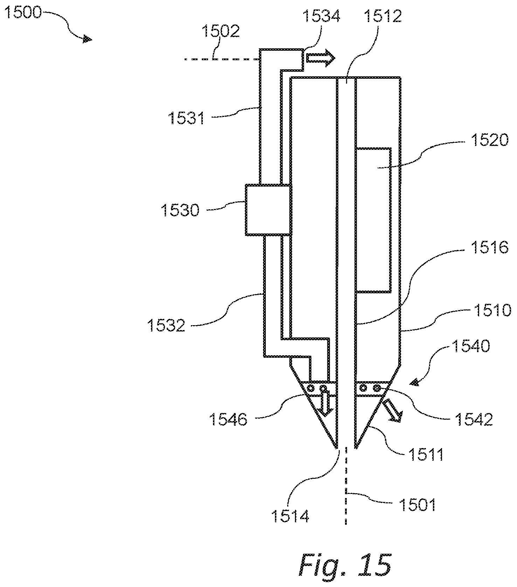

Fig. 15 is a schematic representation of an extruder for a three-dimensional printer. In general, unless otherwise specified or made clear from the context, the extruder 1500 of Fig. 15 may be the same as or similar to the extruder 1400 of Fig. 14, but with the extruder 1500 of Fig. 15 including only a single fluid source 1530. Thus, the extruder 1500 of Fig. 15 may similarly include a nozzle assembly 1510 and a heating element 1520. The nozzle assembly 1510 may define a first orifice 1512, a second orifice 1514, and a chamber 1516 extending from the first orifice 1512 to the second orifice 1514. In certain implementations, the chamber 1516 may define a longitudinal axis 1501 extending through the first orifice 1512 and the second orifice 1514. Additionally, or alternatively, the heating element 1520 may be in thermal communication with the chamber 1516 (e.g., via thermal conduction through the nozzle assembly 1510) such that the heating element 1520 may heat the chamber 1516 to melt a build material for extrusion during a three-dimensional print.

The extruder 1500 may include a first conduit 1531 and a second conduit 1532 for containing and directing a flow of fluid provided from the fluid source 1530. For example, the first conduit 1531 may be coupled to the nozzle assembly 1510. The first conduit 1531 may define a third orifice 1534 directed toward the first orifice 1512 to form a thermal break mitigating heat flow from the chamber 1516, via the first orifice 1512, to an environment beyond the extruder 1500. The third orifice 1534 may be aligned, for example, along a transverse axis 1502 defined by the first conduit 1531. More particularly, the longitudinal axis 1501 defined by the chamber 1516 of the nozzle assembly 1510 may intersect the transverse axis 1502 defined by the first conduit 1531 at the first orifice 1512.

It will be understood that the first conduit 1531 and the second conduit 1532 may be fluidically isolated from one another. Alternatively, the first conduit 1531 and the second conduit 1532 may be in fluid communication with one another (e.g., branching off of a Y-connection or similar from the fluid source 1530). More generally, it will be understood that numerous configurations are possible for a conduit (or a plurality of conduits) that distribute a fluid from the fluid source 1530 (or a plurality of fluid sources) toward the first orifice 1512 to form a thermal break and toward the second orifice 1514 to actively cool a portion of an environment in the vicinity of the second orifice 1514.

Also, or instead, the extruder 1500 may include a manifold 1540 coupled to the nozzle assembly 1510. The manifold 1540 may define a plurality of exit holes 1542, where each instance of the exit hole 1542 of the plurality of exit holes 1542 is disposed at a longitudinal position along the longitudinal axis 1501 between the first orifice 1512 and the second orifice 1514. Each instance of the exit hole 1542 of the plurality of exit holes 1542 may be oriented to direct a fluid in a direction away from the second orifice 1514 to cool a region around a perimeter of the second orifice 1514 (e.g., to cool build material that was deposited by the extruder 1500 in a three-dimensional printing operation). That is, one or more instance of the exit hole 1542 of the plurality of exit holes 1542 may direct a fluid (e.g., provided from the fluid source 1530 via the second conduit 1532) in a direction having a radial component away from the second orifice 1514 to cool a region around the second orifice 1514 while reducing the likelihood of prematurely cooling a build material issuing from the second orifice 1514. Further, or instead, the shape of the nozzle assembly 1510 may assist in directing or distributing the flow of fluid from the manifold 1540. For example, a surface 1511 of the nozzle assembly 1510 may be tapered between the position of the plurality of exit holes 1542 and the second orifice 1514. As compared to other shapes, such a taper of the surface 1511 may facilitate flowing fluid from the manifold 1540 to come into contact with a region of deposited build material with little or no interference from the body of the nozzle assembly 1510.

In general, in certain implementations, a first thermal conductivity between the heating element 1520 and the chamber 1516 may be less than a second thermal conductivity between the heating element 1520 and the plurality of exit holes 1542 defined by the manifold 1540. That is, as the heating element 1520 generates heat, more of the heat generated by the heating element 1520 is directed into the build material chamber 1516 than into the fluid moving through the plurality of exit holes 1542. Such a combination of thermal conductivity may be useful, for example, for delivering a fluid through the plurality of exit holes 1542 at a temperature that is relatively cool as compared to the build material heated in the chamber 1516 and issued through the second orifice 1514.

The manifold 1540 may be fluidically isolated from the chamber 1516 defined by the nozzle assembly 1510. For example, the manifold 1540 may be in fluid communication with one or more of the first conduit 1531 and the second conduit 1532 such that a fluid is deliverable through the plurality of exit holes 1542 of the manifold 1540 and the third orifice 1534 of the conduit via a single fluid source 1530. The fluidic isolation between the manifold 1540 and the chamber 1516 may be useful, for example, for maintaining separate temperatures in each portion of the nozzle assembly 1510. Further, or instead, fluidically isolating the manifold 1540 and the chamber 1516 may reduce the likelihood of prematurely cooling or otherwise promoting a change in the build material in the chamber 1516.

The manifold 1540 may include an annulus 1546 coaxial with the longitudinal axis 1501 defined by the chamber 1516. The annulus 1546 may define the plurality of exit holes 1542 of the manifold 1540. For example, the exit holes 1542 may be spaced equidistant from one another along the annulus 1546 to produce an omnidirectional fluid flow pattern about a perimeter of the nozzle assembly 1510 to cool a region around the second orifice 1514 while directing fluid in a radial direction away from the second orifice 1514.

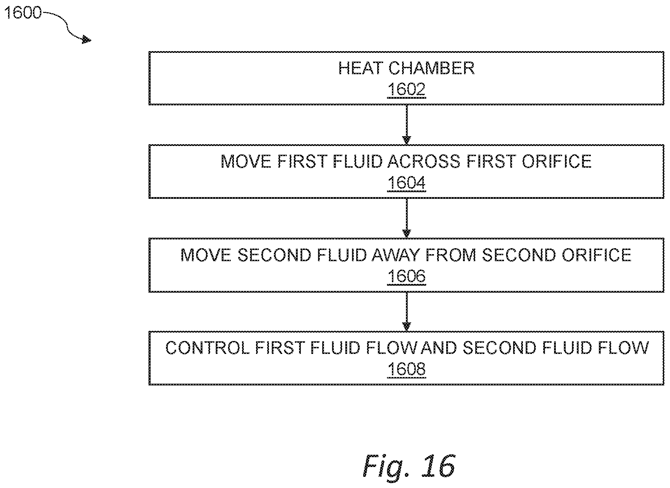

Fig. 16 is a flow chart of a method of thermal management for an extruder of a three-dimensional printer. The method 1600 may utilize any one or more of the extruders described herein. Thus, unless otherwise specified or made clear from the context, the method 1600 may be carried out using the extruder 1400 of Fig. 14, the extruder 1500 of Fig. 15, or a combination thereof, e.g., operating in the printer 100 of Fig. 1.

As shown in step 1602, the method 1600 may include heating a chamber defined by a nozzle assembly of the extruder, where the chamber extends from a first orifice (e.g., an inlet for receiving build material within the extruder) to a second orifice (e.g., an outlet for depositing build material from a nozzle of the extruder). Heating the chamber may include maintaining a build material in the chamber at a target temperature above a liquefaction temperature of the build material.

As shown in step 1604, the method 1600 may include moving a first fluid across the first orifice. This may include blowing or otherwise directing a gas (e.g., air) across the first orifice as a build material is received into the extruder via the first orifice. The first fluid may move across the first orifice at a first temperature below the target temperature of the build material in the chamber. As described above, the target temperature is above a liquefaction temperature of the build material.

As shown in step 1606, the method 1600 may include moving a second fluid to produce an omnidirectional fluid flow away from the second orifice to cool a region around a perimeter of the second orifice. Moving the second fluid may include directing multiple streams of the second fluid about the perimeter of the second orifice. For example, this may include directing a fluid through discrete exit holes of a manifold such that the fluid moves radially away from a nozzle of the extruder to cool a region around the nozzle while reducing the likelihood of prematurely cooling the build material at the build material issues from the second orifice. The second fluid may move about the perimeter of the second orifice at a second temperature below the target temperature of the build material.

As shown in step 1608, the method 1600 may include controlling one or more of the flow of the first fluid and the flow of the second fluid. For example, moving the first fluid across the first orifice may include adjusting a volumetric flow rate of the first fluid across the first orifice (e.g., based on a temperature of the nozzle assembly). Further, or instead, moving the second fluid may include adjusting a volumetric flow rate of the second fluid (e.g., based on movement of the extruder). In certain implementations, movement of the first fluid across the first orifice may be independently controllable relative to movement of the second fluid about the perimeter of the second orifice. Alternatively, or in addition, movement of the first fluid across the first orifice may be controllable relative to movement of the second fluid about the perimeter of the second orifice.

Thus, as described herein, an extruder may include one or more cooling components, such as fans. For example, one or more of the extruders in a printer (e.g., each extruder) may include at least two fans-a first fan and a second fan-which may be variable-speed fans. The first fan may be disposed toward an inlet of the extruder to form a thermal break for the extruder. The first fan may operate in response to a thermocouple of the extruder. The second fan may be disposed toward or away from the nozzle of the extruder (e.g., to cool the extrudate and/or to act as an active cooling fan for the printer). The second fan may be controlled based on, for example, part geometry and a build material that is being used in a three-dimensional print. The second fan may blow air out of a carriage duct, which may include a structure that surrounds each nozzle. In this manner, the second fan may be used to achieve fluid movement useful for actively cool a print in a local region. The duct structure may be made of plastic or similar. Further, one or more of the first fan and the second fan may be controlled by a proportional-integral-derivative (PID) controller or similar.

### Removable Build Plate for Three-Dimensional Printers

Specific improvements to three-dimensional printing, e.g., using a three-dimensional printer as described above with reference to Fig. 1, will now be discussed.

Specifically, an aspect of the present teachings includes a removable and replaceable build plate for a three-dimensional printer such as that described above with reference to Fig. 1. The build plate may include any of the features of the build platform described above with reference to Fig. 1. In general, the build plate may support magnetic (or other) coupling to a printer and advantageous adhesion for an initial layer of build material in a three-dimensional print.

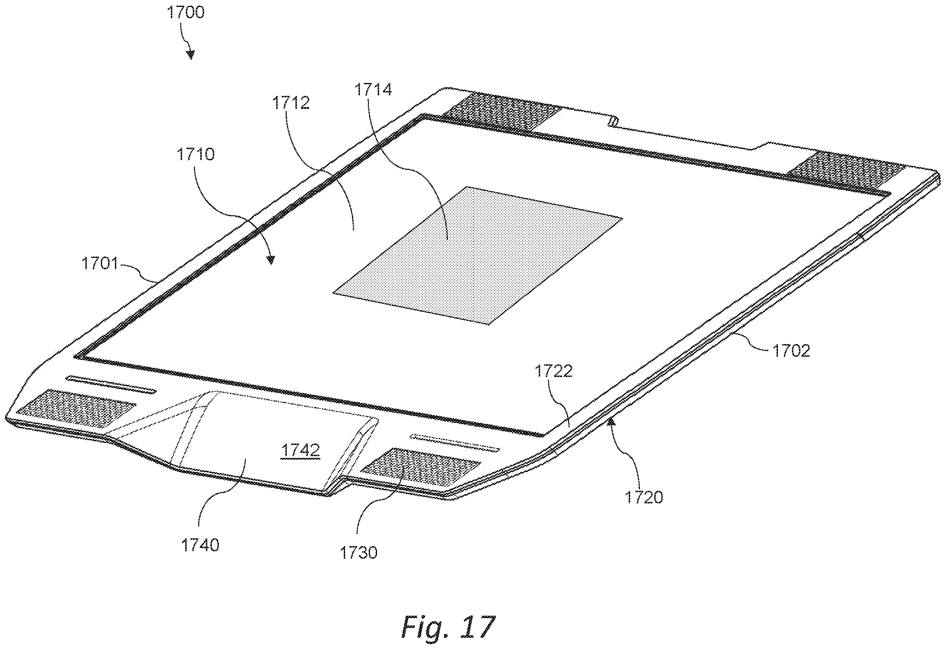

Fig. 17 shows a build plate for a three-dimensional printer. In general, the build plate 1700 may include a sheet 1710, a frame 1720, one or more tabs 1730, and a recess 1740 graspable by fingertips of a user of the three-dimensional printer. The build plate 1700 may be advantageously sized, shaped, and generally structurally configured for coupling and decoupling with a backbone structure included in a three-dimensional printer. The build plate 1700 may also or instead be sized, shaped, and generally structurally configured for other advantages such as establishing adhesion with an initial layer of build material in a three-dimensional print, facilitating removal of an object fabricated on the build plate 1700, and providing ease of handling for a user.

In general, the sheet 1710 may be secured within, or at least partially bounded by (e.g., fully bounded by), the frame 1720. In some aspects, the coupling of the sheet 1710 with the frame 1720 is permanent-i.e., where the coupling of the sheet 1710 with the frame 1720 is not structurally configured or otherwise intended for removal of the sheet 1710 from the frame 1720 and vice-versa. For example, the sheet 1710 may be cast into, adhesively bound to, welded onto, or otherwise mechanically attached to the frame 1720, e.g., with rivets or other fasteners. In other aspects, the sheet 1710 may be removably coupled with the frame 1720-e.g., for replacement of one or more of the sheet 1710 and the frame 1720, or for reversing an exposed surface (e.g., the top surface 1712) of the sheet 1710. In certain implementations, the sheet 1710 may form a majority of the exposed surface or x-y planar dimensions of the overall build plate 1700.

The sheet 1710 may be formed of an elastically flexible material. That is, the sheet 1710 may generally be formed of a material having structural characteristics such that the sheet 1710 (and thus the build plate 1700 generally) can flex into a relatively concave or convex shape at room temperature when a force is applied by a user-e.g., a user grasping a first end 1701 and a second end 1702 of the build plate 1700 and applying a force thereto-and then the sheet 1710 (and thus the build plate 1700 generally) can flex back into an at-rest state when the force is no longer applied. The at-rest state may be the state of the build plate 1700 shown in Fig. 17, or any other undeformed shape of the build plate 1700 such as a shape of the build plate 1700 in the absence of external forces. For example, in an aspect, the top surface 1712 of the sheet 1710 may be substantially planar in the at-rest state of the build plate 1700. However, the sheet 1710 may be flexible such that the top surface 1712 of the sheet 1710 can become nonplanar (e.g., substantially concave or substantially convex) when a force (such as a torque or point force) is applied to the sheet 1710 or build plate 1700-e.g., a force normal to the top surface 1712 of the sheet 1710 that is applied to one or more of the first end 1701 and the second end 1702 of the build plate 1700. As stated above, the overall build plate 1700 may generally flex with the sheet 1710. That is, the build plate 1700 may generally include other components, such as the frame 1720, that are formed using elastically flexible materials such that the entire build plate 1700 (or a majority of the build plate 1700) can flex into a relatively concave or convex shape when a force is applied by a user-e.g., a user grasping a first end 1701 and a second end 1702 of the build plate 1700 and applying a force thereto-and then the build plate 1700 can flex back into an at-rest state when the force is no longer applied.

The elastically flexible material of the sheet 1710 may include a ferromagnetic metal such as spring steel or any other ferrous alloy or the like. Such a material in the sheet 1710 facilitates removable and replaceable coupling of the build plate 1700 to a printer with magnetic forces, e.g., by coupling to a ferromagnetic backbone structure included in a three-dimensional printer.

The sheet 1710 may generally define an upper surface with one or more build sections thereon-i.e., regions or areas that are structurally configured to receive build material that is deposited in a three-dimensional printing process. For example, the top surface 1712 of the sheet 1710 (e.g., where the sheet 1710 provides an exposed surface that is not encased by the frame 1720) may define one or more build sections where material can be deposited to fabricate an object. In one aspect, the entire top surface 1712 of the sheet 1710 may be exposed to form a build section, and the sheet 1710 may be adhered on a lower surface (not shown) to the frame 1720. In some aspects, such as aspects where the sheet 1710 is reversible (or the build plate 1700 itself is reversible relative to a portion of a three-dimensional printer to which the build plate 1700 is couplable), both the top surface 1712 and a bottom surface (i.e., the opposing surface to the top surface 1712) of the sheet 1710 may form a build section for the build plate 1700. In general, the build section of the sheet 1710 may be substantially planar when disposed in an at-rest position or state. Thus, the sheet 1710 may have a build section that is substantially planar in the absence of external forces.

In certain implementations, a polycarbonate layer 1714 may be disposed over at least one surface of a build section of the sheet 1710, or a print surface of the build plate 1700 generally. For example, a polycarbonate layer 1714 may be disposed over an entire surface (e.g., the entire top surface 1712) of the sheet 1710. The polycarbonate layer 1714 may be structurally configured to establish or promote advantageous adhesion for an initial layer of build material deposited thereon in a three-dimensional printing operation. Such advantageous adhesion may include adhesion such that a printed object adheres to a build section of the sheet 1710 for an entire printing operation but can be removed (relatively easily) from the sheet 1710 when desired, e.g., by flexing the sheet 1710 or build plate 1700. By way of example, the polycarbonate layer 1714 may include a FR700 polycarbonate sheet or a similar material that is affixed to the sheet 1710 as a build surface.

The frame 1720 may be disposed around at least a portion of a perimeter of the sheet 1710. For example, the frame 1720 may be disposed over the entire perimeter of the sheet 1710 as shown in Fig. 17. In general, the frame 1720 may act as an insulator or barrier to provide a relatively cool surface for handling the build plate 1700. For example, the sheet 1710 may be made from a first material having a higher thermal conductivity than a second material of the frame 1720 (at room temperature or otherwise). Stated otherwise, the sheet 1710 may be formed of a first material along its build section, where the first material has a first thermal conductivity and includes a ferromagnetic component, and the frame 1720 may be disposed along at least a portion of a perimeter region of the sheet 1710, and where the frame 1720 includes a second material having a second thermal conductivity that is less than the first thermal conductivity of the first material of the sheet 1710. In one aspect, the frame 1720 may be at least as flexible as the sheet 1710, however, the frame 1720 may also be stiffer than the sheet 1710, or of about the same stiffness as the sheet 1710, provided that the sheet 1710 and the frame 1720 can elastically flex together and return to an original shape when external forces are relieved. As discussed herein, the second material of the frame 1720 may include an elastomeric material, such as a thermoplastic elastomer (TPE) or the like. This elastomeric material may be overmolded onto the sheet 1710 (e.g., over a perimeter of the sheet) in order to securely retain the sheet 1710 within the frame 1720 during handling and flexing. The frame 1720 may generally form a gripping surface (e.g., including a handle) for a user to handle, e.g., when removing the build plate 1700 from a backbone structure of a three-dimensional printer or when removing a printed object from the build plate 1700.

As discussed above, the frame 1720 may be formed of an elastomeric material selected so that the frame 1720 can elastically flex with the sheet 1710. Thus, in certain implementations, in response to torque about any axis extending through the sheet 1710 and the frame 1720 at room temperature, the sheet 1710 may have a first torsional stiffness, and the frame 1720 may have a second torsional stiffness less than or equal to the first torsional stiffness of the sheet 1710. In another aspect, the sheet 1710 may have a torsional stiffness less than the frame 1720, or the two may have substantially similar stiffnesses, provided the sheet 1710 and frame 1720 can flex and relax together during use. It will be appreciated that the elastic modulus is an intensive property of a material, whereas stiffness and torsional stiffness are extensive properties of an object formed of a particular material. As contemplated herein, the frame 1720 and sheet 1710 may be formed of materials with suitably complementary elastic moduli, or may be fashioned to have suitably complementary stiffness, or some combination of these, provided that the frame 1720 and sheet 1710 can elastically flex and unflex for use as a build plate 1700 as contemplated herein.

Also or instead, as discussed above, the elastomeric material of the frame 1720 may have a low thermal conductivity relative to the sheet 1710, and the elastomeric material may be positioned to insulate an exposed surface 1722 of the frame 1720 from a temperature of the sheet 1710. For example, the elastomeric material may be positioned such that it is located on a perimeter (e.g., at least an upper perimeter) of the sheet 1710. That is, in certain implementations, the frame 1720 may be overmolded onto the entire perimeter of the sheet 1710. Thus, the frame 1720 may be formed of a thermally insulating, elastomeric material selected to flex with the flexible sheet 1710 and to insulate an exposed surface of the frame 1720 from a temperature of the sheet 1710. In this manner, the frame 1720 may be cool to the touch, or at least at a lower temperature than the sheet 1710, shortly after a three-dimensional printing process is completed. The thermally insulating, elastomeric material of the frame 1720 may include one or more of a thermoplastic elastomer (TPE), acrylonitrile butadiene styrene (ABS), or similar.

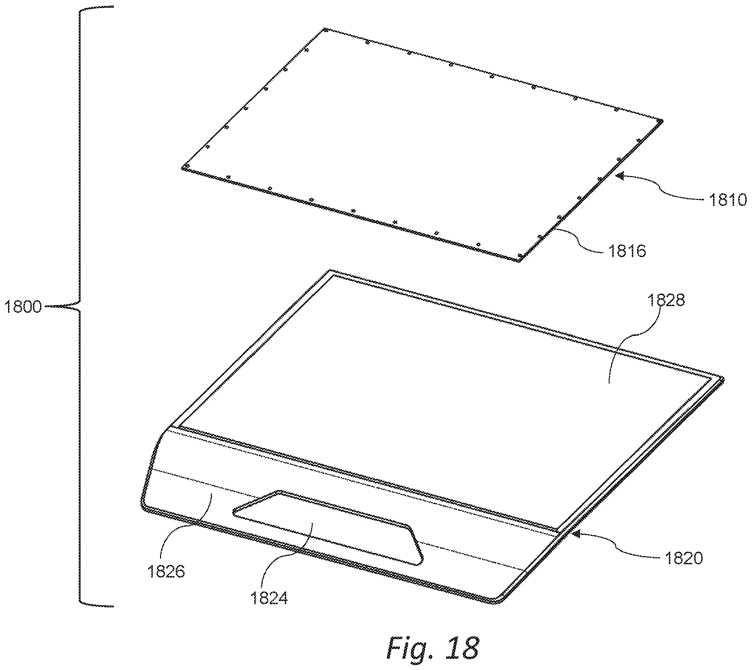

The frame 1720 may define a recess 1740 or other grippable feature, which, as stated above, may be graspable by fingertips of a user-e.g., for placement and removal of the build plate 1700 within the build volume of a three-dimensional printer. The recess 1740 may thus define a handle for the build plate 1700, the handle being a location on the build plate 1700 sized and shaped for grasping by a user or machine. The recess 1740 may define an inclined surface 1742 thereon as shown in Fig. 17. Also, or instead, the recess 1740 may define one or more openings (not shown in Fig. 17, but such an opening 1824 is shown by way of example in Fig. 18) sized and shaped for being graspable by a user, e.g., forming a handle or the like for the build plate 1700.

The recess 1740 may further be sized and shaped for engagement with a mating portion of a three-dimensional printer, such as a backbone structure disposed within a build volume of a three-dimensional printer. In this manner, the recess 1740, or another portion of the build plate 1700, may be structurally configured to cooperate with a portion of a three-dimensional printer. To this end, the recess 1740 (or another portion of the build plate 1700) may include one or more features structurally configured to promote or establish engagement with a portion of a three-dimensional printer such as one or more of notches, protrusions, grooves, sliders, bearings, or other mechanical keying features.

As stated above, the build plate 1700 may include one or more tabs 1730. Such a tab 1730 may at least be partially formed of the elastomeric material of the frame 1720. The one or more tabs 1730 of the elastomeric material may extend from, or be depressed into, the frame 1720 to provide gripping surfaces for the build plate 1700, e.g., gripping surfaces for aiding in removal of the build plate 1700 from a backbone structure of the three-dimensional printer. In certain implementations, each of the tabs 1730 may have a first surface roughness, where one or more other portions of the frame 1720 excluding the tabs 1730 has a second surface roughness that is less than the first surface roughness of the tabs 1730. In other words, the tabs 1730 may be structurally configured to provide a greater roughness than other portions of the frame 1720, which can provide greater friction to ease in gripping the build plate 1700 using the tabs 1730.

The tabs 1730 may be coupled to the frame 1720 as described above. In this manner, each tab 1730 may be thermally insulated from the first material of the sheet 1710 by at least the second material of the frame 1720. Thus, because each tab 1730 may be graspable by a user to move the build plate 1700, the tabs 1730 may have a temperature suitable for human touch (relative to the sheet 1710) when the sheet 1710 is in a heated stated (e.g., a heated state stemming from being disposed within a heated build volume of a three-dimensional printer, a heated state because of heat exchange provided from a relatively hot extruded build material, a heated state stemming from direct heating of the sheet 1710, and combinations thereof).

The build plate 1700 in certain aspects may thus include a laser spring steel sheet 1710 (or similar material) overmolded with another material to provide a frame 1720 (e.g., a polycarbonate (PC) acrylonitrile butadiene styrene (ABS) material), and a polycarbonate (or similar material) material may be adhered to a surface of the sheet 1710 to improve first layer adhesion during a three-dimensional printing operation.

Fig. 18 shows an exploded view of a build plate for a three-dimensional printer. Specifically, Fig. 18 shows the sheet 1810 separated from the remainder of the build plate 1800, such as the frame 1820. This exploded view is shown for clarity to emphasize that the sheet 1810 and the frame 1820 may be separate, distinct components of the build plate 1800. As discussed herein, in certain implementations, the sheet 1810 is removable from the frame 1820, and thus the exploded view of Fig. 18 shows the sheet 1810 removed from the frame 1820 in such an embodiment. In certain aspects, the sheet 1810 may fit within a recess 1828 of the frame 1820, or the frame 1820 may be overmolded around or onto the sheet 1810. In other aspects, the sheet 1810 may occupy a void of the frame 1820-e.g., where the frame 1820 is disposed around a perimeter 1816 of the sheet 1810, and the sheet 1810 is coupled to the frame 1820 through some other perimeter attachment structure such as a gasket, l-bracket, or the like.

The build plate 1800 shown in Fig. 18 may be similar to the build plate 1700 shown in Fig. 17, and may thus include any of the features of the build plate 1700 described above with reference to Fig. 17. As illustrated in Fig. 18, the build plate 1800 may include an opening 1824 defined by the frame 1820-e.g., located on an inclined surface 1826 defined by the frame 1820. These features may be structurally configured to aid in gripping or grasping of the build plate 1800, as well as for engagement of the build plate 1800 with a portion of a three-dimensional printer, such as a backbone structure disposed within a build volume of a three-dimensional printer. While the opening 1824 may be included on an inclined surface 1826 as shown, e.g., for ergonomic or aesthetic reasons, the opening 1824 may also or instead be included on a surface coplanar with or parallel to the sheet 1810 that provides the build surface.

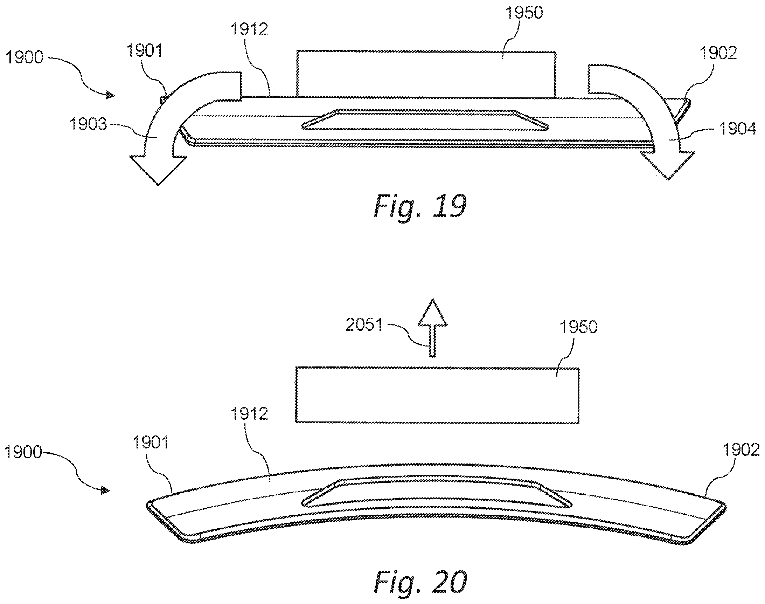

Fig. 19 shows a build plate with a printed object disposed thereon, and Fig. 20 shows the build plate of Fig. 19 with the printed object removed therefrom. The build plate 1900 of Figs. 19 and 20 may be the same as or similar to any of those described herein, e.g., the build plates described above with reference to Figs. 17 and 18. That is, the build plate 1900 may be formed of one or more flexible materials (e.g., a first material forming at least part of a flexible sheet, and a second material forming at least part of a flexible frame disposed around at least a portion of the flexible sheet, such as around a perimeter thereof). Advantageously, the build plate 1900 may flex to promote a release of a printed object 1950 disposed thereon, which may adhere to the top surface 1912 of the build plate 1900 during a three-dimensional printing operation. Thus, by flexing the surface area of the build plate 1900 in contact with the printed object 1950, a user may quickly and easily remove a relatively rigid object coupled thereto.

Fig. 19 shows the build plate 1900 in an at-rest position or state. In this at-rest state, the top surface 1912 of the build plate 1900, which may include a build section for receiving deposited build material when forming an object 1950 in a three-dimensional printing operation, may be substantially planar-e.g., within 0.2-0.4 mm of z-axis excursion from a completely planar or flat surface, or deviating from planar by less than the minimum z-axis printing increment for a print process, or sufficiently planar to avoid human-observable deviations from an intended net shape. Because the build plate 1900 is formed of flexible materials, however, an applied force may cause the top surface 1912 of the build plate 1900 to flex or otherwise deform with excursions beyond an otherwise substantially planar form. For example, and as demonstrated in Figs. 19 and 20 when viewed in sequence, forces applied at the ends of the build plate 1900 can cause the top surface 1912 of the build plate 1900 to become substantially concave or convex. That is, as shown in Fig. 19, forces may be applied to flex the first end 1901 and the second end 1902 of the build plate 1900 in the direction of a first arrow 1903 and a second arrow 1904, respectively. In this manner, the applied forces may deform the build plate 1900 into a flexed state with a concave top surface 1912 to remove, or to facilitate removal of the object 1950 therefrom. Flexing the build plate 1900 in this manner may promote disengagement of the object 1950 from the top surface 1912 of the build plate 1900, e.g., in the direction of the arrow 2051 in Fig. 20. Thus, in use, the build plate 1900 may be flexed or otherwise torqued (e.g., by hand) to help remove a printed object 1950 from the build plate 1900. Suitable forces may also or instead be automatically (e.g., robotically) applied to the build plate 1900 at the completion of a print in order to facilitate full or partial disengagement of objects 1950 prior to human interaction.

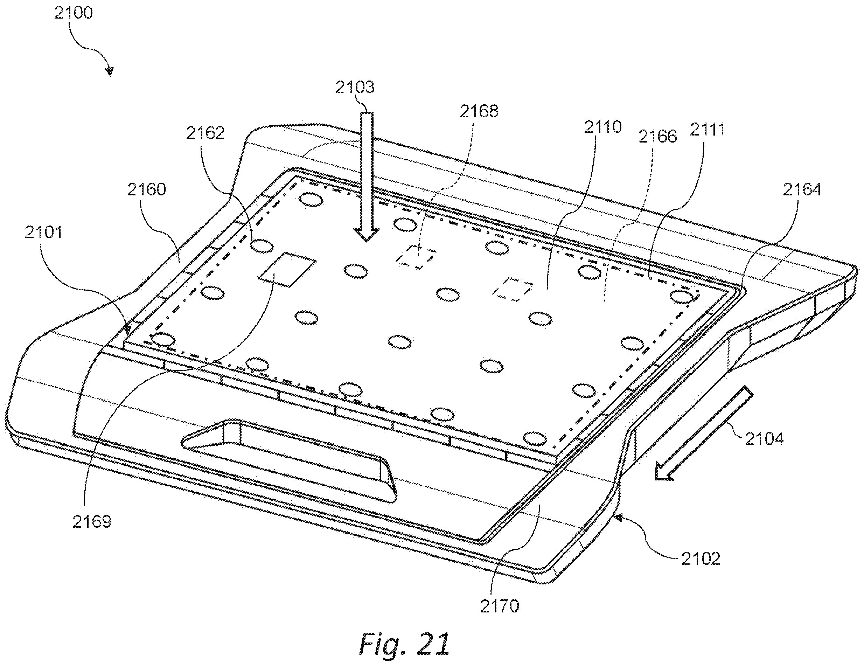

Fig. 21 shows a build plate system of a three-dimensional printer. The system 2100 may generally include a build plate 2101 for receiving deposited build material during a three-dimensional printing operation using a three-dimensional printer, and a backbone structure 2102 for supporting the build plate 2101 within the three-dimensional printer. It will thus be understood that the backbone structure 2102 may be included in a three-dimensional printer, such as any of those described herein, and may, in various embodiments of the three-dimensional printer, be movable within a build volume of the printer or stationary within the build volume of the printer.

The build plate 2101 may be the same as or similar to one or more of the other build plates described herein. In general, the build plate 2101 may include a sheet 2110 having a build section 2111 (shown, for example, as a printable top surface bounded by the dot-dashed line in Fig. 21), where the build section represents the area(s) of the build plate 2101 structurally configured, e.g., by material selection and surface texture, to receive deposited build material during a three-dimensional printing process. The sheet 2110 may include a ferromagnetic material in or adjacent to the build section 2111. In this manner, the sheet 2110, and thus the build plate 2101 generally, may be configured for coupling via a magnetic force to another component, such as the backbone structure 2102, which may include one or more cooperating magnetic components such as fixed magnets or electromagnets.

The backbone structure 2102 may include a body 2160 and a plurality of magnets 2162 supported by the body 2160. For example, the backbone structure 2102 may include a single magnet 2162 in an embodiment, although two or more magnets 2162 may be preferable. For example, the magnets 2162 may be distributed to contact the build plate 2101 around a perimeter of the ferromagnetic material of the sheet 2110, or positioned at the corners of the sheet, or distributed in a regular geometric array, or in any other manner suitable for magnetically retaining the build plate 2110 in place on the backbone structure 2102. In this manner, the build plate 2101 may be coupled to the backbone structure 2102 via magnetic forces exerted in a first direction 2103 (e.g., normal to the build plate 2101) acting on the ferromagnetic component along the build section 2111 of the sheet 2110. Thus, in certain embodiments, a magnetic force may establish the coupling between the build plate 2101 and the backbone structure 2102.

The magnetic force may also or instead assist in establishing a predetermined orientation or alignment of the build plate 2101, e.g., relative to the backbone structure 2102 or another component of the three-dimensional printer. Such a predetermined orientation or alignment of the build plate 2101 may include a predetermined surface shape for the build plate, such as where the build section 2111 (e.g., the entire top surface) is substantially planar. In this manner, the body 2160 of the backbone structure 2102 may have a substantially planar surface 2166 that includes the plurality of magnets 2162 arranged to secure the ferromagnetic component of the build plate 2101 (e.g., a ferromagnetic metal material from which the sheet 2110 of the build plate 2101 is made) in a position on the planar surface 2166 within the three-dimensional printer during a fabrication process. For example, when coupled to the backbone structure 2102 via the magnetic force, the build section 2111 of the sheet 2110 of the build plate 2101 may be generally flat, with excursions not exceeding 0.4 mm from planar, or optionally 0.2 mm from planar, at a temperature of about 80° Celsius.

In certain implementations, the plurality of magnets 2162 are movable on the backbone structure 2102, e.g., to alter or refine the orientation or alignment of the build plate 2101. Also, or instead, the plurality of magnets 2162 may be placed along the backbone structure 2102 in a predetermined manner to enforce a desired surface shape for the flexible sheet 2110 (e.g., where the surface shape is 0.2-0.4 mm from planar). Thus, magnets 2162 placed on or embedded within one or more of the build plate 2101 and backbone structure 2102 may provide a force securing the sheet 2110 to the backbone structure 2102 (e.g., a force oriented in the first direction 2103 as shown in the figure). And, in certain implementations, by adjusting the spacing and location of the magnets 2162, the securing force may be adjusted, e.g., to be greater towards the edges of the build plate 2101 or to be substantially uniform throughout the build plate 2101.

In addition to, or in lieu of, the magnetic couplings between the build plate 2101 and the backbone structure 2102 described above, other mechanical features for engagement of the build plate 2101 and the backbone structure 2102 may be utilized. These features may be included, for example, within the build plate 2101 and/or the backbone structure 2102. For example, the backbone structure 2102 may define a cutout 2164 or the like that is sized and shaped to receive the build plate 2101 (or a portion thereof) therein. Such a cutout 2164 may assist in establishing a predetermined alignment of the build plate 2101 relative to the backbone structure 2102. Additionally, or alternatively, the backbone structure 2102 and the sheet 2110 may include complementary mechanical anchors 2168 arranged to secure the sheet 2110 in a certain position on the backbone structure 2102 during a fabrication process.

In general, the structural configuration (e.g., the size, shape, positioning of the magnets 2162, and so on) of the backbone structure 2102 and the sheet 2110 may promote relatively easy coupling and decoupling of the sheet 2110 and the backbone structure 2102 within a build volume of a three-dimensional printer. For example, the sheet 2110 of the build plate 2101 may be slidable relative to the body 2160 of the backbone structure 2102 in a second direction 2104 perpendicular to the first direction 2103 of a magnetic force that couples the backbone structure 2102 and the build plate 2101 and/or parallel to the sheet 2110. That is, the body 2160 of the backbone structure 2102 may include a substantially planar surface 2166 as described herein, and the sheet 2110 of the build plate 2101 may be slidable relative to the body 2160, in the second direction 2104, along the substantially planar surface 2166. This may be advantageous for a user to grasp the build plate 2101 and slide the build plate 2101 along the second direction 2104 for removal of the build plate 2101 relative to the backbone structure 2102. Also or instead, a user may grasp the build plate 2101 and lift the build plate 2101 (in a direction opposing the first direction 2103) for removal of the build plate 2101 relative to the backbone structure 2102, e.g., essentially peeling the build plate 2101 from the backbone structure 2102.

The sheet 2110 of the build plate 2101 may also or instead be slidable (or otherwise movable) relative to the body 2160 of the backbone structure 2102 (e.g., in the second direction 2104) under force of thermal expansion of the sheet 2110 of the build plate 2101. In this manner, the structural configuration of the backbone structure 2102 and the sheet 2110 may allow for thermal expansion of one or more of these components without decoupling the components or buckling the build section 2111 or the sheet 2110 during thermal cycling.

The sliding capability of the build plate 2101 relative to the backbone structure 2102 may be further aided by other features, e.g., by incorporating features such as a groove, an incline, a bearing, a wheel, a slider, and the like into the build plate 2101 and/or the backbone structure 2102. For example, the system 2100 may include a ramp 2170 on (or adjacent to) the substantially planar surface 2166 of the body 2160 of the backbone structure 2102. The ramp 2170 may extend in a direction away from the substantially planar surface 2166 and be oriented to separate a region of the build plate 2101 from the backbone structure 2102, e.g., in the z-axis direction relative to an x-y plane of the build plate 2101, as the build plate 2101 is moved in the direction away from the substantially planar surface 2166, such as in a sliding motion in the second direction 2104 as a user pulls a handle formed by an opening.

The system 2100 may usefully incorporate one or more sensors 2169. For example, one or more of the backbone structure 2102 and the sheet 2110 may include a sensor 2169 that can detect and transmit certain information to a controller (such as any of those described herein) for adjustments to the system 2100 or the three-dimensional printer. Such sensed information may include without limitation one or more of a temperature, a position or orientation of the sheet 2110, a surface shape of the sheet 2110, a weight or other force on the sheet 2110, a predetermined coupling or alignment (or lack thereof), and so on.

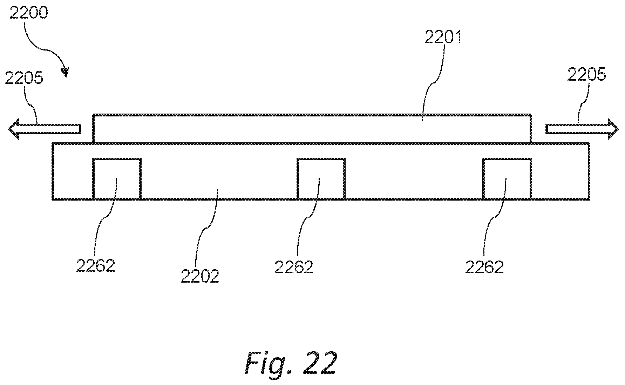

Fig. 22 is a cross-sectional view of a representation of a build plate system. The system 2200 of Fig. 22 may be the same as or similar to that shown in Fig. 21, where the system 2200 includes a build plate 2201, a backbone structure 2202, and one or more magnets 2262. This figure shows how the system 2200 may permit thermal expansion of the build plate 2201, e.g., in the direction of the arrows 2205, while maintaining a predetermined surface shape of the build plate 2201 (e.g., by preventing or mitigating bowing of the build plate 2201). That is, in contrast to a mechanically anchored system where there is a chance that a build plate, when heated such that it expands, becomes over constrained and bows upwards thereby warping the print surface, a magnetically-coupled configuration (such as that shown in the figure) may allow the build plate 2201 to expand and slide relative to the backbone structure 2202 without causing such bowing. Thus, magnetic attachment may be preferable over mechanical anchoring, in particular for build plates 2201 having a coefficient of thermal expansion significantly different (either isotropically or anisotropically) from an associated backbone structure 2202. A combination of magnetic and mechanical techniques may also or instead be employed.

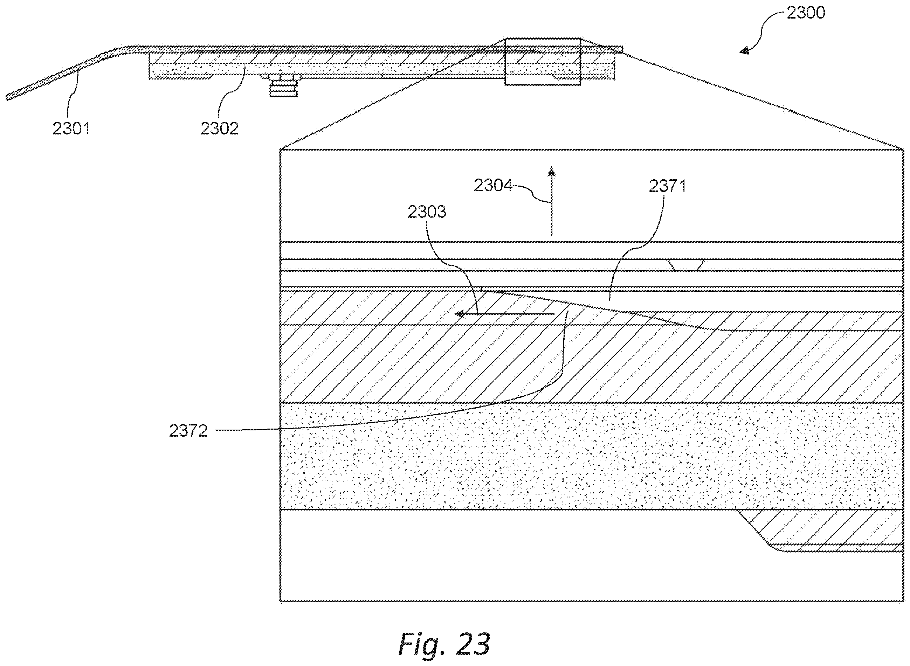

Fig. 23 shows a cross-sectional view of a build plate system. The system 2300 of Fig. 23 may be the same as or similar to that shown in Figs. 21 and 22. Fig. 23 emphasizes certain features that facilitate removal of the build plate 2301 from a backbone structure 2302. Specifically, the system 2300 may include one or more ramped portions on the build plate 2301 and/or the backbone structure 2302. For example, the build plate 2301 may include a first ramp 2371 and the backbone structure 2302 may include a second ramp 2372, where each of these ramped portions are structurally configured to cooperate with one another during a process for removing the build plate 2301 from the backbone structure 2302. That is, when a force is acting on the build plate 2301 in one or more of a first direction 2303 or a second direction 2304, the second ramp 2372 may provide a surface upon which the first ramp 2371 can slide with minimal encumbrances. These ramped surfaces may be structurally configured to have a relatively low coefficient of friction therebetween (e.g., through material selection) to promote such sliding or other movement when the build plate 2301 is displaced in the first direction 2303 (e.g., horizontally toward a handle of the build plate 2301), so that the two opposing ramps (the first ramp 2371 and the second ramp 2372) can, with significant mechanical advantage, displace the build plate 2301 in a z-axis direction away from the backbone structure 2302. This may be particularly useful where, each of the build plate 2301 and the backbone structure 2302 are engaged with one another by magnetic forces that require substantial force for an initial separation. In this configuration, as the build plate 2301 slides against the ramp features in the first direction 2303, it may be lifted upwards in the second direction 2304, thereby reducing magnetic coupling and making the build plate 2301 relatively easy to remove from the backbone structure 2302.

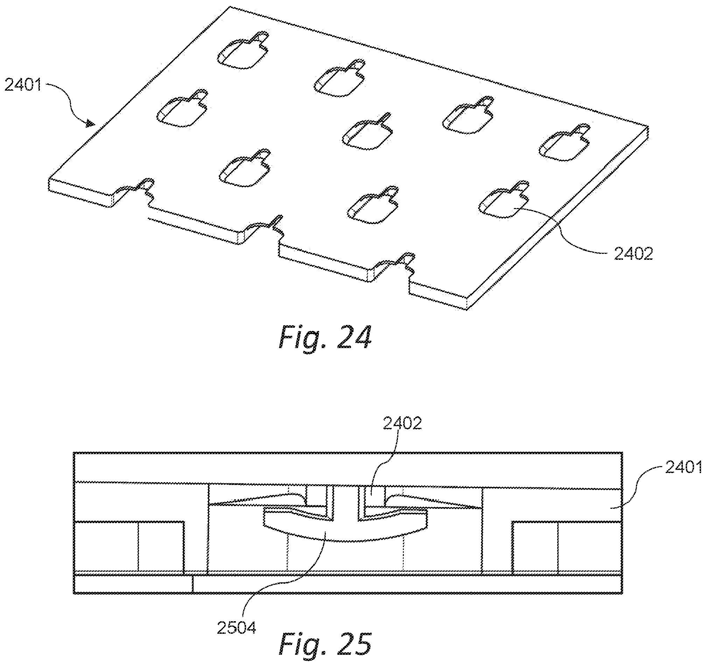

Fig. 24 shows mechanical features for coupling a build plate and a backbone structure in a build plate system, and Fig. 25 is a cross-sectional view of mechanical features for coupling a build plate and a backbone structure in a build plate system. Specifically, Fig. 24 shows a surface 2401 defining a plurality of openings 2402 for receiving a mechanical anchor, and Fig. 25 shows the surface 2401 with an anchor 2504 docked within such an opening 2402. In certain embodiments, one or more anchors 2504 are provided on a bottom surface of a build plate, and a backbone structure includes the surface 2401 with the openings 2402 for receiving the one or more anchors 2504 of the build plate during coupling. It will be understood, however, that either or both of the build plate and the backbone structure may also or instead include one or more of an anchor 2504 or a surface 2401 with an opening 2402 for receiving an anchor 2504. Such mechanical features for coupling a build plate and a backbone structure in a build plate system may be provided in addition to, or instead of, the magnetic coupling described elsewhere herein. In operation, the build plate may be vertically lowered onto the backbone structure with the anchors 2504 (which may be on the build plate or the backbone structure) aligned with the openings 2402 of the opposing surface. The build plate may then be moved horizontally to engage arms of the anchor 2504 with flanges of the opening 2402 in a manner that secures the build plate against vertical displacement. Thus, a build plate may include an anchored plate that horizontally and slidably engages with a backbone structure. In one aspect, the backbone structure may be formed of aluminum (or other non-ferrous material(s)) and the build plate may be a plastic, flexible plate (or similar) disposed thereon.

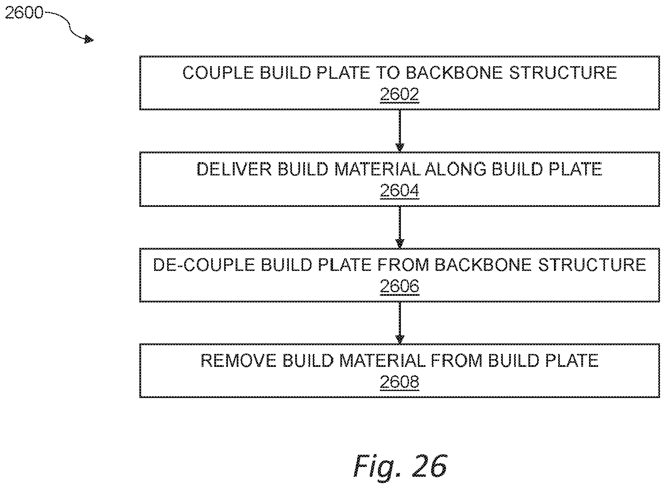

Fig. 26 is a flow chart of a method for using a build plate system of a three-dimensional printer. The method 2600 may, for example, be implemented utilizing any of the build plate systems, build plates, backbone structures, and the like described herein or any corresponding hardware for receiving a three-dimensionally printed object onto a removable and replaceable substrate. For example, the method 2600 may use a build plate including a flexible, magnetic build surface structurally configured to couple with magnets of a backbone structure of the three-dimensional printer.

As shown in step 2602, the method 2600 may include coupling a build plate to a backbone structure of a three-dimensional printer. This coupling may occur within the build volume of the three-dimensional printer. For example, the backbone structure may be disposed within the build volume of a three-dimensional printer, and the build plate may be inserted into or onto the backbone structure. The coupling of the build plate and backbone structure may use, or may be wholly accomplished via, a magnetic force between the build plate and the backbone structure. This magnetic force may be exerted in a first direction on a build section of the build plate, e.g., normal to a top surface of the build plate, where the top surface defines the build section of the build plate.

Coupling of the build plate and backbone structure may also or instead include a mechanical coupling, such as where the backbone structure defines a cutout for receiving the build plate. Additionally, or alternatively, one or more of the build plate and the backbone structure may include one or more of mechanical anchors and cooperating openings for receiving the mechanical anchors, where these or other mechanical features engage with one another to establish or promote the coupling of the build plate and backbone structure.

As shown in step 2604, the method 2600 may include delivering a build material along the build section of the build plate coupled to the backbone structure. This may include extruding a melted (or partially melted) build material onto the build plate via an extruder of a three-dimensional printer for forming a three-dimensional object on the build plate. For example, a build material may be heated to a glass transition temperature (e.g., 150° Celsius or greater), and/or the build plate itself may be heated (e.g., 40° Celsius or greater), during a three-dimensional printing operation. Thus, in certain implementations, delivering the build material along the build section of the build plate includes thermally expanding the build plate, where a force of thermal expansion of the build plate may displace the build section relative to the backbone structure. Under such heating, the coupling described above may usefully retain a surface of the build plate sufficiently level for fabrication, e.g., with vertical excursions not exceeding about 0.2 to 0.4 mm, e.g., at a temperature at or about 80° Celsius.

As shown in step 2606, the method 2600 may include decoupling the build plate from the backbone structure, e.g., after fabrication is complete, and with a printed object formed of the build material on the build section of the build plate. Decoupling the build plate from the backbone structure may be accomplished in whole or in part through a movement such as sliding the build plate relative to the backbone structure in a direction perpendicular to magnetic forces coupling the backbone structure and the build plate. For example, decoupling the build plate from the backbone structure may include moving the build plate along a ramp defined by the backbone structure as described above, e.g., with the ramp providing a predetermined incline angle and length such that a sliding motion promotes vertical movement when the build plate is moved horizontally along the backbone structure (e.g., from a pulling force on the build plate).

As shown in step 2608, the method 2600 may include removing the build material from the build section of the build plate decoupled from the backbone structure. This may include providing a torque to the build plate. For example, a user may grasp opposing ends of the build plate and apply a force such that the build plate, which may be constructed of an elastically flexible material (such as a ferromagnetic metal, e.g., spring steel), bows into a concave or convex shape thereby separating from a rigid surface of an object formed of the build material.

### Removable Extruder Cap

Specific improvements to three-dimensional printing, e.g., using a three-dimensional printer as described above with reference to Fig. 1, will now be discussed. One such improvement may include a removable extruder cap. In general, as described herein, an extruder cap may include an end cap for an extruder of a three-dimensional printer. Stated otherwise, an extruder cap may at least partially cover the hot end of an extruder of a three-dimensional printer from which a heated build material is extruded or otherwise deposited. The extruder cap of the present teachings may include a snap-on cover made of a plastic material (e.g., a type of fluoropolymer such as perfluoroalkoxy alkanes (PFA) or polyfluoroethylenepropylene). The extruder cap of the present teachings may protect a portion of the extruder from spatters, and may cover a heated portion or component of the extruder for safety. The extruder cap of the present teachings may be permanent attached to an extruder, or it may be removable from the extruder.

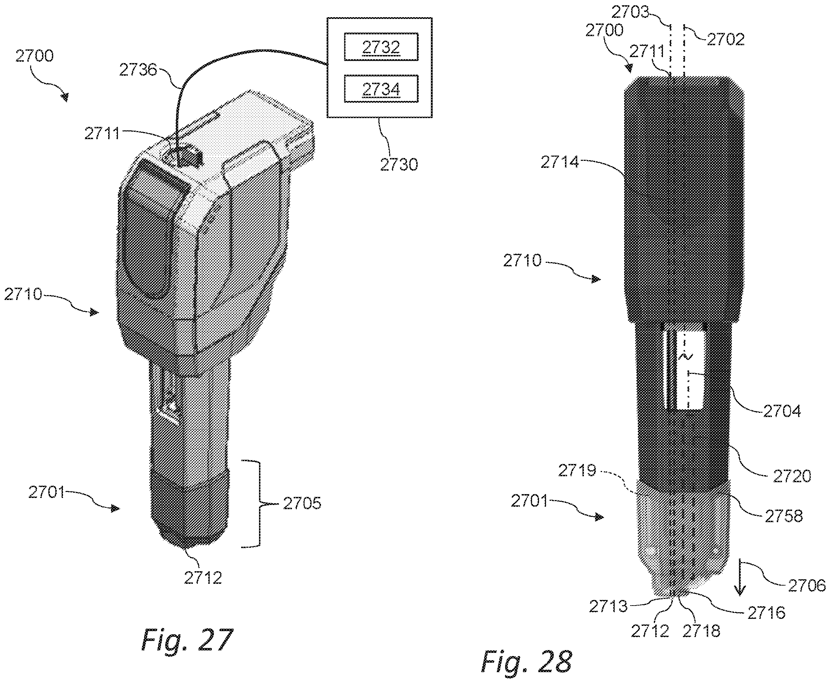

Fig. 27 shows a perspective view of an extruder with an extruder cap, and Fig. 28 shows a front view of an extruder with an extruder cap. Generally, the cap 2701 may be disposed on the hot end 2705 of the extruder 2700, i.e., the end of the extruder 2700 from which build material is extruded or otherwise deposited in a three-dimensional printing operation. The cap 2701 may serve to thermally insulate the hot end 2705 of the extruder 2700 from an external environment, e.g., such that a user contacting the hot end 2705 of the extruder 2700 encounters the cap 2701 in lieu of a portion of the extruder 2700 that is heated and thereby at a significantly higher temperature than the cap 2701. The cap 2701 may also or instead protect a portion of the extruder 2700 from contact with deposited build material during a three-dimensional printing operation. Thus, generally, the cap 2701 may serve as a surface that is disposed between one or more portions of the extruder 2700 and an external environment.

The extruder 2700 may be included on a three-dimensional printer, such as the three-dimensional printer as described above with reference to Fig. 1. The extruder 2700 may include a nozzle assembly 2710 defining a first orifice 2711, a second orifice 2712, and a chamber 2714 extending therebetween. The first orifice 2711 may define an opening that receives a build material 2736, e.g., a filament of build material 2736 in a three-dimensional printer or printing system. Thus, the first orifice 2711 may be an inlet for the extruder 2700. The second orifice 2712 may define an opening that releases build material 2736, which may be heated build material, softened build material, melted build material and/or liquefied build material, for forming an object layer-by-layer in an additive manufacturing system. Thus, the second orifice 2712 may be an outlet for the extruder 2700, and may be included on or in a nozzle 2713 or the like.

The chamber 2714 may include a portion of the extruder 2700 in which the build material 2736 is heated for extrusion through the second orifice 2712. Thus, the chamber 2714 may include, or be disposed in thermal communication with, a heater 2720. The chamber 2714, a portion thereof, or a portion adjacent to the chamber 2714 may be formed of a first material 2716, or otherwise include a first material 2716 along the chamber 2714. This portion of the nozzle assembly 2710 that is formed of the first material 2716 may include a nozzle 2713 defining the second orifice 2712. The nozzle 2713 may be part of the chamber 2714 or the nozzle 2713 may be otherwise coupled to the chamber 2714. In general, the first material 2716 may be selected for desirable nozzle-forming or extrusion properties such as strength, hardness, thermal conductivity, and so forth. For example, the first material 2716 may include a metal alloy such as brass or the like.

As shown in these figures, and in particular Fig. 28, the chamber 2714 (e.g., the portion of the chamber 2714 defining the nozzle 2713) may extend through the cap 2701 such that the second orifice 2712 extends beyond the cap 2701 in an axial direction 2706 away from a bottom surface 2718 of the nozzle assembly 2710, where the perimeter of this bottom surface 2718 may be wholly encapsulated by, and in contact with, the cap 2701 (i.e., an inner surface of the cap 2701). That is, contact between the inner surface of the cap 2701 and the perimeter of the nozzle assembly 2710 may circumscribe the perimeter of the nozzle assembly 2710.

The cap 2701 may be removeable and replaceable on the extruder 2700. In general, the cap 2701 may be disposed on or around an exterior surface of the extruder 2700, e.g., around or adjacent to the second orifice 2712. Specifically, the cap 2701 may be formed of an insulating polymer (e.g., an elastomer) that provides a thermal barrier between an exterior surface of the nozzle assembly 2710 (at its hot end 2705) and an ambient environment. That is, the cap 2701 may be formed of a second material such as a polymer having a second thermal conductivity that is less than a first thermal conductivity of the first material 2716 of the chamber 2714, nozzle 2713, or another portion of the nozzle assembly 2710 that is encapsulated by the cap 2701.

Similarly, the first material 2716 of the nozzle assembly 2710 may have a first linear coefficient of thermal expansion, where the second material of the cap 2701 has a second linear coefficient of thermal expansion that is greater than the first linear coefficient of thermal expansion. This may represent the state of affairs because of the materials that can used for the nozzle assembly 2710 and the cap 2701. For example, the cap 2701 may be made of a PFA material having a linear coefficient of thermal expansion of about 8 × 10⁻⁵ (1/°C) to about 12 × 10⁻⁵ (1/°C), or a polytetrafluoroethylene (PTFE) material having a linear coefficient of thermal expansion of about 7 × 10⁻⁵ (1/°C) to about 20 × 10⁻⁵ (1/°C); and the nozzle assembly 2710 may be made of a cast steel material having a linear coefficient of thermal expansion of about 12 × 10⁻⁶ (1/°C), or a magnesium material having a linear coefficient of thermal expansion of about 26 × 10⁻⁶ (1/°C). However, the cap 2701 may remain on the nozzle assembly 2710 during use of the extruder 2700 in a three-dimensional print because of thermal conductivity. That is, for a given temperature change of the nozzle assembly 2710, the cap 2701 may undergo a much smaller temperature change, and therefore, the cap 2701 may expand less than the nozzle assembly 2710 expands. Roughly speaking, the difference in the linear coefficient of thermal expansion may be one order of magnitude, but the difference in thermal conductivity may be about two to about three orders of magnitude. Further, there may exist a relatively large thermal resistance of air at the interface between the materials of the nozzle assembly 2710 and the cap 2701. This should be factored in, because heat may move through this gap to get to the cap 2701. For example, the cap 2701 may be made of a PFA having a thermal conductivity of about 2 × 10⁻³ (W/cm-°C), or a PTFE material having a thermal conductivity of about 2.5 × 10⁻³ (W/cm-°C); air at 20 degrees Celsius may have a thermal conductivity of about 2.5 × 10⁻³ (W/cm-°C), which may represent the interface between the materials of the nozzle assembly 2710 and the cap 2701; and the nozzle assembly 2710 may be made of a case steel material having a thermal conductivity of about 0.36 (W/cm-°C), or a magnesium material having a thermal conductivity of about 1 (W/cm-°C). The combination of a relatively low thermal conductivity and relatively high coefficient of thermal expansion of the cap 2701 may advantageously allow the cap 2701 to expand enough to accommodate a change in size of the nozzle assembly 2710 but not so much that the cap 2701 will fall off, all while providing thermal insulation.

Thus, the cap 2701 may be an insulating, protective component for the extruder 2700, e.g., establishing a location on the hot end 2705 of the extruder 2700 that is substantially cool to the touch. For example, the cap 2701 being "cool to the touch" in this manner may include the outer surface of the cap 2701 having a temperature between about 35 degrees Celsius and about 70 degrees Celsius during operation of the extruder 2700 (which has internal components that may be heated above 200 degrees Celsius), or shortly after operation of the extruder 2700 (i.e., within about 1-10 minutes of use). In this manner, the cap 2701 may enable the extruder 2700 to be "office friendly," meaning that users are less susceptible to burns from touching the hot end 2705 of the extruder 2700 when the cap 2701 is disposed thereon than they would otherwise be without such a cap 2701.

In certain aspects, an outside surface of the cap 2701 also or instead resists adhesion to build material extruded through the second orifice 2712 during a three-dimensional printing operation. This characteristic can be achieved by constructing the cap 2701 from, or coating the cap 2701 with, suitable materials such as a non-stick material, an ablative material, a build-material-phobic material, or the like. Other techniques such as texturing may also or instead be employed. At the same time, the cap 2701 may also usefully provide a removable and replaceable barrier to accumulations of material on the extruder 2700 so that when material does accumulate on the cap 2701, the cap 2701 may be removed and replaced by an end user without a need for tools or time consuming or complex mechanical procedures that might otherwise be required to service a nozzle assembly 2710 and related hardware.

The cap 2701 may have an inner surface and an outer surface opposite the inner surface, where the cap 2701 defines an opening extending from the inner surface to the outer surface along a narrowest radial dimension of the cap 2701. That is, the opening of the cap 2701 may be located at the portion of the cap 2701 with the smallest radius (i.e., a portion of the cap 2701 having the smallest cross-section relative to other portions of the cap 2701). The chamber 2714 of the nozzle assembly 2710 may extend through the opening of the cap 2701 such that the second orifice 2712 extends beyond the opening in an axial direction 2706 away from a perimeter of the nozzle assembly 2710 in contact with the inner surface of the cap 2701. In other words, the second orifice 2712 may extend away from the bottom surface 2718 of the nozzle assembly 2710 and through an opening of the cap 2701.

As best shown in Fig. 28, various components of the extruder 2700 may be aligned or configured such that they are offset from a center axis 2702 of the extruder 2700. And, because the cap 2701 may include a centrally-disposed first axis that is substantially aligned with the center axis 2702 of the extruder 2700, various components of the extruder 2700 may be aligned or configured such that they are offset from the centrally-disposed first axis of the cap 2701. For example, the chamber 2714 of the nozzle assembly 2710 may be offset from the center axis 2702 of the extruder 2700. Specifically, the chamber 2714 of the nozzle assembly 2710 may define a second axis 2703 extending through the second orifice 2712, where the centrally-disposed first axis of the cap 2701 is parallel to, and axially offset from, this second axis 2703 defined by the chamber 2714 of the nozzle assembly 2710. Also, or instead, an elongate heater 2720 may be supported on the nozzle assembly 2710 in thermal communication with the chamber 2714 of the nozzle assembly 2710, where the centrally-disposed first axis of the cap 2701 (which, again, may be aligned with the center axis 2702 of the extruder 2700) is between the second axis 2703 defined by the chamber 2714 and a third axis 2704 defined by the elongate heater 2720.

In certain implementations, the cap 2701 is secured (e.g., releasably secured) to the nozzle assembly 2710 via a toolless fit between the cap 2701 and the nozzle assembly 2710. For example, the cap 2701 may engage with the extruder 2700 through an interference fit, e.g., using a flexible, elastomeric material that may form at least a portion of the cap 2701. More specifically, contact between an inner surface of the cap 2701 and a perimeter of the nozzle assembly 2710 may be an interference fit, e.g., by sizing some or all of the regions of an interior of the cap 2701 to be slightly smaller than corresponding exterior surfaces of the extruder 2700 so that an elasticity of the polymer material of the cap 2701 can apply tension around the nozzle assembly 2710 and secure the cap 2701 in place. In this manner, the cap 2701 may be removable from the perimeter of the nozzle assembly 2710, e.g., via deformation of at least a portion of the cap 2701. The cap 2701 may also or instead include structural features to more securely engage the cap 2701 to the nozzle assembly 2710, such as a flange 2758 on an interior region of the cap 2701 that is configured to mate to a ridge 2719 on an exterior surface of the nozzle assembly 2710, e.g., where the flange 2758 is releasably engageable with the ridge 2719 to restrict movement of the cap 2701 (e.g., in at least the axial direction 2706).

Turning back to Fig. 27, the extruder 2700, or a system including the extruder 2700, may further include a feed system 2730 mechanically coupled to the nozzle assembly 2710 and spaced apart from the cap 2701. In certain implementations, the feed system 2730 may include a gear train 2732 and a controller 2734, where the controller 2734 is configured to actuate the gear train 2732 to move a build material 2736 into the chamber 2714 via the first orifice 2711. It will be understood that, although shown external to the extruder 2700 in the figure, the feed system 2730 may be wholly or partially disposed within a body or housing of the extruder 2700. The controller 2734 may also control the heater 2720, another heating element, and other components of the system, and may receive feedback (e.g., from rotary encoders for filament position, thermocouples for temperature, and so forth) for use in controlling operation of the system or extruder 2700.

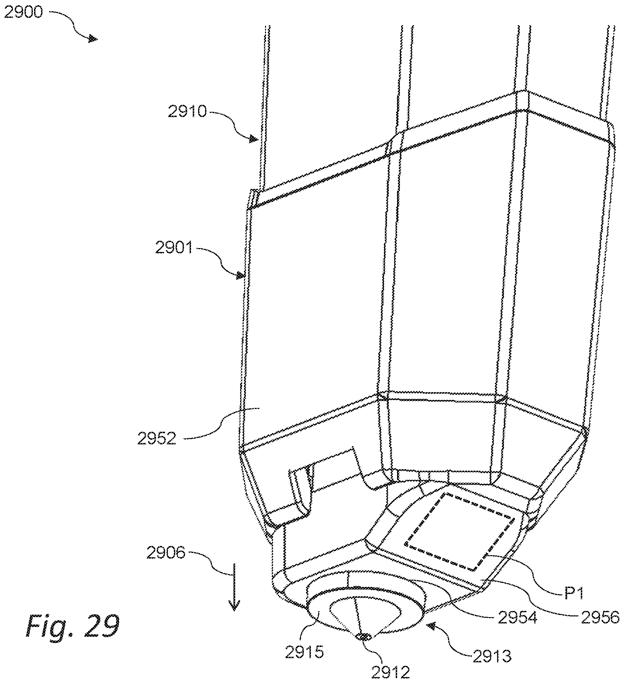

Fig. 29 shows a close-up view of the hot end of an extruder with an extruder cap. The extruder 2900 and the extruder cap 2901 may be the same as or similar to those described above with reference to Figs. 27 and 28. For example, the extruder may include a nozzle assembly 2910 defining a first orifice, a second orifice 2912, and a chamber extending therebetween, where at least a portion of the nozzle assembly 2910 is formed of a first material along the chamber. The cap 2901 may be disposed on the hot end of the extruder 2900, where the cap 2901 is structurally configured to establish a thermal barrier between the nozzle assembly 2910 and an exterior environment. To this end, the cap 2901 may be formed of a second material including an polymer having a second thermal conductivity that is less than a first thermal conductivity of the first material of the nozzle assembly 2910. The polymer may be an elastomer; and, by way of example, the elastomer may be a fluoropolymer. In certain implementations, the polymer has a melting point of greater than about 200 degrees Celsius and less than about 350 degrees Celsius, although other melting points are also or instead possible for the material of the cap 2901. For example, a high-temperature thermoplastic such as polyether ether ketone (PEEK) has a melting point well above 300 degrees Celsius, and a cap 2901 for a PEEK-compatible extruder 2900 might usefully be designed with a significantly higher melting point.

The cap 2901 may also or instead be structurally configured to protect the nozzle assembly 2910 (e.g., from build material or otherwise). For example, in certain implementations, the cap 2901 is formed of an elastomer, where the elastomer is structurally configured to resist adhesion to build material being extruded from the second orifice 2912 (e.g., build material moving from the second orifice 2912 toward a build plate during a three-dimensional printing process).

Because the cap 2901 may be formed by an elastomer, in certain implementations, the cap 2901 is removable from the perimeter of the nozzle assembly 2910 via deformation of at least a portion of the cap 2901. For example, applying a force to opposing surfaces of the cap 2901, e.g., to squeeze the sides of the cap 2901 against the nozzle assembly 2910, may deform the cap 2901 from the shape shown in the figures, thereby promoting disengagement and removal of the cap 2901 from corresponding surfaces of the nozzle assembly 2910.

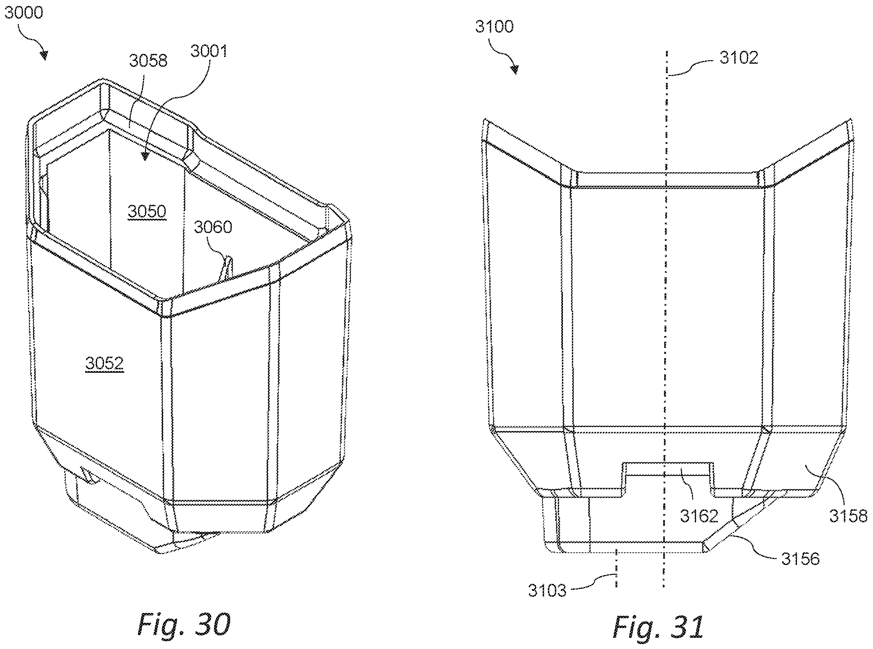

The cap 2901 may have an inner surface (see, e.g., Fig. 30 below) and an outer surface 2952 opposite the inner surface. The cap 2901 may define an opening 2954 extending from the inner surface to the outer surface 2952 along a narrowest radial dimension of the cap 2901. The chamber of the nozzle assembly 2910 may extend through the opening 2954 such that the second orifice 2912 extends beyond the opening 2954 in an axial direction 2906 away from a perimeter of the nozzle assembly 2910 in contact with the inner surface of the cap 2901.

The cap 2901 may include a tapered portion 2956 shaped and sized to encapsulate at least a portion of the perimeter of the nozzle assembly 2910. Further, and as discussed above, a nozzle 2913 may define the second orifice 2912, and at least a portion of the nozzle 2913 may define a planar surface 2915. In this manner, the tapered portion 2956 may establish at least a portion of the outer surface 2952 of the cap 2901 that defines a plane P1 that is oblique to the planar surface 2915 of the nozzle assembly 2910. These angled surfaces may facilitate removal of the cap 2901 by an application of force, e.g., by squeezing against the nozzle assembly 2910, to opposing ones of the angled surfaces of the cap 2901.

In general, it will be understood that the components described above with reference to Figs. 27-29 may be part of a system, such as the three-dimensional printing system 101 including the three-dimensional printer 100 shown and described above with reference to Fig. 1 above. Specifically, in certain implementations, a three-dimensional printer using a cap as described herein further includes a build plate (see, e.g., the build platform 102 of Fig. 1), an extruder (such as any of those described herein), and a build material (such as any of those described herein, e.g., a filament of build material).

As part of this system, and as discussed herein, the extruder may include a nozzle assembly and a cap. The nozzle assembly may define a first orifice (e.g., an inlet), a second orifice (e.g., an outlet), and a chamber extending therebetween, where at least a portion of the nozzle assembly is formed of a first material along the chamber (e.g., a metal having a relatively high thermal conductivity). The cap may be disposed between the nozzle assembly and the build plate in a direction extending from the nozzle assembly to the build plate. The cap may define an opening through which the chamber of the nozzle assembly extends and beyond which the second orifice of the nozzle assembly extends. The cap may be formed of a second material including a polymer (e.g., an elastomer).

In general, the build material may be disposed in the chamber of the nozzle assembly, and the build material may be movable from the second orifice toward the build plate during a three-dimensional printing operation. The build material may have a first melt temperature that is less than a second melt temperature of the second material of the cap. As discussed here, the cap may be structurally configured to protect the extruder from damage or other issues (e.g., printing errors) that can be caused by extruded build material coming into contact with the extruder. For example, the polymer that is used to form the cap may be structurally configured to resist adhesion to the build material moving from the second orifice toward the build plate during a three-dimensional printing process.

Such a system may further include a heater, such as any of those described herein. The heater may be in thermal communication with the chamber, where the heater is controllable to a temperature between the first melt temperature of the build material and the second melt temperature of the second material of the cap. In certain implementations, at least the first material of the nozzle assembly and a portion of the second material of the cap is disposed between the heater and an outer surface of the cap. For example, the heater may be in thermal communication with the outer surface of the cap with a thermal resistance such that, with the heater at the temperature between the first melt temperature of the build material and the second melt temperature of the second material of the cap, the outer surface of the cap has a temperature of greater than about 35 degrees Celsius and less than about 70 degrees Celsius. As such, the first material along the chamber of the nozzle assembly may have a first thermal conductivity and the second material of the cap may have a second thermal conductivity that is substantially less than the first thermal conductivity.

Figs. 30-34 show various views of a cap. The cap shown in Figs. 30-34 may be the same or similar to any of the caps described above, e.g., with reference to Figs. 27-29. Further, although different reference numbers are used for the cap (and its features) in Figs. 30-34, it will be generally understood that the cap shown in Figs. 30-34 may be the same embodiment of an extruder cap, although it is shown from different views in these figures for clarity and understanding.

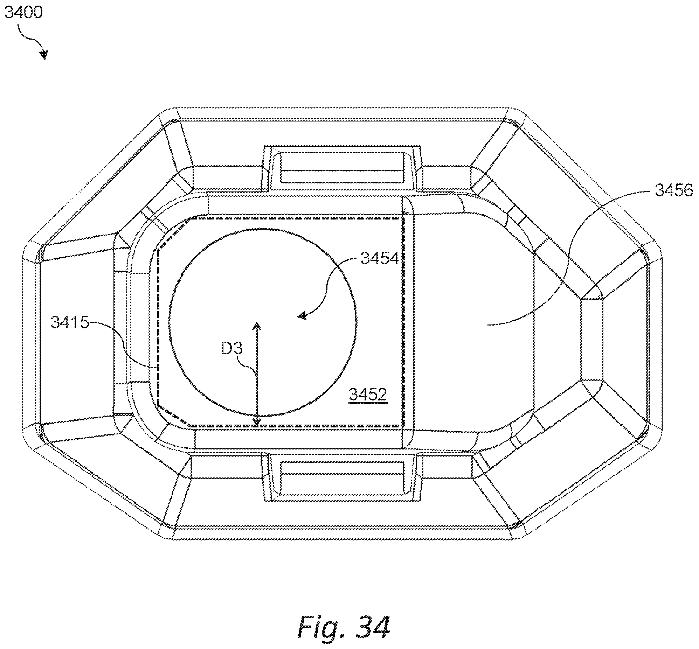

Fig. 30 is a perspective view of a cap for an extruder. As shown in Fig. 30, the cap 3000 may include an inner surface 3050 and an outer surface 3052 opposite the inner surface 3050. The cap 3000 may define a cavity 3001 for receiving the hot end of an extruder, such as any of the extruders described herein. In this manner, the inner surface 3050 of the cap 3000 may define a cavity 3001 in fluid communication with the opening of the cap 3000 (see Fig. 34 for a view of an opening 3454). Fig. 30 also clearly shows a flange 3058 that may be included on the cap 3000. The flange 3058 may be sized and shaped, or otherwise structurally configured, for engagement with a ridge included on an extruder. Also, or instead, the cap 3000 may include one or more other engagement features 3060 structurally configured for cooperation and engagement with corresponding engagement features included on an extruder. Such engagement features 3060 may include one or more of an aperture, a protrusion, a ridge, a lip, a flange, a rib, and so on.

Fig. 31 is a front view of a cap for an extruder. Fig. 31 shows the cap 3100 where several surfaces of interest are clearly depicted. For instance, as described herein, the cap may include one or more tapered portions. Specifically, in certain implementations, the cap 3100 includes a first tapered portion 3156 (generally defined by an inclined surface) that is sized and shaped to cooperate (on an inner surface thereof) with an end of a nozzle assembly of an extruder. Further, the cap 3100 may include a second tapered portion 3158 (generally defined by a plurality of tapered surfaces) that generally conforms to a tapered shape of an end of a nozzle assembly of an extruder.

As also shown in Fig. 31, the cap 3100 may define one or more apertures 3162. Such an aperture 3162 may act as an engagement feature, i.e., to cooperate with a corresponding structure (e.g., a protrusion) on an extruder. Also, or instead, the aperture 3162 may be structurally configured to vent a portion of the extruder-e.g., to allow heat transfer from the cavity of the cap 3100 to an external environment. The aperture 3162 may also or instead provide a gap or grasping area so that a user can squeeze the cap 3100, thereby deforming the cap 3100 for release of its engagement with an extruder.

Fig. 31 also shows how the cap 3100 may include a first axis 3102 through its center that is parallel to, and axially offset from, a second axis 3103 that traverses through the center of the opening in the cap 3100. As described above, the second axis 3103 that traverses through the center of the opening in the cap 3100 may be aligned with an axis defined by the cavity of an extruder, such that the first axis 3102 of the cap 3100 is also parallel to, and axially offset from, this axis defined by the cavity of the extruder.

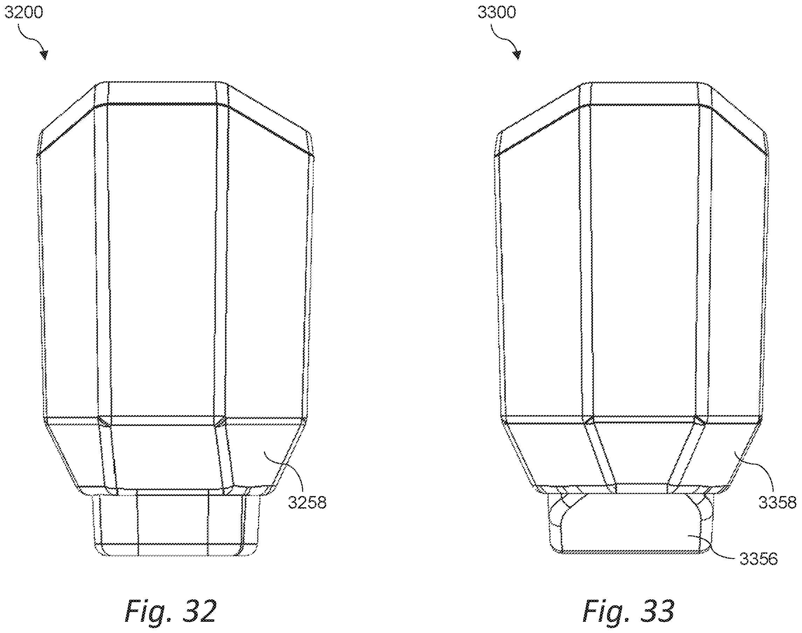

Fig. 32 is a left side view of a cap for an extruder. Fig. 32 provides another view of the second tapered portion 3258, which may be included on the cap 3200 for cooperation and engagement with the hot end of an extruder. And again, this second tapered portion 3258 may conform to the shape of a portion of the extruder.

Fig. 33 is a right side view of a cap for an extruder. Fig. 33 provides another view of the first tapered portion 3356 and the second tapered portion 3358, where each may be included on the cap 3300 for cooperation and engagement with the hot end of an extruder.

Fig. 34 is a bottom view of a cap for an extruder. The view of the cap 3400 in Fig. 34 clearly shows the opening 3454 of the cap 3400. As discussed herein, the opening 3454 may extend from the inner surface of the cap 3400 to the outer surface 3452 along a narrowest radial dimension D3 of the cap 3400, where the narrowest radial dimension D3 of the cap 3400 generally defines the portion of the cap 3400 with the smallest radius or smallest cross-section. In general, the opening 3454 may be sized and shaped such that a portion of a nozzle assembly (e.g., a nozzle) may extend through and beyond the opening 3454 for extruding build material in a three-dimensional printing operation. More specifically, a portion of a nozzle assembly may extend through the opening away from a perimeter 3415 of the nozzle assembly in contact with the inner surface of the cap 3400, where a representation of the perimeter 3415 of the nozzle assembly is shown in dashed lines for context.

As shown in the figure, the cap 3400 may include surfaces that circumscribe the perimeter 3415 of the nozzle assembly of an extruder. More particularly, contact between the inner surface of the cap 3400 and the perimeter 3415 of the nozzle assembly may circumscribe the perimeter 3415 of the nozzle assembly. Further, and as described herein, the cap 3400 may include one or more tapered portions (e.g., the first tapered portion 3456) that engage and cooperate with corresponding surfaces included on an extruder. More particularly, the inner surface of the cap 3400 may include one or more tapered portions (e.g., the first tapered portion 3456) in contact with the perimeter 3415 of the nozzle assembly of an extruder. These or other features of the cap 3400 may facilitate an interference fit with the extruder. To this end, in certain implementations, contact between the inner surface of the cap 3400 and the perimeter 3415 of the nozzle assembly is an interference fit. The fit between the cap 3400 and the extruder may also or instead include a snap-fit or the like. The cap 3400 may also or instead include a retaining ring, clip, or other feature to mechanically retain the cap 3400 in engagement with the nozzle assembly.

The above systems, devices, methods, processes, and the like may be realized in hardware, software, or any combination of these suitable for a particular application. The hardware may include a general-purpose computer and/or dedicated computing device. This includes realization in one or more microprocessors, microcontrollers, embedded microcontrollers, programmable digital signal processors or other programmable devices or processing circuitry, along with internal and/or external memory. This may also, or instead, include one or more application specific integrated circuits, programmable gate arrays, programmable array logic components, or any other device or devices that may be configured to process electronic signals. It will further be appreciated that a realization of the processes or devices described above may include computer-executable code created using a structured programming language such as C, an object oriented programming language such as C++, or any other high-level or low-level programming language (including assembly languages, hardware description languages, and database programming languages and technologies) that may be stored, compiled or interpreted to run on one of the above devices, as well as heterogeneous combinations of processors, processor architectures, or combinations of different hardware and software. In another aspect, the methods may be embodied in systems that perform the steps thereof, and may be distributed across devices in a number of ways. At the same time, processing may be distributed across devices such as the various systems described above, or all of the functionality may be integrated into a dedicated, standalone device or other hardware. In another aspect, means for performing the steps associated with the processes described above may include any of the hardware and/or software described above. All such permutations and combinations are intended to fall within the scope of the present disclosure.

Embodiments disclosed herein may include computer program products comprising computer-executable code or computer-usable code that, when executing on one or more computing devices, performs any and/or all of the steps thereof. The code may be stored in a non-transitory fashion in a computer memory, which may be a memory from which the program executes (such as random-access memory associated with a processor), or a storage device such as a disk drive, flash memory or any other optical, electromagnetic, magnetic, infrared or other device or combination of devices. In another aspect, any of the systems and methods described above may be embodied in any suitable transmission or propagation medium carrying computer-executable code and/or any inputs or outputs from same.

The method steps of the implementations described herein are intended to include any suitable method of causing such method steps to be performed, consistent with the patentability of the following claims, unless a different meaning is expressly provided or otherwise clear from the context. So, for example, performing the step of X includes any suitable method for causing another party such as a remote user, a remote processing resource (e.g., a server or cloud computer) or a machine to perform the step of X. Similarly, performing steps X, Y and Z may include any method of directing or controlling any combination of such other individuals or resources to perform steps X, Y and Z to obtain the benefit of such steps. Thus, method steps of the implementations described herein are intended to include any suitable method of causing one or more other parties or entities to perform the steps, consistent with the patentability of the following claims, unless a different meaning is expressly provided or otherwise clear from the context. Such parties or entities need not be under the direction or control of any other party or entity, and need not be located within a particular jurisdiction.

It will be appreciated that the methods and systems described above are set forth by way of example and not of limitation. Numerous variations, additions, omissions, and other modifications will be apparent to one of ordinary skill in the art. In addition, the order or presentation of method steps in the description and drawings above is not intended to require this order of performing the recited steps unless a particular order is expressly required or otherwise clear from the context. Thus, while particular embodiments have been shown and described, it will be apparent to those skilled in the art that various changes and modifications in form and details may be made therein without departing from the spirit and scope of this disclosure and are intended to form a part of the invention as defined by the following claims, which are to be interpreted in the broadest sense allowable by law.

### NUMBERED STATEMENTS OF INVENTION

1. An extruder assembly, comprising:
   a first extruder including a first follower, the first extruder defining a first extrusion path, and at least one portion of the first extrusion path defining a z-axis;
   a cam having a working surface movable relative to the first extruder and shaped to translate a first movement of the cam along an x-axis or a y-axis into a second movement of the first follower along the z-axis, the first follower movable along the working surface of the cam as the working surface moves relative to the first extruder to raise the first follower along the z-axis;
   a support engageable with the cam to reverse the first movement of the cam and lower the working surface adjacent to the first follower along the z-axis; and
   a damper coupled to the support, the damper engageable with the first extruder to receive a z-axis load from the first extruder and decouple the first follower from the working surface of the cam as the support lowers the working surface of the cam adjacent to the first follower.
2. The extruder assembly of statement 1, wherein the working surface of the cam is movable relative to the first extruder in response to a force associated with engagement of the support with the cam.
3. The extruder assembly of statement 1, wherein the first extruder includes a second follower movable along the damper, and the z-axis load from the first extruder is receivable by the damper via the second follower.
4. The extruder assembly of statement 3, wherein the damper includes a contact surface for the second follower, the contact surface shaped to smoothly lower the first extruder into a working position along the z-axis as the first extruder moves away from the support along the x-axis or y-axis.
5. The extruder assembly of statement 3, wherein the first follower is movable along the working surface of the cam in rolling contact with the working surface of the cam, and the second follower is movable along the damper in rolling contact with the support.
6. The extruder assembly of statement 3, wherein the first follower and the second follower are spaced apart from one another at least along the z-axis.
7. The extruder assembly of statement 1, further comprising a gantry and a carriage, wherein the gantry has a guide surface defining an axis perpendicular to the z-axis, the first extruder is supported on the carriage, and the carriage is movable along the guide surface of the gantry in at least one direction along the axis perpendicular to the z-axis.
8. The extruder assembly of statement 7, wherein at least one of the damper or the support is in a fixed location along the axis perpendicular to the z-axis.
9. The extruder assembly of statement 7, further comprising a second extruder supported on the carriage, wherein the second extruder defines a second extrusion path, and movement of the first follower along the working surface of the cam changes a z-axis position of the first extruder.
10. The extruder assembly of statement 7, wherein the working surface of the cam is movable relative to the first extruder along the axis perpendicular to the z-axis.
11. The extruder assembly of statement 7, wherein the damper includes an arm cantilevered from the support along the axis perpendicular to the z-axis.
12. The extruder assembly of statement 11, wherein the cam is a linear cam, and the working surface of the cam has a first two-dimensional profile in a plane defined by the z-axis and the axis perpendicular to the z-axis.
13. The extruder assembly of statement 12, wherein the arm has a second two-dimensional profile in the plane defined by the z-axis and the axis perpendicular to the z-axis, the first extruder includes a second follower, and the arm is engageable with the second follower to move the second follower along the second two-dimensional profile of the arm as the z-axis load of the first extruder is supported on the arm.
14. The extruder assembly of statement 13, wherein the first two-dimensional profile of the working surface of the cam is different from the second two-dimensional profile of the arm.
15. A three-dimensional printer, comprising:
   a build plate having a substantially planar surface;
   a plurality of extruders, each of the plurality of extruders defining a respective extrusion orifice directed toward the build plate, and each extrusion orifice supported above the build plate at a respective height along a z-axis perpendicular to the substantially planar surface;
   a cam having a working surface engageable with a first extruder of the plurality of extruders, the working surface of the cam moveable relative to the first extruder to change a z-axis position of the first extruder relative to at least one other one of the plurality of extruders;
   a support engageable with the cam to move the cam in a manner that lowers the working surface supporting the first extruder; and
   a damper coupled to the support, the damper engageable with the first extruder to receive a z-axis load from the extruder thereby decoupling the first extruder from the cam as the contact with the support lowers the working surface.
16. The three-dimensional printer of statement 15, wherein the plurality of extruders and the cam are movable together in a first direction parallel to the substantially planar surface of the build plate, the support is selectively engageable with the cam to move the cam relative to the plurality of extruders in a second direction, opposite the first direction, and a movement of the cam relative to the first extruder in the second direction decouples the first extruder from the cam.
17. The three-dimensional printer of statement 15, wherein the damper includes an arm cantilevered from the support in a direction parallel to the substantially planar surface of the build plate.
18. The three-dimensional printer of statement 17, wherein the arm includes an inclined surface extending obliquely to the substantially planar surface, the inclined surface positioned to make an initial contact with the first extruder as the damper engages the first extruder, and wherein the z-axis load of the first extruder is received by the arm as the first extruder moves toward the support and away from the build plate along the inclined surface.
19. The three-dimensional printer of statement 18, wherein the inclined surface includes a first surface angled to receive a load from the first extruder as the plurality of extruders move toward the support and a second surface angled to smoothly and continuously lower the first extruder into a working position as the plurality of extruders move away from the support.
20. A method comprising:
   moving a plurality of extruders within a plane parallel to a substantially planar surface of a build plate, each of the plurality of extruders defining a respective extrusion orifice supported above the build plate at a respective height above the substantially planar surface;
   moving a working surface of a cam relative to a first extruder of the plurality of extruders, movement of the working surface changing a z-axis position of the first extruder relative to the build plate; and
   engaging a damper with the first extruder to receive a z-axis load from the first extruder.
21. The method of statement 20, wherein the plurality of extruders and the cam move together in a first direction, the method further comprising engaging a support with the cam to move the cam in a second direction, opposite the first direction, to provide movement of the working surface.
22. An extruder assembly, comprising:
   a first extruder defining a first extrusion path, at least one portion of the first extrusion path defining a z-axis, the first extruder including a working surface shaped to translate a horizontal movement along the working surface into a vertical movement of the first extruder;
   a cam having a first follower horizontally movable relative to the first extruder and positioned to travel along the working surface, the first follower movable along the working surface of the first extruder as the first follower moves in a first direction relative to the first extruder to lower the working surface along the z-axis;
   a support engageable with the cam to move the cam in a second direction opposing the first direction to raise the working surface along the z-axis; and
   a damper engageable with the first extruder to receive a z-axis load from the first extruder and to decouple the first follower from the working surface as the support lowers the working surface beneath first follower in response to a movement in the first direction.
23. An extruder assembly, comprising:
   a first extruder;
   a second extruder movably coupled to the first extruder to permit vertical movement of the second extruder relative to the first extruder; and
   a coupler structurally configured to mechanically control a z-axis position of the second extruder relative to the first extruder, the coupler including a horizontal slider structurally configured to cause upward movement of the second extruder in response to a first horizontal movement in a first direction and to permit downward movement of the second extruder in response to a second horizontal movement in a second direction opposing the first direction.
24. The extruder assembly of statement 23, wherein the coupler extends horizontally from the extruder assembly to expose a first end and a second end that provide control surfaces to move the coupler horizontally in the first direction and the second direction respectively.
25. The extruder assembly of statement 23, further comprising a support in a predetermined position within a three-dimensional printer, the support including a first surface and a second surface, the first surface shaped to receive and vertically support the second extruder as the extruder assembly horizontally contacts the support, and the second surface shaped to concurrently move the coupler in the second direction as the extruder assembly horizontally contacts the support.
26. The extruder assembly of statement 25, wherein the coupler or the second extruder includes a working surface with a ramp shaped to gradually raise and lower the second extruder between an active position with an exit orifice below a lowest point of the first extruder and an inactive position with the exit orifice above the lowest point of the first extruder.
27. The extruder assembly of statement 26, wherein the working surface includes a plateau above the ramp to support the second extruder in the inactive position and a ridge, the ridge having a height greater than the plateau and the ridge positioned between the plateau and the ramp to bi-stably retain the second extruder in the inactive position when the extruder assembly is not engaged with the damper.
28. An extruder for a three-dimensional printer, the extruder comprising:
   a nozzle assembly defining a first orifice, a second orifice, and a chamber fluidically coupling the first orifice to the second orifice;
   a heating element positioned to heat the chamber;
   a first fluid source directed toward the first orifice to form a thermal break mitigating an upward heat flow from the chamber toward the first orifice; and
   a manifold structurally configured to direct a flow of fluid about the second orifice, the manifold defining a plurality of exit holes for the flow of fluid, the plurality of exit holes positioned and oriented to direct the flow of fluid in an omnidirectional fluid flow away from a perimeter of the second orifice to cool a region around the perimeter of the second orifice.
29. The extruder of statement 28, wherein the flow of fluid is provided by the first fluid source.
30. The extruder of statement 28, wherein the flow of fluid is provided by a second fluid source independent from the first fluid source.
31. The extruder of statement 28, wherein exit holes of the plurality of exit holes are spaced equidistant from one another about a perimeter of the nozzle assembly.
32. The extruder of statement 28, wherein the heating element is configured to heat the chamber to maintain a build material in the chamber at a target temperature above a liquefaction temperature of the build material, wherein the first fluid source moves fluid toward the first orifice at a first temperature below the target temperature of the build material in the chamber, and wherein the flow of fluid about the second orifice is provided at a second temperature below the target temperature of the build material.
33. An extruder for a three-dimensional printer, the extruder comprising:
   a nozzle assembly defining a first orifice, a second orifice, and a chamber extending from the first orifice to the second orifice, the chamber defining a longitudinal axis extending through the first orifice and the second orifice;
   a conduit coupled to the nozzle assembly, the conduit defining a third orifice directed toward the first orifice to form a thermal break mitigating heat flow from the chamber toward the first orifice; and
   a manifold coupled to the nozzle assembly, the manifold defining a plurality of exit holes, each exit hole of the plurality of exit holes disposed at a position along the longitudinal axis between the first orifice and the second orifice, and each exit hole of the plurality of exit holes oriented to direct a fluid in a direction away from the second orifice to cool a region around a perimeter of the second orifice.
34. The extruder of statement 33, wherein the manifold is fluidically isolated from the chamber defined by the nozzle assembly.
35. The extruder of statement 34, wherein the manifold is in fluid communication with the conduit such that a fluid is deliverable through the plurality of exit holes of the manifold and the third orifice of the conduit via a single fluid source.
36. The extruder of statement 33, wherein the manifold includes an annulus coaxial with the longitudinal axis defined by the chamber to produce an omnidirectional fluid flow about the perimeter of the second orifice.
37. The extruder of statement 33, wherein the exit holes corresponding to the plurality of exit holes are spaced equidistant from one another about a perimeter of a surface of the nozzle assembly.
38. The extruder of statement 33, wherein the longitudinal axis defined by the chamber of the nozzle assembly intersects a transverse axis defined by the conduit at the first orifice.
39. The extruder of statement 33, wherein, in a direction along the longitudinal axis, a surface of the nozzle assembly is tapered between the position of the plurality of exit holes and the second orifice.
40. The extruder of statement 33, further comprising a heating element coupled to the nozzle assembly, the heating element in thermal communication with the chamber via thermal conduction through the nozzle assembly.
41. The extruder of statement 40, wherein a first thermal conductivity between the heating element and the chamber is less than a second thermal conductivity between the heating element and the plurality of exit holes defined by the manifold.
42. A method of thermal management of an extruder of a three-dimensional printer, the method comprising:
   heating a chamber defined by a nozzle assembly of the extruder, the chamber extending from a first orifice to a second orifice;
   moving a first fluid across the first orifice; and
   moving a second fluid to produce an omnidirectional fluid flow away from the second orifice to cool a region around a perimeter of the second orifice.
43. The method of statement 42, wherein heating the chamber includes maintaining a build material in the chamber at a target temperature above a liquefaction temperature of the build material, wherein the first fluid moves across the first orifice at a first temperature below the target temperature of the build material in the chamber, and wherein the second fluid moves about the perimeter of the second orifice at a second temperature below the target temperature of the build material.
44. The method of statement 43, wherein moving the first fluid across the first orifice includes adjusting a volumetric flow rate of the first fluid across the first orifice based on a temperature of the nozzle assembly.
45. The method of statement 43, wherein moving the second fluid includes adjusting a volumetric flow rate of the second fluid based on movement of the extruder.
46. The method of statement 43, wherein moving the second fluid includes directing multiple streams of the second fluid about the perimeter of the second orifice.
47. The method of statement 43, wherein movement of the first fluid across the first orifice is independently controllable relative to movement of the second fluid about the perimeter of the second orifice.
48. A build plate for a three-dimensional printer, the build plate comprising:
   a sheet of an elastically flexible material including a ferromagnetic metal;
   a frame around at least a portion of a perimeter of the sheet, the frame formed of an elastomeric material that elastically flexes with the sheet, the elastomeric material having a low thermal conductivity relative to the sheet and the elastomeric material positioned to insulate an exposed surface of the frame from a temperature of the sheet; and
   one or more tabs of the elastomeric material extending from the frame to provide gripping surfaces for removal of the build plate from the three-dimensional printer.
49. The build plate of statement 48, wherein the frame defines a recess graspable by fingertips of a user.
50. The build plate of statement 48, wherein the frame is disposed over the entire perimeter of the sheet.
51. The build plate of statement 48, wherein each of the one or more tabs has a first surface roughness, and the frame has a second surface roughness less than the first surface roughness.
52. The build plate of statement 48, further comprising a polycarbonate layer disposed over at least one surface of a build section of the sheet.
53. The build plate of statement 48, wherein the ferromagnetic metal includes spring steel.
54. The build plate of statement 48, wherein the elastically flexible material of the sheet has a first thermal conductivity and the elastomeric material of the frame has a second thermal conductivity, wherein the first thermal conductivity is greater than the second conductivity at room temperature.
55. A build plate for a three-dimensional printer, the build plate comprising:
   a sheet having a build section that is substantially planar in the absence of an external force, the sheet formed of a first material along the build section, the first material including a ferromagnetic component, and the first material having a first thermal conductivity;
   a frame along at least a portion of a perimeter region of the sheet, the frame at least as flexible as the sheet, and the frame including a second material having a second thermal conductivity less than the first thermal conductivity of the first material; and
   one or more tabs coupled to the frame, each tab thermally insulated from the first material of the sheet by at least the second material of the frame, and each tab graspable by a user to move the build plate.
56. The build plate of statement 55, wherein, in response to torque about any axis extending through the sheet and the frame at room temperature, the sheet has a first torsional stiffness, and the frame has a second torsional stiffness less than or equal to the first torsional stiffness of the sheet.
57. The build plate of statement 55, wherein the second material of the frame includes an elastomeric material.
58. The build plate of statement 57, wherein the second material includes a thermoplastic elastomer.
59. A build plate system of a three-dimensional printer, the build plate system comprising:
   a build plate including a sheet having a build section, the sheet formed of a material including a ferromagnetic component along the build section; and
   a backbone structure including a body and a plurality of magnets supported by the body, the build plate coupled to the backbone structure via a magnetic force of the plurality of magnets exerted in a first direction on the ferromagnetic component along the build section of the sheet, and the sheet of the build plate slidable relative to the body in a second direction perpendicular to the first direction of the magnetic force.
60. The build plate system of statement 59, wherein the sheet of the build plate is slidable relative to the body in the second direction under force of thermal expansion of the sheet of the build plate.
61. The build plate system of statement 59, wherein the body of the backbone structure includes a substantially planar surface, and the sheet of the build plate is slidable relative to the body, in the second direction, along the substantially planar surface.
62. The build plate system of statement 61, further comprising a ramp on the substantially planar surface and extending in a direction away from the substantially planar surface, the ramp oriented to separate a region of the build plate from the backbone structure as the build plate is moved in the direction away from the substantially planar surface.
63. The build plate system of statement 59, wherein the build section of the sheet of the build plate coupled to the backbone structure via the magnetic force has a flatness of greater than about 0.2 mm and less than about 0.4 mm from planar at a temperature of about 80° Celsius.
64. A method comprising:
   coupling a build plate to a backbone structure via a magnetic force between the build plate and the backbone structure, the magnetic force exerted in a first direction on a build section of the build plate;
   delivering a build material along the build section of the build plate coupled to the backbone structure;
   with the build material along the build section of the build plate, decoupling the build plate from the backbone structure through movement including sliding the build plate relative to the backbone structure in a second direction perpendicular to the first direction of the magnetic force; and
   removing the build material from the build section of the build plate decoupled from the backbone structure.
65. The method of statement 64, wherein delivering the build material along the build section of the build plate includes thermally expanding the build plate, and a force of thermal expansion of the build plate moving the build section relative to the backbone structure in the second direction perpendicular to the first direction of the magnetic force with the build plate coupled to the backbone structure.
66. The method of statement 65, wherein, under the force of thermal expansion of the build plate moving the build section relative to the backbone structure, the build section of the build plate retaining a flatness of greater than about 0.2 mm and less than about 0.4 mm at a temperature of about 80° Celsius.
67. The method of statement 64, wherein decoupling the build plate from the backbone structure includes moving the build plate along a ramp defined by the backbone structure, the ramp having a first dimensional component in the first direction and a second dimensional component in the second direction.
68. An extruder for a three-dimensional printer, the extruder comprising:
   a nozzle assembly defining a first orifice, a second orifice, and a chamber extending therebetween, at least a portion of the nozzle assembly formed of a first material along the chamber; and
   a cap having an inner surface and an outer surface opposite the inner surface, the cap defining an opening extending from the inner surface to the outer surface along a narrowest radial dimension of the cap, the chamber of the nozzle assembly extending through the opening such that the second orifice extends beyond the opening in an axial direction away from a perimeter of the nozzle assembly in contact with the inner surface of the cap, and the cap formed of a second material including a polymer having a second thermal conductivity less than a first thermal conductivity of the first material.
69. The extruder of statement 68, wherein the first material of the nozzle assembly has a first linear coefficient of thermal expansion, and the second material has a second linear coefficient of thermal expansion greater than the first linear coefficient of thermal expansion.
70. The extruder of statement 68, wherein the inner surface of the cap defines a cavity in fluid communication with the opening, the cavity defining a first axis parallel to and axially offset from a second axis defined by the chamber of the nozzle assembly and extending through the second orifice.
71. The extruder of statement 70, further comprising an elongate heater supported on the nozzle assembly and in thermal communication with the chamber of the nozzle assembly, wherein the first axis defined by the cavity is between the second axis defined by the chamber and a third axis defined by the elongate heater.
72. The extruder of statement 68, wherein the contact between the inner surface and the perimeter of the nozzle assembly circumscribes the perimeter of the nozzle assembly.
73. The extruder of statement 68, wherein the inner surface of the cap includes a tapered portion in contact with the perimeter of the nozzle assembly.
74. The extruder of statement 68, wherein the second orifice is defined by a planar surface of the nozzle assembly, and at least a portion of the outer surface of the cap defines a plane oblique to the planar surface of the nozzle assembly.
75. The extruder of statement 68, wherein the contact between the inner surface of the cap and the perimeter of the nozzle assembly is an interference fit.
76. The extruder of statement 75, wherein the cap is removable from the perimeter of the nozzle assembly via deformation of at least a portion of the cap.
77. The extruder of statement 76, wherein the cap includes a flange, the nozzle assembly defines a ridge, and the flange is releasably engageable with the ridge to restrict movement of the cap in at least the axial direction.
78. The extruder of statement 68, wherein the polymer is an elastomer.
79. The extruder of statement 78, wherein the elastomer is a fluoropolymer.
80. The extruder of statement 68, wherein the polymer has a melting point of greater than about 200 degrees Celsius and less than about 350 degrees Celsius.
81. The extruder of statement 68, further comprising a feed system mechanically coupled to the nozzle assembly and spaced apart from the cap, the feed system including a gear train and a controller, the controller configured to actuate the gear train to move a build material into the chamber via the first orifice.
82. A three-dimensional printer comprising:
   a build plate;
   an extruder including a nozzle assembly and a cap, the nozzle assembly defining a first orifice, a second orifice, and a chamber extending therebetween, at least a portion of the nozzle assembly formed of a first material along the chamber, the cap disposed between the nozzle assembly and the build plate in a direction extending from the nozzle assembly to the build plate, the cap defining an opening through which the chamber of the nozzle assembly extends and beyond which the second orifice of the nozzle assembly extends, the cap formed of a second material including an polymer; and
   a build material in the chamber of the nozzle assembly and movable from the second orifice toward the build plate, the build material having a first melt temperature less than a second melt temperature of the second material of the cap.
83. The three-dimensional printer of statement 82, further comprising a heater in thermal communication with the chamber, the heater controllable to a temperature between the first melt temperature of the build material and the second melt temperature of the second material of the cap.
84. The three-dimensional printer of statement 83, wherein at least the first material of the nozzle assembly and a portion of the second material of the cap is between the heater and an outer surface of the cap.
85. The three-dimensional printer of statement 84, wherein the heater is in thermal communication with the outer surface of the cap with a thermal resistance such that, with the heater at the temperature between the first melt temperature of the build material and the second melt temperature of the second material of the cap, the outer surface of the cap has a temperature of greater than about 35 degrees Celsius and less than about 70 degrees Celsius.
86. The three-dimensional printer of statement 82, wherein the first material along the chamber of the nozzle assembly has a first thermal conductivity and the second material of the cap has a second thermal conductivity less than the first thermal conductivity.
87. The three-dimensional printer of statement 82, wherein the polymer is structurally configured to resist adhesion to the build material moving from the second orifice toward the build plate during a three-dimensional printing process.
88. The three-dimensional printer of statement 82, wherein the cap is releasably secured to the nozzle assembly via a toolless fit between the cap and the nozzle assembly.

## Claims

1. A build plate for a three-dimensional printer, the build plate comprising:
a sheet of an elastically flexible material including a ferromagnetic metal;
a frame around at least a portion of a perimeter of the sheet, the frame formed of an elastomeric material that elastically flexes with the sheet, the elastomeric material having a low thermal conductivity relative to the sheet, and the elastomeric material positioned to insulate an exposed surface of the frame from a temperature of the sheet; and
one or more tabs of the elastomeric material extending from the frame to provide gripping surfaces for removal of the build plate from the three-dimensional printer.

2. The build plate of claim 1, wherein the frame defines a recess graspable by fingertips of a user.

3. The build plate of any preceding claim, wherein the frame is disposed over the entire perimeter of the sheet.

4. The build plate of any preceding claim, wherein each of the one or more tabs has a first surface roughness, and the frame has a second surface roughness less than the first surface roughness.

5. The build plate of any preceding claim, further comprising a polycarbonate layer disposed over at least one surface of a build section of the sheet.

6. The build plate of any preceding claim, wherein the ferromagnetic metal includes spring steel.

7. The build plate of any preceding claim, wherein the elastically flexible material of the sheet has a first thermal conductivity and the elastomeric material of the frame has a second thermal conductivity, wherein the first thermal conductivity is greater than the second conductivity at room temperature.

8. The build plate of any preceding claim, wherein the sheet includes a build section that is substantially planar in the absence of an external force.

9. The build plate of any preceding claim, wherein the build plate is deformable into a flexed state with a concave top surface to facilitate removal of a printed object therefrom.

10. The build plate of any preceding claim, further comprising a ramped portion on the build plate.

11. The build plate of claim 10, wherein the ramped portion is structurally configured to cooperate with a corresponding ramp defined by a backbone structure in a build volume of the three-dimensional printer to displace the build plate in a z-axis direction away from the backbone structure in response to a movement of the build plate within a plane of the sheet.

12. The build plate of claim 11, wherein the ramped portion is structurally configured to facilitate removal of the build plate from the backbone structure by opposing a magnetic force coupling the build plate to the backbone structure.

13. The build plate of any preceding claim, wherein the elastomeric material is a thermoplastic elastomer (TPE).

14. The build plate of any preceding claim, wherein the elastomeric material is overmolded onto at least the portion of the perimeter of the sheet.

15. The build plate of any preceding claim, wherein the sheet has a first torsional stiffness, and the frame has a second torsional stiffness less than or equal to the first torsional stiffness of the sheet.
